(19) Europäisches Patentamt / European Patent Office / Office européen des brevets

(11) **EP 4 708 861 A1**

(12) **EUROPEAN PATENT APPLICATION**
published in accordance with Art. 153(4) EPC

(43) Date of publication:
**11.03.2026 Bulletin 2026/11**

(21) Application number: **24797500.6**

(22) Date of filing: **29.04.2024**

(51) International Patent Classification (IPC):
*H04N 19/593* (2014.01)    *H04N 19/186* (2014.01)
*H04N 19/132* (2014.01)    *H04N 19/176* (2014.01)
*H04N 19/105* (2014.01)    *H04N 19/157* (2014.01)
*H04N 19/70* (2014.01)     *H04N 19/117* (2014.01)
*H04N 19/124* (2014.01)    *H04N 19/159* (2014.01)

(52) Cooperative Patent Classification (CPC):
**H04N 19/105; H04N 19/117; H04N 19/124;
H04N 19/132; H04N 19/157; H04N 19/159;
H04N 19/176; H04N 19/186; H04N 19/593;
H04N 19/70**

(86) International application number:
**PCT/KR2024/005806**

(87) International publication number:
**WO 2024/225846 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.04.2023 KR 20230055863
13.06.2023 KR 20230075850
21.07.2023 KR 20230095527
13.10.2023 KR 20230137206**

(71) Applicant: **Wilus Institute of Standards and
Technology Inc.
Gyeonggi-do 13595 (KR)**

(72) Inventors:
• **KIM, Kyungyong**
 **Seongnam-si Gyeonggi-do 13595 (KR)**
• **KIM, Dongcheol**
 **Seongnam-si Gyeonggi-do 13595 (KR)**
• **SON, Juhyung**
 **Seongnam-si Gyeonggi-do 13595 (KR)**
• **KWAK, Jinsam**
 **Seongnam-si Gyeonggi-do 13595 (KR)**

(74) Representative: **Schmitt-Nilson Schraud Waibel
Wohlfrom
Patentanwälte Partnerschaft mbB
Pelkovenstraße 143
80992 München (DE)**

(54) **VIDEO SIGNAL PROCESSING METHOD, AND DEVICE THEREFOR**

(57) The video signal decoding device may comprise a processor, wherein the processor configures a cross-component prediction (CCP) list for deriving a chroma component block of a current block from a luma component block of the current block, selects one CCP model candidate in the CCP list, and derives the chroma component block of the current block on the basis of the one CCP model candidate.

[Fig 41]

```
Configure cross-component prediction (CCP) list for     — S4110
deriving chroma component block of current block
from luma component block of current block

            ↓

Select one CCP model candidate in CCP list              — S4120

            ↓

Derive chroma component block of current block          — S4130
based on one CCP model candidate
```

EP 4 708 861 A1

## Description

### Technical Field

The present disclosure relates to a video signal processing method and device and, more specifically, to a video signal processing method and device by which a video signal is encoded or decoded.

### Background Art

Compression coding refers to a series of signal processing techniques for transmitting digitized information through a communication line or storing information in a form suitable for a storage medium. An object of compression encoding includes objects such as voice, video, and text, and in particular, a technique for performing compression encoding on an image is referred to as video compression. Compression coding for a video signal is performed by removing excess information in consideration of spatial correlation, temporal correlation, and stochastic correlation. However, with the recent development of various media and data transmission media, a more efficient video signal processing method and apparatus are required.

### Disclosure of Invention

### Technical Problem

The purpose of the present disclosure is to provide a video signal processing method and a device therefor, so as to increase the coding efficiency of a video signal.

### Solution to Problem

The disclosure provides a video signal processing method and a device therefor.

In the disclosure, a video signal decoding device may include a processor, and the processor may configure a cross-component prediction (CCP) list for deriving a chroma component block of a current block from a luma component block of the current block, may select one CCP model candidate from the CCP list, and may derive a chroma component block of the current block based on the one CCP model candidate. The processor may reorder the CCP merge list based on a cost.

According to the disclosure, a video signal encoding device may include a processor, and the processor may obtain a bitstream decoded according a decoding method. In addition, according to the disclosure, a computer-readable non-transitory storage medium may store a bitstream decoded according to a decoding method. The decoding method may include an operation of configuring a cross-component prediction (CCP) list to derive a chroma component block of a current block from a luma component block of the current block, an operation of selecting one CCP model candidate from the CCP list, and an operation of deriving, based on the one CCP model candidate, a chroma component block of the current block. The decoding method may further include an operation of reordering the CCP merge list based on a cost.

In addition, according to the disclosure, the CCP list may include one or more CCP model candidates, and the one or more CCP model candidates may include a first CCP model candidate used by a reference block of the current block.

In addition, according to the disclosure, the one or more CCP model candidates may be obtained using at least one from among a type of CCP model derived from the first CCP model candidate, a parameter coefficient for the first CCP model, coordinate information of a neighboring block, an average value of samples configured in the neighboring block, a luma offset value of the neighboring block, encoding mode information of the neighboring block, and a quantization parameter of the neighboring block.

In addition, according to the disclosure, the one or more CCP model candidates may be predefined CCP models.

In addition, according to the disclosure, the one or more CCP model candidates may be determined based on a predefined CCP model type, and parameters for the one or more CCP model candidates may be derived via neighboring samples adjacent to the current block.

In addition, according to the disclosure, the reference block may be temporally distant from the current block.

In addition, according to the disclosure, a picture order count (POC) of a picture including the current block and a POC of a picture including the reference block may be different from each other.

The one or more CCP model candidates may include a CCP model generated by combining two or more CCP models.

In addition, according to the disclosure, the one or more CCP model candidates may be determined based on a product of a width size of the current block and the width size of the current block.

In addition, according to the disclosure, when the product of the width size of the current block and the width size of the current block is less than or equal to a first threshold value, the one or more CCP model candidates may be different from a gradient and location based convolutional cross-component model (GL-CCCM) or a CCCM with multiple down-sampling filters (CCCM-MDF).

## Advantageous Effects of Invention

The present disclosure provides a method for efficiently processing a video signal.

The effects which can be acquired from the present disclosure are not limited to the above-described effects, and other unmentioned effects can be clearly understood by those skilled in the art in the art to which the present disclosure belongs from the description below.

## Brief Description of Drawings

FIG. 1 is a schematic block diagram of a video signal encoding apparatus according to an embodiment of the present invention.
FIG. 2 is a schematic block diagram of a video signal decoding apparatus according to an embodiment of the present invention.
FIG. 3 shows an embodiment in which a coding tree unit is divided into coding units in a picture.
FIG. 4 shows an embodiment of a method for signaling a division of a quad tree and a multi-type tree.
FIGS. 5 and 6 illustrate an intra-prediction method in more detail according to an embodiment of the present disclosure.
FIG. 7 illustrates the position of neighboring blocks used to construct a motion candidate list in inter prediction.
FIG. 8 illustrates a method for performing a CCLM according to an embodiment of the present disclosure.
FIG. 9 illustrates a template used to derive a linear model according to an embodiment of the present disclosure.
FIG. 10 illustrates a method for deriving two linear models according to an embodiment of the present disclosure.
FIG. 11 illustrates a method of signaling an intra prediction directivity mode for a chroma component block according to an embodiment of the present disclosure.
FIGS. 12 and 13 illustrate a context model according to an embodiment of the present disclosure.
FIG. 14 illustrates a method for deriving an intra prediction mode of a current block by using neighboring blocks according to an embodiment of the present disclosure.
FIG. 15 illustrates a method for acquiring a chroma prediction block according to an embodiment of the present disclosure.
FIG. 16 illustrates a reference area used to generate a linear model according to an embodiment of the present disclosure.
FIGS. 17 illustrates examples of a reference area and a filter form used for deriving a CCCM parameter according to an embodiment of the disclosure.
FIG. 18 illustrates samples used for deriving a CCCM parameter according to an embodiment of the disclosure.
FIG. 19 illustrates luma samples adjacent to a luma sample of a current block according to an embodiment of the disclosure.
FIGS. 20 and 21 illustrate luma samples before being downsampled, which are to be used for deriving a chroma sample in a CCCM-ND mode according to an embodiment of the disclosure.
FIGS. 22 and 23 illustrate structural block diagrams for applying a cross-component residual model (CCRM) according to an embodiment of the disclosure.
FIGS. 24 illustrates a method of using correlation between a luma prediction block and a luma reconstruction block according to an embodiment of the disclosure.
FIG. 25 illustrates locations of samples and downsampling filters applied to a luma block according to an embodiment of the disclosure.
FIG. 26 illustrates a location of filtering and a coefficient of filtering applied to a prediction block according to an embodiment of the disclosure.
FIG. 27 illustrates filtering applied to a prediction block according to an embodiment of the disclosure.
FIG. 28 illustrates a method of determining a CCP mode based on a template cost according to an embodiment of the disclosure.
FIG. 29 illustrates neighboring blocks used for deriving a CCCM for a current chroma block according to an embodiment of the disclosure.
FIG. 30 illustrates a reference area indicated by a block vector of a current luma block according to an embodiment of the disclosure.

FIG. 31 illustrates a structural block diagram of a method of predicting a current block using a CCP merge mode according to an embodiment of the disclosure.

FIG. 32 illustrates neighboring blocks of a current block according to an embodiment of the disclosure.

FIGS. 33 and 34 illustrate co-located blocks and neighboring blocks according to an embodiment of the disclosure.

FIG. 35 graphically illustrates CCLMs according to an embodiment of the disclosure.

FIG. 36 illustrates a reference template location used for reordering a CCP merge list according to an embodiment of the disclosure.

FIG. 37 illustrates a CCP method based on a block vector according to an embodiment of the disclosure.

FIG. 38 illustrates a luma block corresponding to a chroma block according to an embodiment of the disclosure.

FIG. 39 illustrates a method of deriving a reference block using a block vector derived from a corresponding luma block according to an embodiment of the disclosure.

FIG. 40 illustrates a method of deriving a CCP model from each of a plurality of block vectors according to an embodiment of the disclosure.

FIG. 41 illustrates a method of configuring a CCP list according to an embodiment of the disclosure.

## Mode for Carrying out the Invention

Terms used in this specification may be currently widely used general terms in consideration of functions in the present invention but may vary according to the intents of those skilled in the art, customs, or the advent of new technology. Additionally, in certain cases, there may be terms the applicant selects arbitrarily and in this case, their meanings are described in a corresponding description part of the present invention. Accordingly, terms used in this specification should be interpreted based on the substantial meanings of the terms and contents over the whole specification.

In this specification, 'A and/or B' may be interpreted as meaning 'including at least one of A or B.'

In this specification, some terms may be interpreted as follows. Coding may be interpreted as encoding or decoding in some cases. In the present specification, an apparatus for generating a video signal bitstream by performing encoding (coding) of a video signal is referred to as an encoding apparatus or an encoder, and an apparatus that performs decoding (decoding) of a video signal bitstream to reconstruct a video signal is referred to as a decoding apparatus or decoder. In addition, in this specification, the video signal processing apparatus is used as a term of a concept including both an encoder and a decoder. Information is a term including all values, parameters, coefficients, elements, etc. In some cases, the meaning is interpreted differently, so the present invention is not limited thereto. 'Unit' is used as a meaning to refer to a basic unit of image processing or a specific position of a picture, and refers to an image region including both a luma component and a chroma component.

Furthermore, a "block" refers to a region of an image that includes a particular component of a luma component and chroma components (i.e., Cb and Cr). However, depending on the embodiment, the terms "unit", "block", "partition", "signal", and "region" may be used interchangeably. Also, in the present specification, the term "current block" refers to a block that is currently scheduled to be encoded, and the term "reference block" refers to a block that has already been encoded or decoded and is used as a reference in a current block. In addition, the terms "luma", "luminance", "Y", and the like may be used interchangeably in this specification. Additionally, in the present specification, the terms "chroma", "chrominance", "Cb or Cr", and the like may be used interchangeably, and chroma components are classified into two components, Cb and Cr, and thus each chroma component may be distinguished and used. Additionally, in the present specification, the term "unit" may be used as a concept that includes a coding unit, a prediction unit, and a transform unit. A "picture" refers to a field or a frame, and depending on embodiments, the terms may be used interchangeably. Specifically, when a captured video is an interlaced video, a single frame may be separated into an odd (or cardinal or top) field and an even (or even-numbered or bottom) field, and each field may be configured in one picture unit and encoded or decoded. If the captured video is a progressive video, a single frame may be configured as a picture and encoded or decoded. In addition, in the present specification, the terms "error signal", "residual signal", "residue signal", "remaining signal", and "difference signal" may be used interchangeably. Also, in the present specification, the terms "intra-prediction mode", "intra-prediction directional mode", "intra-picture prediction mode", and "intra-picture prediction directional mode" may be used interchangeably. In addition, in the present specification, the terms "motion", "movement", and the like may be used interchangeably. Also, in the present specification, the terms "left", "left above", "above", "right above", "right", "right below", "below", and "left below" may be used interchangeably with "leftmost", "top left", "top", "top right", "right", "bottom right", "bottom", and "bottom left". Also, the terms "element" and "member" may be used interchangeably. Picture order count (POC) represents temporal position information of pictures (or frames), and may be the playback order in which displaying is performed on a screen, and each picture may have unique POC.

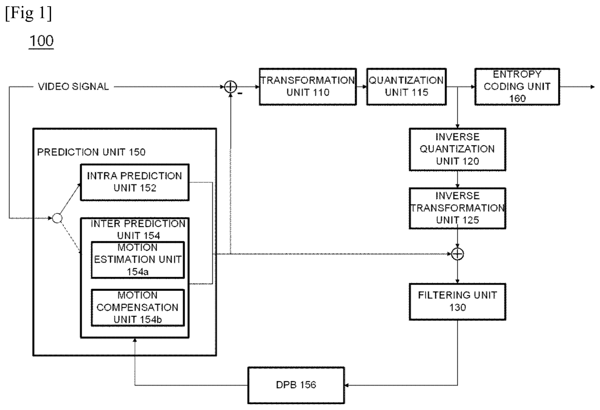

FIG. 1 is a schematic block diagram of a video signal encoding apparatus according to an embodiment of the present invention. Referring to FIG. 1, the encoding apparatus 100 of the present invention includes a transformation unit 110, a quantization unit 115, an inverse quantization unit 120, an inverse transformation unit 125, a filtering unit 130, a prediction unit 150, and an entropy coding unit 160.

The transformation unit 110 obtains a value of a transform coefficient by transforming a residual signal, which is a difference between the inputted video signal and the predicted signal generated by the prediction unit 150. For example, a Discrete Cosine Transform (DCT), a Discrete Sine Transform (DST), or a Wavelet Transform can be used. The DCT and DST perform transformation by splitting the input picture signal into blocks. In the transformation, coding efficiency may vary according to the distribution and characteristics of values in the transformation region. A transform kernel used for the transform of a residual block may has characteristics that allow a vertical transform and a horizontal transform to be separable. In this case, the transform of the residual block may be performed separately as a vertical transform and a horizontal transform. For example, an encoder may perform a vertical transform by applying a transform kernel in the vertical direction of a residual block. In addition, the encoder may perform a horizontal transform by applying the transform kernel in the horizontal direction of the residual block. In the present disclosure, the transform kernel may be used to refer to a set of parameters used for the transform of a residual signal, such as a transform matrix, a transform array, a transform function, or transform. For example, a transform kernel may be any one of multiple available kernels. Also, transform kernels based on different transform types may be used for the vertical transform and the horizontal transform, respectively.

The transform coefficients are distributed with higher coefficients toward the top left of a block and coefficients closer to "0" toward the bottom right of the block. As the size of a current block increases, there are likely to be many coefficients of "0" in the bottom-right region of the block. To reduce the transform complexity of a large-sized block, only a pre-determined top-left region may be kept and the remaining region may be reset to "0".

In addition, error signals may be present in only some regions of a coding block. In this case, the transform process may be performed on only some pre-determined regions. In an embodiment, in a block having a size of 2Nx2N, an error signal may be present only in the first 2NxN block, and the transform process may be performed on the first 2NxN block. However, the second 2NxN block may not be transformed and may not be encoded or decoded. Here, N may be any positive integer.

The encoder may perform an additional transform before transform coefficients are quantized. The above-described transform method may be referred to as a primary transform, and the additional transform may be referred to as a secondary transform. The secondary transform may be selective for each residual block. According to an embodiment, the encoder may improve coding efficiency by performing a secondary transform for regions where it is difficult to focus energy in a low-frequency region by using a primary transform alone. For example, a secondary transform may be additionally performed for blocks where residual values appear large in directions other than the horizontal or vertical direction of a residual block. Unlike a primary transform, a secondary transform may not be performed separately as a vertical transform and a horizontal transform. Such a secondary transform may be referred to as a low frequency non-separable transform (LFNST).

The quantization unit 115 quantizes the value of the transform coefficient value outputted from the transformation unit 110.

In order to improve coding efficiency, instead of coding the picture signal as it is, a method of predicting a picture using a region already coded through the prediction unit 150 and obtaining a reconstructed picture by adding a residual value between the original picture and the predicted picture to the predicted picture is used. In order to prevent mismatches in the encoder and decoder, information that can be used in the decoder should be used when performing prediction in the encoder. For this, the encoder performs a process of reconstructing the encoded current block again. The inverse quantization unit 120 inverse-quantizes the value of the transform coefficient, and the inverse transformation unit 125 reconstructs the residual value using the inverse quantized transform coefficient value. Meanwhile, the filtering unit 130 performs filtering operations to improve the quality of the reconstructed picture and to improve the coding efficiency. For example, a deblocking filter, a sample adaptive offset (SAO), and an adaptive loop filter may be included. The filtered picture is outputted or stored in a decoded picture buffer (DPB) 156 for use as a reference picture.

The deblocking filter is a filter for removing intra-block distortions generated at the boundaries between blocks in a reconstructed picture. Through the distribution of pixels included in several columns or rows based on random edges in a block, the encoder may determine whether to apply a deblocking filter to the edges. When applying a deblocking filter to the block, the encoder may apply a long filter, a strong filter, or a weak filter depending on the strength of deblocking filtering. Additionally, horizontal filtering and vertical filtering may be processed in parallel. The sample adaptive offset (SAO) may be used to correct offsets from an original video on a pixel-by-pixel basis with respect to a residual block to which a deblocking filter has been applied. To correct offset for a particular picture, the encoder may use a technique that divides pixels included in the picture into a predetermined number of regions, determines a region in which the offset correction is to be performed, and applies the offset to the region (Band Offset). Alternatively, the encoder may use a method for applying an offset in consideration of edge information of each pixel (Edge Offset). The adaptive loop filter (ALF) is a technique of dividing pixels included in a video into predetermined groups and then determining one filter to be applied to each group, thereby performing filtering differently for each group. Information about whether to apply ALF may be signaled on a per-coding unit basis, and the shape and filter coefficients of an ALF to be applied may vary for each block. In addition, an ALF filter having the same shape (a fixed shape) may be applied regardless of the characteristics of a target block to which the ALF filter is to be applied.

The prediction unit 150 includes an intra-prediction unit 152 and an inter-prediction unit 154. The intra-prediction unit 152 performs intra prediction within a current picture, and the inter-prediction unit 154 performs inter prediction to predict the current picture by using a reference picture stored in the decoded picture buffer 156. The intra-prediction unit 152 performs intra prediction from reconstructed regions in the current picture and transmits intra encoding information to the entropy coding unit 160. The intra encoding information may include at least one of an intra-prediction mode, a most probable mode (MPM) flag, an MPM index, and information regarding a reference sample. The inter-prediction unit 154 may again include a motion estimation unit 154a and a motion compensation unit 154b. The motion estimation unit 154a finds a part most similar to a current region with reference to a specific region of a reconstructed reference picture, and obtains a motion vector value which is the distance between the regions. Reference region-related motion information (reference direction indication information (L0 prediction, L1 prediction, or bidirectional prediction), a reference picture index, motion vector information, etc.) and the like, obtained by the motion estimation unit 154a, are transmitted to the entropy coding unit 160 so as to be included in a bitstream. The motion compensation unit 154B performs inter-motion compensation by using the motion information transmitted by the motion estimation unit 154a, to generate a prediction block for the current block. The inter-prediction unit 154 transmits the inter encoding information, which includes motion information related to the reference region, to the entropy coding unit 160.

According to an additional embodiment, the prediction unit 150 may include an intra block copy (IBC) prediction unit (not shown). The IBC prediction unit performs IBC prediction from reconstructed samples in a current picture and transmits IBC encoding information to the entropy coding unit 160. The IBC prediction unit references a specific region within a current picture to obtain a block vector value that indicates a reference region used to predict a current region. The IBC prediction unit may perform IBC prediction by using the obtained block vector value. The IBC prediction unit transmits the IBC encoding information to the entropy coding unit 160. The IBC encoding information may include at least one of reference region size information and block vector information (index information for predicting the block vector of a current block in a motion candidate list, and block vector difference information).

When the above picture prediction is performed, the transform unit 110 transforms a residual value between an original picture and a predictive picture to obtain a transform coefficient value. At this time, the transform may be performed on a specific block basis in the picture, and the size of the specific block may vary within a predetermined range. The quantization unit 115 quantizes the transform coefficient value generated by the transform unit 110 and transmits the quantized transform coefficient to the entropy coding unit 160.

The quantized transform coefficients in the form of a two-dimensional array may be rearranged into a one-dimensional array for entropy coding. In relation to methods for scanning a quantized transform coefficient, the size of a transform block and an intra-picture prediction mode may determine which scanning method is used. In an embodiment, diagonal, vertical, and horizontal scans may be applied. This scan information may be signaled on a block-by-block basis, and may be derived based on predetermined rules.

The entropy coding unit 160 generates a video signal bitstream by entropy coding information indicating a quantized transform coefficient, intra encoding information, and inter encoding information. The entropy coding unit 160 may use variable length coding (VLC) and arithmetic coding. The variable length coding (VLC) is a technique of transforming input symbols into consecutive codewords, wherein the length of the codewords is variable. For example, frequently occurring symbols are represented by shorter codewords, while less frequently occurring symbols are represented by longer codewords. As the variable length coding, context-based adaptive variable length coding (CAVLC) may be used. The arithmetic coding uses the probability distribution of each data symbol to transform consecutive data symbols into a single decimal number. The arithmetic coding allows acquisition of the optimal decimal bits needed to represent each symbol. As the arithmetic coding, context-based adaptive binary arithmetic coding (CABAC) may be used.

CABAC is a binary arithmetic coding technique using multiple context models generated based on probabilities obtained from experiments. First, when symbols are not in binary form, the encoder binarizes each symbol by using exp-Golomb, etc. The binarized value, 0 or 1, may be described as a bin. A CABAC initialization process is divided into context initialization and arithmetic coding initialization. The context initialization is the process of initializing the probability of occurrence of each symbol, and is determined by the type of symbol, a quantization parameter (QP), and slice type (I, P, or B). A context model having the initialization information may use a probability-based value obtained through an experiment. The context model provides information about the probability of occurrence of Least Probable Symbol (LPS) or Most Probable Symbol (MPS) for a symbol to be currently coded and about which of bin values 0 and 1 corresponds to the MPS (valMPS). One of multiple context models is selected via a context index (ctxIdx), and the context index may be derived from information in a current block to be encoded or from information about neighboring blocks. Initialization for binary arithmetic coding is performed based on a probability model selected from the context models. In the binary arithmetic coding, encoding is performed through the process in which division into probability intervals is made through the probability of occurrence of 0 and 1, and then a probability interval corresponding to a bin to be processed becomes the entire probability interval for the next bin to be processed. Information about a position within the last bin in which the last bin has been processed is output. However, the probability interval cannot be divided indefinitely, and thus, when the probability interval is reduced to a certain size, a renormalization process is performed to widen the probability interval and the corresponding position information is output. In addition, after each bin is processed, a probability update process may be performed, wherein information about a processed bin is used to set a new probability for the next to be processed.

The generated bitstream is encapsulated in network abstraction layer (NAL) unit as basic units. The NAL units are classified into video a coding layer (VCL) NAL unit, which includes video data, and a non-VCL NAL unit, which includes parameter information for decoding video data. There are various types of VCL or non-VCL NAL units. A NAL unit includes NAL header information and raw byte sequence payload (RBSP) which is data. The NAL header information includes summary information about the RBSP. The RBSP of a VCL NAL unit includes an integer number of encoded coding tree units. In order to decode a bitstream in a video decoder, it is necessary to separate the bitstream into NAL units and then decode each of the separate NAL units. Information needed for decoding a video signal bitstream may be transmitted by being included in a video parameter set (VPS), a sequence parameter set (SPS), a picture parameter set (PPS), adaptation parameter set (APS), or the like. An integer number of coding tree units may be included in an RBSP of a VCL NAL unit. The VPS is a parameter set expressed in a common syntax by extracting a duplicated parameter from the SPS parameter set that is signaled for each layer in a bitstream supporting an image quality, resolution, frame rate scalability or a bitstream supporting multi-view. The SPS is a parameter set including at least one from among a profile including information associated with an allowable coding tool (or algorithm) and image format, a level including information associated with a decoder's processing power related to the resolution, a frame rate of a processible image, an allowable memory size, or the like, a tier including information associated with a processible maximum bitrate, the resolution of an image, a bit depth, and information indicating whether to enable a function. The PPS is a parameter set including at least one from among the resolution of an image, tile partitioning information, information indicating whether to enable weight prediction, a quantization parameter, and filtering-related information. The APS is a parameter set including one from among ALF filter coefficient information, an LMCS-related parameter, and a quantization scale parameter according to the type of APS. The APS is classified as a prefix APS signaled before a VCL NAL unit and a suffix APS signaled after a VCL NAL unit. In the case of an ALF APS, since it is efficient to apply an ALF filter coefficient derived from a previous picture to a subsequent picture, the ALF APS may be signaled as a suffix APS.

The block diagram of FIG. 1 illustrates an encoding device 100 according to an embodiment of the disclosure, and separate blocks illustrate logically discriminated elements of the encoding device 100. Therefore, the elements of the encoding device 100 may be mounted as a single chip or a plurality of chips according to a design of the device. According to an embodiment, operation of each element of the above-described encoding device 100 may be performed by a processor (not illustrated).

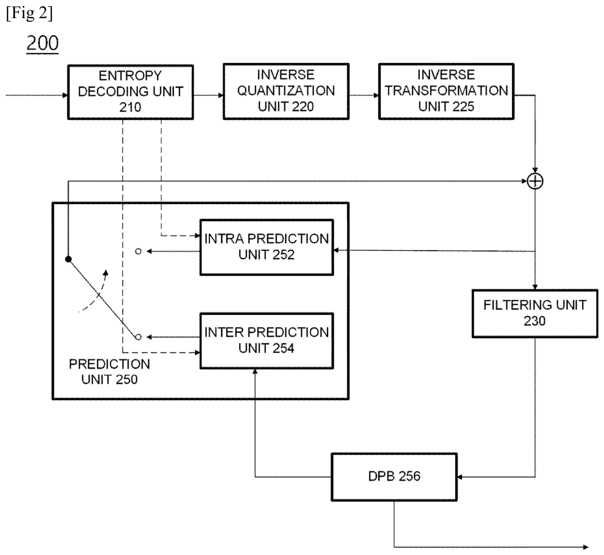

FIG. 2 is a schematic block diagram of a video signal decoding apparatus 200 according to an embodiment of the present invention. Referring to FIG. 2, the decoding apparatus 200 of the present invention includes an entropy decoding unit 210, an inverse quantization unit 220, an inverse transformation unit 225, a filtering unit 230, and a prediction unit 250.

The entropy decoding unit 210 entropy-decodes a video signal bitstream to extract transform coefficient information, intra encoding information, inter encoding information, and the like for each region. For example, the entropy decoding unit 210 may obtain a binarization code for transform coefficient information of a specific region from the video signal bitstream. The entropy decoding unit 210 obtains a quantized transform coefficient by inverse-binarizing a binary code. The inverse quantization unit 220 inverse-quantizes the quantized transform coefficient, and the inverse transformation unit 225 restores a residual value by using the inverse-quantized transform coefficient. The video signal processing device 200 restores an original pixel value by summing the residual value obtained by the inverse transformation unit 225 with a prediction value obtained by the prediction unit 250.

Meanwhile, the filtering unit 230 performs filtering on a picture to improve image quality. This may include a deblocking filter for reducing block distortion and/or an adaptive loop filter for removing distortion of the entire picture. The filtered picture is outputted or stored in the DPB 256 for use as a reference picture for the next picture.

The prediction unit 250 includes an intra prediction unit 252 and an inter prediction unit 254. The prediction unit 250 generates a prediction picture by using the encoding type decoded through the entropy decoding unit 210 described above, transform coefficients for each region, and intra/inter encoding information. In order to reconstruct a current block in which decoding is performed, a decoded region of the current picture or other pictures including the current block may be used. In a reconstruction, only a current picture, that is, a picture (or, tile/slice) that performs intra prediction or intra BC prediction, is called an intra picture or an I picture (or, tile/slice), and a picture (or, tile/slice) that can perform all of intra prediction, inter prediction, and intra BC prediction is called an inter picture (or, tile/slice). In order to predict sample values of each block among inter pictures (or, tiles/slices), a picture (or, tile/slice) using up to one motion vector and a reference picture index is called a predictive picture or P picture (or, tile/slice), and a picture (or tile/slice) using up to two motion vectors and a reference picture index is called a bi-predictive picture or a B picture (or tile / slice). In other words, the P picture (or, tile/slice) uses up to one motion information set to predict each block, and the B picture (or, tile/slice) uses up to two motion information sets to predict each block. Here, the motion information set includes one or more motion vectors and one reference picture index.

The intra prediction unit 252 generates a prediction block using the intra encoding information and reconstructed samples in the current picture. As described above, the intra encoding information may include at least one of an intra prediction mode, a Most Probable Mode (MPM) flag, and an MPM index. The intra prediction unit 252 predicts the sample values of the current block by using the reconstructed samples located on the left and/or upper side of the current block as reference samples. In this disclosure, reconstructed samples, reference samples, and samples of the current block may represent pixels. Also, sample values may represent pixel values.

According to an embodiment, the reference samples may be samples included in a neighboring block of the current block. For example, the reference samples may be samples adjacent to a left boundary of the current block and/or samples may be samples adjacent to an upper boundary. Also, the reference samples may be samples located on a line within a predetermined distance from the left boundary of the current block and/or samples located on a line within a predetermined distance from the upper boundary of the current block among the samples of neighboring blocks of the current block. In this case, the neighboring block of the current block may include the left (L) block, the upper (A) block, the below left (BL) block, the above right (AR) block, or the above left (AL) block.

The inter prediction unit 254 generates a prediction block using reference pictures and inter encoding information stored in the DPB 256. The inter coding information may include motion information set (reference picture index, motion vector information, etc.) of the current block for the reference block. Inter prediction may include L0 prediction, L1 prediction, and bi-prediction. L0 prediction means prediction using one reference picture included in the L0 picture list, and L1 prediction means prediction using one reference picture included in the L1 picture list. For this, one set of motion information (e.g., motion vector and reference picture index) may be required. In the bi-prediction method, up to two reference regions may be used, and the two reference regions may exist in the same reference picture or may exist in different pictures. That is, in the bi-prediction method, up to two sets of motion information (e.g., a motion vector and a reference picture index) may be used and two motion vectors may correspond to the same reference picture index or different reference picture indexes. In this case, the reference pictures are pictures located temporally before or after the current picture, and may be pictures for which reconstruction has already been completed. According to an embodiment, two reference regions used in the bi-prediction scheme may be regions selected from picture list L0 and picture list L1, respectively. In addition, a prediction method that uses only a reference picture with a POC lower than a POC of a current picture based on a picture order count (POC) that specifies a current picture's display order, or uses only a reference picture with a POC higher than the POC of the current picture may be referred to as uni-directional prediction. In addition, a prediction method that uses both a reference picture with a POC lower than the POC of the current picture based on a picture order count (POC) that specifies a current picture's display order, and a reference picture with a POC higher than the POC of the current picture may be referred to as bi-directional prediction. In the uni-direction prediction, a prediction method that uses one reference picture may be referred to as uni-prediction, and a prediction that uses two reference pictures may be referred to as bi-prediction or bidirectional prediction.

The inter prediction unit 254 may obtain a reference block of the current block using a motion vector and a reference picture index. The reference block is in a reference picture corresponding to a reference picture index. Also, a sample value of a block specified by a motion vector or an interpolated value thereof can be used as a predictor of the current block. For motion prediction with sub-pel unit pixel accuracy, for example, an 8-tap interpolation filter for a luma signal and a 4-tap interpolation filter for a chroma signal can be used. However, the interpolation filter for motion prediction in sub-pel units is not limited thereto. In this way, the inter prediction unit 254 performs motion compensation to predict the texture of the current unit from motion pictures reconstructed previously. In this case, the inter prediction unit may use a motion information set.

According to an additional embodiment, the prediction unit 250 may include an IBC prediction unit (not shown). The IBC prediction unit may reconstruct the current region by referring to a specific region including reconstructed samples in the current picture. The IBC prediction unit obtains IBC encoding information for the current region from the entropy decoding unit 210. The IBC prediction unit obtains a block vector value of the current region indicating the specific region in the current picture. The IBC prediction unit may perform IBC prediction by using the obtained block vector value. The IBC encoding information may include block vector information.

The reconstructed video picture is generated by adding the predict value outputted from the intra prediction unit 252 or the inter prediction unit 254 and the residual value outputted from the inverse transformation unit 225. That is, the video signal decoding apparatus 200 reconstructs the current block using the prediction block generated by the prediction unit 250 and the residual obtained from the inverse transformation unit 225.

Meanwhile, the block diagram of FIG. 2 shows a decoding apparatus 200 according to an embodiment of the present invention, and separately displayed blocks logically distinguish and show the elements of the decoding apparatus 200. Accordingly, the elements of the above-described decoding apparatus 200 may be mounted as one chip or as a plurality of chips depending on the design of the device. According to an embodiment, the operation of each element of the above-described decoding apparatus 200 may be performed by a processor (not shown).

The technology proposed in the present specification may be applied to a method and a device for both an encoder and a decoder, and the wording signaling and parsing may be for convenience of description. In general, signaling may be described as encoding each type of syntax from the perspective of the encoder, and parsing may be described as interpreting each type of syntax from the perspective of the decoder. In other words, each type of syntax may be included in a bitstream and signaled by the encoder, and the decoder may parse the syntax and use the syntax in a reconstruction process. In this case, the sequence of bits for each type of syntax arranged according to a prescribed hierarchical configuration may be called a bitstream.

One picture may be partitioned into sub-pictures, slices, tiles, etc. and encoded. A sub-picture may include one or more slices or tiles. When one picture is partitioned into multiple slices or tiles and encoded, all the slices or tiles within the picture must be decoded before the picture can be output a screen. On the other hand, when one picture is encoded into multiple subpictures, only a pre-determined subpicture may be decoded and output on the screen. A slice may include multiple tiles or subpictures. Alternatively, a tile may include multiple subpictures or slices. Subpictures, slices, and tiles may be encoded or decoded independently of each other, and thus are advantageous for parallel processing and processing speed improvement. However, there is the disadvantage in that a bit rate increases because encoded information of other adjacent subpictures, slices, and tiles is not available. A subpicture, a slice, and a tile may be partitioned into multiple coding tree units (CTUs) and encoded.

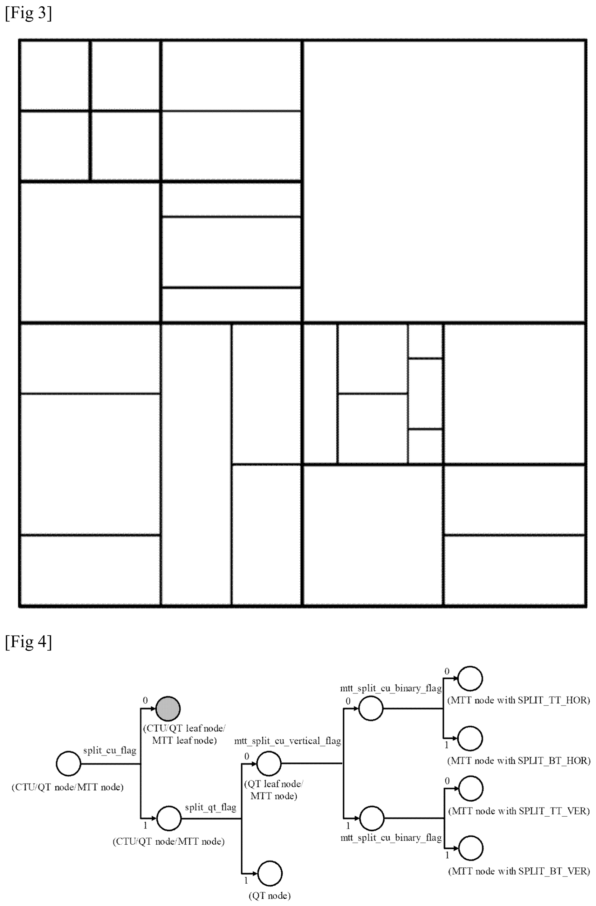

FIG. 3 illustrates an embodiment in which a coding tree unit (CTU) is divided into coding units (CUs) within a picture. In the process of coding a video signal, a picture may be divided into a sequence of coding tree units (CTUs). A coding tree unit may include a luma Coding Tree Block (CTB), two chroma coding tree blocks, and encoded syntax information thereof. One coding tree unit may include one coding unit, or one coding tree unit may be divided into multiple coding units. One coding unit may include a luma coding block (CB), two chroma coding blocks, and encoded syntax information thereof. One coding block may be partitioned into multiple sub-coding blocks. One coding unit may include one transform unit (TU), or one coding unit may be partitioned into multiple transform units. A transform unit may include a luma transform block (TB), two chroma transform blocks, and encoded syntax information thereof. A coding tree unit may be partitioned into multiple coding units. A coding tree unit may become a leaf node without being partitioned. In this case, the coding tree unit itself may be a coding unit.

The coding unit refers to a basic unit for processing a picture in the process of processing the video signal described above, that is, intra/inter prediction, transformation, quantization, and/or entropy coding. The size and shape of the coding unit in one picture may not be constant. The coding unit may have a square or rectangular shape. The rectangular coding unit (or rectangular block) includes a vertical coding unit (or vertical block) and a horizontal coding unit (or horizontal block). In the present specification, the vertical block is a block whose height is greater than the width, and the horizontal block is a block whose width is greater than the height. Further, in this specification, a non-square block may refer to a rectangular block, but the present invention is not limited thereto.

Referring to FIG. 3, the coding tree unit is first split into a quad tree (QT) structure. That is, one node having a 2NX2N size in a quad tree structure may be split into four nodes having an NXN size. In the present specification, the quad tree may also be referred to as a quaternary tree. Quad tree split can be performed recursively, and not all nodes need to be split with the same depth.

Meanwhile, the leaf node of the above-described quad tree may be further split into a multi-type tree (MTT) structure. According to an embodiment of the present invention, in a multi-type tree structure, one node may be split into a binary or ternary tree structure of horizontal or vertical division. That is, in the multi-type tree structure, there are four split structures such as vertical binary split, horizontal binary split, vertical ternary split, and horizontal ternary split. According to an embodiment of the present invention, in each of the tree structures, the width and height of the nodes may all have powers of 2. For example, in a binary tree (BT) structure, a node of a 2NX2N size may be split into two NX2N nodes by vertical binary split, and split into two 2NXN nodes by horizontal binary split. In addition, in a ternary tree (TT) structure, a node of a 2NX2N size is split into (N/2)X2N, NX2N, and (N/2)X2N nodes by vertical ternary split, and split into 2NX(N/2), 2NXN, and 2NX(N/2) nodes by horizontal ternary split. This multi-type tree split can be performed recursively.

A leaf node of the multi-type tree can be a coding unit. When the coding unit is not greater than the maximum transform length, the coding unit can be used as a unit of prediction and/or transform without further splitting. As an embodiment, when the width or height of the current coding unit is greater than the maximum transform length, the current coding unit can be split into a plurality of transform units without explicit signaling regarding splitting. On the other hand, at least one of the following parameters in the above-described quad tree and multi-type tree may be predefined or transmitted through a higher level set of RBSPs such as PPS, SPS, VPS, and the like. 1) CTU size: root node size of quad tree, 2) minimum QT size MinQtSize: minimum allowed QT leaf node size, 3) maximum BT size MaxBtSize: maximum allowed BT root node size, 4) Maximum TT size MaxTtSize: maximum allowed TT root node size, 5) Maximum MTT depth MaxMttDepth: maximum allowed depth of MTT split from QT's leaf node, 6) Minimum BT size MinBtSize: minimum allowed BT leaf node size, 7) Minimum TT size MinTtSize: minimum allowed TT leaf node size.

FIG. 4 illustrates an embodiment of a method of signaling splitting of the quad tree and multi-type tree. Preset flags can be used to signal the splitting of the quad tree and multi-type tree described above. Referring to FIG. 4, at least one of a flag 'split_cu_flag' indicating whether or not to split a node, a flag 'split_qt_flag' indicating whether or not to split a quad tree node, a flag 'mtt_split_cu_vertical_flag' indicating a splitting direction of the multi-type tree node, or a flag 'mtt_split_cu_binary_flag' indicating a splitting shape of the multi-type tree node can be used.

According to an embodiment of the present invention, 'split_cu_flag', which is a flag indicating whether or not to split the current node, can be signaled first. When the value of 'split_cu_flag' is 0, it indicates that the current node is not split, and the current node becomes a coding unit. When the current node is the coating tree unit, the coding tree unit includes one unsplit coding unit. When the current node is a quad tree node 'QT node', the current node is a leaf node 'QT leaf node' of the quad tree and becomes the coding unit. When the current node is a multi-type tree node 'MTT node', the current node is a leaf node 'MTT leaf node' of the multi-type tree and becomes the coding unit.

When the value of 'split_cu_flag' is 1, the current node can be split into nodes of the quad tree or multi-type tree according to the value of 'split_qt_flag'. A coding tree unit is a root node of the quad tree, and can be split into a quad tree structure first. In the quad tree structure, 'split_qt_flag' is signaled for each node 'QT node'. When the value of 'split_qt_flag' is 1, the corresponding node is split into 4 square nodes, and when the value of 'qt_split_flag' is 0, the corresponding node becomes the 'QT leaf node' of the quad tree, and the corresponding node is split into multi-type nodes. According to an embodiment of the present invention, quad tree splitting can be limited according to the type of the current node. Quad tree splitting can be allowed when the current node is the coding tree unit (root node of the quad tree) or the quad tree node, and quad tree splitting may not be allowed when the current node is the multi-type tree node. Each quad tree leaf node 'QT leaf node' can be further split into a multi-type tree structure. As described above, when 'split_qt_flag' is 0, the current node can be split into multi-type nodes. In order to indicate the splitting direction and the splitting shape, 'mitt_split_cu_vertical_flag' and 'mtt_split_cu_binary_flag' can be signaled. When the value of 'mtt_split_cu_vertical_flag' is 1, vertical splitting of the node 'MTT node' is indicated, and when the value of 'mtt_split_cu_vertical_flag' is 0, horizontal splitting of the node 'MTT node' is indicated. In addition, when the value of 'mtt_split_cu_binary_flag' is 1, the node 'MTT node' is split into two rectangular nodes, and when the value of 'mtt_split_cu_binary_flag' is 0, the node 'MTT node' is split into three rectangular nodes.

In the tree partitioning structure, a luma block and a chroma block may be partitioned in the same form. That is, a chroma block may be partitioned by referring to the partitioning form of a luma block. When a current chroma block is less than a predetermined size, a chroma block may not be partitioned even if a luma block is partitioned.

In the tree partitioning structure, a luma block and a chroma block may have different forms. In this case, luma block partitioning information and chroma block partitioning information may be signaled separately. Furthermore, in addition to the partitioning information, luma block encoding information and chroma block encoding information may also be different from each other. In one example, the luma block and the chroma block may be different in at least one among intra encoding mode, encoding information for motion information, etc.

A luma block and a chroma block may have the same tree partitioning structure, and this may be referred to as a single tree. When the current block is encoded using a single tree, a partitioning structure, encoding mode information, motion information, and the like of the luma block and the chroma block may be the same, and information related to an error signal may differ between the luma block and the chroma block. In addition, the luma block and the chroma block may have different tree partitioning structures, and this may be referred to as a dual tree. When the current block is encoded using a dual tree, at least one of a partitioning structure, encoding mode information, motion information, and the like may differ between the luma block and the chroma block.

The luma block and the chroma block corresponding thereto may have high correlation. Therefore, when the current block is encoded and decoded using a dual tree in an encoder and decoder, the chroma block may be encoded using partitioning information, encoding mode information, motion information, and the like of the luma block.

A node to be split into the smallest units may be treated as one coding block. When a current block is a coding block, the coding block may be partitioned into several sub-blocks (sub-coding blocks), and the sub-blocks may have the same prediction information or different pieces of prediction information. In one example, when a coding unit is in an intra mode, intra-prediction modes of sub-blocks may be the same or different from each other. Also, when the coding unit is in an inter mode, sub-blocks may have the same motion information or different pieces of the motion information. Furthermore, the sub-blocks may be encoded or decoded independently of each other. Each sub-block may be distinguished by a sub-block index (sbIdx). Also, when a coding unit is partitioned into sub-blocks, the coding unit may be partitioned horizontally, vertically, or diagonally. In an intra mode, a mode in which a current coding unit is partitioned into two or four sub-blocks horizontally or vertically is called intra sub-partitions (ISP). In an inter mode, a mode in which a current coding block is partitioned diagonally is called a geometric partitioning mode (GPM). In the GPM mode, the position and direction of a diagonal line are derived using a predetermined angle table, and index information of the angle table is signaled.

The motion information may include one or more from among reference direction indication information, reference picture information, a motion vector, motion resolution, an affine model, a control point motion vector (CPMV), a block vector, block vector resolution, MHP information, LIC information, filtering information, BCW information, and RRIBC information.

The reference direction indication information may be configured with L0 prediction, L1 prediction, and L0 and L1 prediction, and the L0 prediction and L1 prediction are uni-prediction and uni-directional prediction, and the L0 and L1 prediction is bi-prediction. The L0 and L1 prediction may be uni-directional prediction or bi-directional prediction. Here, the L0 prediction may perform prediction using a reference picture in an L0 reference picture list, and the L1 prediction may perform prediction using a reference picture in an L1 reference picture list. Based on a POC of a current picture, a reference picture with a POC lower than the POC of the current picture may be added to the L0 reference picture list. In addition, the L0 reference picture list may be configured with reference pictures in the order from a reference picture with a POC closer to the POC of the current picture to a reference picture with a POC farther from the POC of the current picture. Based on the POC of the current picture, a reference picture with a POC higher than the POC of the current picture may be added to the L1 reference picture list. In addition, the L1 reference picture list may be configured with reference pictures in the order from a reference picture with a POC closer to the POC of the current picture to a reference picture with a POC father from the POC of the current picture. The L0 and L1 reference picture list may be different for each slide, sub-picture, or picture. In addition, the L0 reference picture list may include the reference pictures of the L1 reference picture list. In addition, the L1 reference picture list may include the reference pictures of the L0 reference picture list.

The reference picture information may be different for each block, and may be index information indicating a reference picture used for prediction of a current block in the L0 reference picture list and/or L1 reference picture list. The reference picture information may include one or more pieces of information from L0 reference picture information and L1 reference picture information.

The motion vector is information indicating a block that well matches a current block in a reference picture, and is a value that represents a distance to the reference block based on a top-left location of the current block in the picture as horizontal and vertical coordinates.

The motion resolution is the resolution of a motion vector, and the motion resolution may be represented based on a 4-pixel unit, one pixel (one integer pixel) unit, 1/2-pixel unit, 1/4-pixel unit, 1/8-pixel unit, 1/16-pixel unit, or the like.

The block vector is information indicating a block that well matches a current block in an already reconstructed area in a current picture, and is a value that represents a distance to a reference block based on a top-left location of the current block in the picture as horizontal and vertical coordinates.

The block vector resolution may be represented based on a 4-pixel unit, one pixel (one integer pixel) unit, 1/2-pixel unit, 1/4-pixel unit, 1/8-pixel unit, 1/16-pixel unit, or the like.

The MHP information may include information associated with whether to apply additional motion information and additional motion information.

The LIC information may include information associated with whether to apply LIC to a current block.

The filtering information may include filtering type and coefficient information applied according to the motion resolution of a current block.

The CW information may include information associated with whether to apply BCW to a current block.

The RRIBC information may include information associated with whether to apply RRIBC and information associated with an RRIBC type when a current block is encoded in an IBC mode.

Picture prediction (motion compensation) for coding is performed on a coding unit that is no longer divided (i.e., a leaf node of a coding unit tree). Hereinafter, the basic unit for performing the prediction will be referred to as a "prediction unit" or a "prediction block".

Hereinafter, the term "unit" used herein may replace the prediction unit, which is a basic unit for performing prediction. However, the present disclosure is not limited thereto, and "unit" may be understood as a concept broadly encompassing the coding unit.

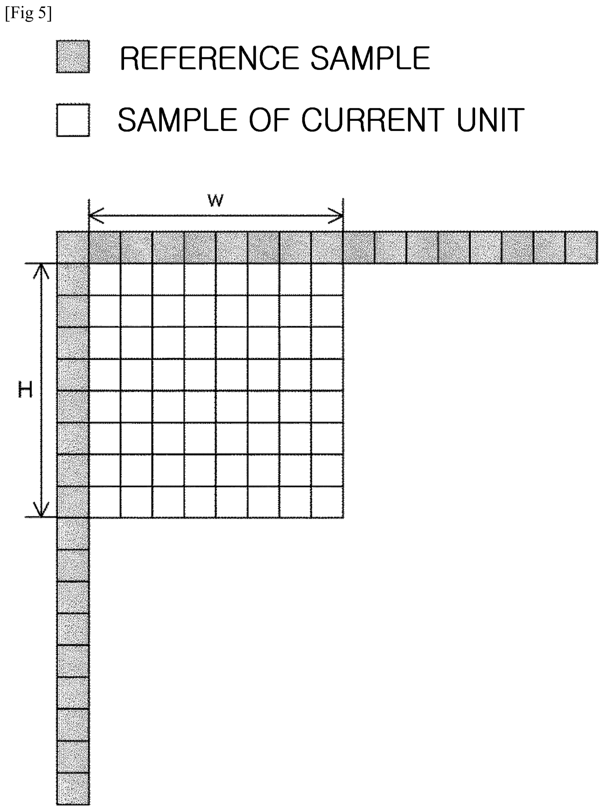

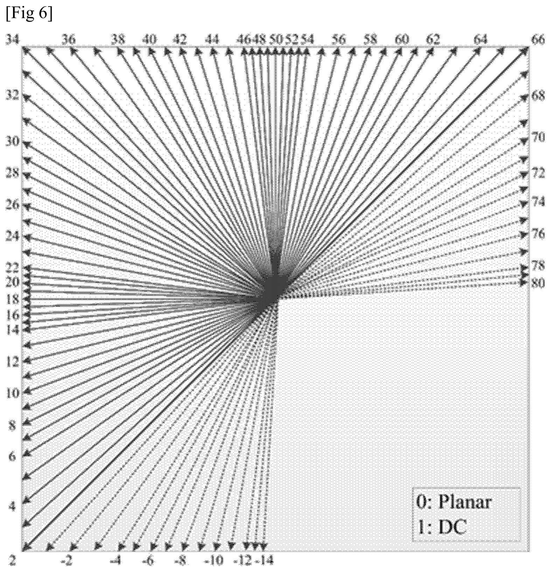

FIGS. 5 and 6 more specifically illustrate an intra prediction method according to an embodiment of the present invention. As described above, the intra prediction unit predicts the sample values of the current block by using the reconstructed samples located on the left and/or upper side of the current block as reference samples.

First, FIG. 5 shows an embodiment of reference samples used for prediction of a current block in an intra prediction mode. According to an embodiment, the reference samples may be samples adjacent to the left boundary of the current block and/or samples adjacent to the upper boundary. As shown in FIG. 5, when the size of the current block is WXH and samples of a single reference line adjacent to the current block are used for intra prediction, reference samples may be configured using a maximum of 2W+2H+1 neighboring samples located on the left and/or upper side of the current block.

Pixels from multiple reference lines may be used for intra prediction of the current block. The multiple reference lines may include n lines located within a predetermined range from the current block. According to an embodiment, when pixels from multiple reference lines are used for intra prediction, separate index information that indicates lines to be set as reference pixels may be signaled, and may be named a reference line index.

When at least some samples to be used as reference samples have not yet been restored, the intra prediction unit may obtain reference samples by performing a reference sample padding procedure. The intra prediction unit may perform a reference sample filtering procedure to reduce an error in intra prediction. That is, filtering may be performed on neighboring samples and/or reference samples obtained by the reference sample padding procedure, so as to obtain the filtered reference samples. The intra prediction unit predicts samples of the current block by using the reference samples obtained as in the above. The intra prediction unit predicts samples of the current block by using unfiltered reference samples or filtered reference samples. In the present disclosure, neighboring samples may include samples on at least one reference line. For example, the neighboring samples may include adjacent samples on a line adjacent to the boundary of the current block.

Next, FIG. 6 shows an embodiment of prediction modes used for intra prediction. For intra prediction, intra prediction mode information indicating an intra prediction direction may be signaled. The intra prediction mode information indicates one of a plurality of intra prediction modes included in the intra prediction mode set. When the current block is an intra prediction block, the decoder receives intra prediction mode information of the current block from the bitstream. The intra prediction unit of the decoder performs intra prediction on the current block based on the extracted intra prediction mode information.

According to an embodiment of the present invention, the intra prediction mode set may include all intra prediction modes used in intra prediction (e.g., a total of 67 intra prediction modes). More specifically, the intra prediction mode set may include a planar mode, a DC mode, and a plurality (e.g., 65) of angle modes (i.e., directional modes). Each intra prediction mode may be indicated through a preset index (i.e., intra prediction mode index). For example, as shown in FIG. 6, the intra prediction mode index 0 indicates a planar mode, and the intra prediction mode index 1 indicates a DC mode. Also, the intra prediction mode indexes 2 to 66 may indicate different angle modes, respectively. The angle modes respectively indicate angles which are different from each other within a preset angle range. For example, the angle mode may indicate an angle within an angle range (i.e., a first angular range) between 45 degrees and -135 degrees clockwise. The angle mode may be defined based on the 12 o'clock direction. In this case, the intra prediction mode index 2 indicates a horizontal diagonal (HDIA) mode, the intra prediction mode index 18 indicates a horizontal (Horizontal, HOR) mode, the intra prediction mode index 34 indicates a diagonal (DIA) mode, the intra prediction mode index 50 indicates a vertical (VER) mode, and the intra prediction mode index 66 indicates a vertical diagonal (VDIA) mode.

Meanwhile, the preset angle range can be set differently depending on a shape of the current block. For example, if the current block is a rectangular block, a wide angle mode indicating an angle exceeding 45 degrees or less than -135 degrees in a clockwise direction can be additionally used. When the current block is a horizontal block, an angle mode can indicate an angle within an angle range (i.e., a second angle range) between (45 + offset1) degrees and (-135 + offset1) degrees in a clockwise direction. In this case, angle modes 67 to 76 outside the first angle range can be additionally used. In addition, if the current block is a vertical block, the angle mode can indicate an angle within an angle range (i.e., a third angle range) between (45 - offset2) degrees and (-135 - offset2) degrees in a clockwise direction. In this case, angle modes -10 to -1 outside the first angle range can be additionally used. According to an embodiment of the present disclosure, values of offset1 and offset2 can be determined differently depending on a ratio between the width and height of the rectangular block. In addition, offset1 and offset2 can be positive numbers.

According to a further embodiment of the present invention, a plurality of angle modes configuring the intra prediction mode set can include a basic angle mode and an extended angle mode. In this case, the extended angle mode can be determined based on the basic angle mode.

According to an embodiment, the basic angle mode is a mode corresponding to an angle used in intra prediction of the existing high efficiency video coding (HEVC) standard, and the extended angle mode can be a mode corresponding to an angle newly added in intra prediction of the next generation video codec standard. More specifically, the basic angle mode can be an angle mode corresponding to any one of the intra prediction modes {2, 4, 6, ..., 66}, and the extended angle mode can be an angle mode corresponding to any one of the intra prediction modes {3, 5, 7, ..., 65}. That is, the extended angle mode can be an angle mode between basic angle modes within the first angle range. Accordingly, the angle indicated by the extended angle mode can be determined on the basis of the angle indicated by the basic angle mode.

According to another embodiment, the basic angle mode can be a mode corresponding to an angle within a preset first angle range, and the extended angle mode can be a wide angle mode outside the first angle range. That is, the basic angle mode can be an angle mode corresponding to any one of the intra prediction modes {2, 3, 4, ..., 66}, and the extended angle mode can be an angle mode corresponding to any one of the intra prediction modes {-14, -13, -12, ..., -1} and {67, 68, ..., 80}. The angle indicated by the extended angle mode can be determined as an angle on a side opposite to the angle indicated by the corresponding basic angle mode. Accordingly, the angle indicated by the extended angle mode can be determined on the basis of the angle indicated by the basic angle mode. Meanwhile, the number of extended angle modes is not limited thereto, and additional extended angles can be defined according to the size and/or shape of the current block. Meanwhile, the total number of intra prediction modes included in the intra prediction mode set can vary depending on the configuration of the basic angle mode and extended angle mode described above

In the embodiments described above, the spacing between the extended angle modes can be set on the basis of the spacing between the corresponding basic angle modes. For example, the spacing between the extended angle modes {3, 5, 7, ..., 65} can be determined on the basis of the spacing between the corresponding basic angle modes {2, 4, 6,... , 66}. In addition, the spacing between the extended angle modes {-14, -13, ... , -1} can be determined on the basis of the spacing between corresponding basic angle modes {53, 54,... , 66} on the opposite side, and the spacing between the extended angle modes {67, 68, ..., 80} can be determined on the basis of the spacing between the corresponding basic angle modes {2, 3, 4, ... , 15} on the opposite side. The angular spacing between the extended angle modes can be set to be the same as the angular spacing between the corresponding basic angle modes. In addition, the number of extended angle modes in the intra prediction mode set can be set to be less than or equal to the number of basic angle modes.

According to an embodiment of the present invention, the extended angle mode can be signaled based on the basic angle mode. For example, the wide angle mode (i.e., the extended angle mode) can replace at least one angle mode (i.e., the basic angle mode) within the first angle range. The basic angle mode to be replaced can be a corresponding angle mode on a side opposite to the wide angle mode. That is, the basic angle mode to be replaced is an angle mode that corresponds to an angle in an opposite direction to the angle indicated by the wide angle mode or that corresponds to an angle that differs by a preset offset index from the angle in the opposite direction. According to an embodiment of the present invention, the preset offset index is 1. The intra prediction mode index corresponding to the basic angle mode to be replaced can be remapped to the wide angle mode to signal the corresponding wide angle mode. For example, the wide angle modes {-14, -13, ..., -1} can be signaled by the intra prediction mode indices {52, 53, ..., 66}, respectively, and the wide angle modes {67, 68, ..., 80} can be signaled by the intra prediction mode indices {2, 3, ..., 15}, respectively. In this way, the intra prediction mode index for the basic angle mode signals the extended angle mode, and thus the same set of intra prediction mode indices can be used for signaling the intra prediction mode even if the configuration of the angle modes used for intra prediction of each block are different from each other. Accordingly, signaling overhead due to a change in the intra prediction mode configuration can be minimized.

Meanwhile, whether or not to use the extended angle mode can be determined on the basis of at least one of the shape and size of the current block. According to an embodiment, when the size of the current block is greater than a preset size, the extended angle mode can be used for intra prediction of the current block, otherwise, only the basic angle mode can be used for intra prediction of the current block. According to another embodiment, when the current block is a block other than a square, the extended angle mode can be used for intra prediction of the current block, and when the current block is a square block, only the basic angle mode can be used for intra prediction of the current block.

The intra-prediction unit determines reference samples and/or interpolated reference samples to be used for intra prediction of the current block, based on the intra-prediction mode information of the current block. When the intra-prediction mode index indicates a specific angular mode, a reference sample corresponding to the specific angle or an interpolated reference sample from current samples in the current block is used for prediction of a current pixel. Thus, different sets of reference samples and/or interpolated reference samples may be used for intra prediction depending on the intra-prediction mode. After the intra prediction of the current block is performed using the reference samples and the intra-prediction mode information, the decoder reconstructs sample values of the current block by adding the residual signal of the current block, which has been obtained from the inverse transform unit, to the intra-prediction value of the current block.

Motion information used for inter prediction may include reference direction indication information (inter_pred_idc), reference picture index (ref_idx_l0, ref_idx_l1), and motion vector (mvL0, mvL1). Reference picture list utilization information (predFlagL0, predFlagL1) may be set based on the reference direction indication information. In one example, for a unidirectional prediction using an L0 reference picture, predFlagL0=1 and predFlagL1=0 may be set. For a unidirectional prediction using an L1 reference picture, predFlagL0=0 and predFlagL1=1 may be set. For bidirectional prediction using both the L0 and L1 reference pictures, predFlagL0=1 and predFlagL1=1 may be set.

When the current block is a coding unit, the coding unit may be partitioned into multiple sub-blocks, and the sub-blocks have the same prediction information or different pieces of prediction information. In one example, when the coding unit is in an intra mode, intra-prediction modes of the sub-blocks may be the same or different from each other. Also, when the coding unit is in an inter mode, the sub-blocks may have the same motion information or different pieces of motion information. Furthermore, the sub-blocks may be encoded or decoded independently of each other. Each sub-block may be distinguished by a sub-block index (sbIdx).

The motion vector of the current block is likely to be similar to the motion vector of a neighboring block. Therefore, the motion vector of the neighboring block may be used as a motion vector predictor (MVP), and the motion vector of the current block may be derived using the motion vector of the neighboring block. Furthermore, to improve the accuracy of the motion vector, the motion vector difference (MVD) between the optimal motion vector of the current block and the motion vector predictor found by the encoder from an original video may be signaled.

The motion vector may have various resolutions, and the resolution of the motion vector may vary on a block-by-block basis. The motion vector resolution may be expressed in integer units, half-pixel units, 1/4 pixel units, 1/16 pixel units, 4-integer pixel units, etc. A video, such as screen content, has a simple graphical form such as text, and does not require an interpolation filter to be applied. Thus, integer units and 4-integer pixel units may be selectively applied on a block-by-block basis. A block encoded using an affine mode, which represent rotation and scale, exhibit significant changes in form, so integer units, 1/4 pixel units, and 1/16 pixel units may be applied selectively on a block-by-block basis. Information about whether to selectively apply motion vector resolution on a block-by-block basis is signaled by amvr_flag. If applied, information about a motion vector resolution to be applied to the current block is signaled by amvr_precision_idx.

In the case of blocks to which bidirectional prediction is applied, weights applied between two prediction blocks may be equal or different, and information about the weights is signaled via BCW_IDX.

In order to improve the accuracy of the motion vector predictor, a merge or AMVP(advanced motion vector prediction) method may be selectively used on a block-by-block basis. The merge method is a method that configures motion information of a current block to be the same as motion information of a neighboring block adjacent to the current block, and is advantageous in that the motion information is spatially propagated without change in a motion region with homogeneity, and thus the encoding efficiency of the motion information is increased. On the other hand, the AMVP method is a method for predicting motion information in L0 and L1 prediction directions respectively and signaling the most optimal motion information in order to represent accurate motion information. The decoder derives motion information for a current block by using the AMVP or merge method, and then uses a reference block, located in the motion information in a reference picture, as a prediction block for the current block.

A method of deriving motion information in Merge or AMVP involves a method for constructing a motion candidate list using motion vector predictors derived from neighboring blocks of the current block, and then signaling index information for the optimal motion candidate. In the case of AMVP, motion candidate lists are derived for L0 and L1, respectively, so the most optimal motion candidate indexes (mvp_l0_flag, mvp_l1_flag) for L0 and L1 are signaled, respectively. In the case of Merge, a single move candidate list is derived, so a single merge index (merge_idx) is signaled. There may be various motion candidate lists derived from a single coding unit, and a motion candidate index or a merge index may be signaled for each motion candidate list. In this case, a mode in which there is no information about residual blocks in blocks encoded using the merge mode may be called a MergeSkip mode.

The bi-directional motion information for a current block may be derived by using AMVP and a merge mode together. For example, motion information in L0 direction may be derived using the AMVP method, and motion information in L1 direction may be derived using the merge method. Conversely, Merge may be used for L0 and AMVP may be used for L1. This encoding mode may be referred to as an AMVP-merge mode.

In the disclosure, a motion candidate and a motion information candidate may refer to the same meaning. In addition, a motion candidate list and a motion information candidate list may refer to the same meaning.

Symmetric MVD (SMVD) is a method which makes motion vector difference (MVD) values in the L0 and L1 directions symmetrical in the case of bi-directional prediction, thereby reducing the bit rate of motion information transmitted. The MVD information in the L1 direction that is symmetrical to the L0 direction is not transmitted, and reference picture information in the L0 and L1 directions is also not transmitted, but is derived during decoding.

Overlapped block motion compensation (OBMC) is a method in which, when blocks have different pieces of motion information, prediction blocks for a current block are generated by using motion information of neighboring blocks, and the prediction blocks are then weighted averaged to generate a final prediction block for the current block. This has the effect of reducing the blocking phenomenon that occurs at the block edges in a motion-compensated video.

Generally, a merged motion candidate has low motion accuracy. To improve the accuracy of the merge motion candidate, a merge mode with MVD (MMVD) method may be used. The MMVD method is a method for correcting motion information by using one candidate selected from several motion difference value candidates. Information about a correction value of the motion information obtained by the MMVD method (e.g., an index indicating one candidate selected from among the motion difference value candidates, etc.) may be included in a bitstream and transmitted to the decoder. By including the information about the correction value of the motion information in the bitstream, a bit rate may be saved compared to including an existing motion information difference value in a bitstream.

A template matching (TM) method is a method of configuring a template through a neighboring pixel of a current block, searching for a matching area most similar to the template, and correcting motion information. Template matching (TM) is a method of performing motion prediction by a decoder without including motion information in a bitstream so as to reduce the size of an encoded bitstream. The decoder does not have an original image, and thus may schematically derive motion information of a current block by using a pre-reconstructed neighboring block.

A Decoder-side Motion Vector Refinement (DMVR) method is a method for correcting motion information through the correlation of already restored reference videos in order to find more accurate motion information. The DMVR method is a method which uses the bidirectional motion information of a current block to use, within predetermined regions of two reference pictures, a point with the best matching between reference blocks in the reference pictures as a new bidirectional motion. When the DMVR method is performed, the encoder may perform DMVR on one block to correct motion information, and then partition the block into sub-blocks and perform DMVR on each sub-block to correct motion information of the sub-block again, and this may be referred to as multi-pass DMVR (MP-DMVR).

A local illumination compensation (LIC) method is a method for compensating for changes in luma between blocks, and is a method which derives a linear model by using neighboring pixels adjacent to a current block, and then compensate for luma information of the current block by using the linear model.

Existing video encoding methods perform motion compensation by considering only parallel movements in upward, downward, leftward, and rightward directions, thus reducing the encoding efficiency when encoding videos that include movements such as zooming, scaling, and rotation that are commonly encountered in real life. To express the movements such as zooming, scaling, and rotation, affine model-based motion prediction techniques using four (rotation) or six (zooming, scaling, rotation) parameter models may be applied.

Bi-directional optical flow (BDOF) is used to correct a prediction block by estimating the amount of change in pixels on an optical-flow basis from a reference block of blocks with bi-directional motion. Motion information derived by the BDOF of VVC may be used to correct the motion of a current block.

Prediction refinement with optical flow (PROF) is a technique for improving the accuracy of affine motion prediction for each sub-block so as to be similar to the accuracy of motion prediction for each pixel. Similar to BDOF, PROF is a technique that obtains a final prediction signal by calculating a correction value for each pixel with respect to pixel values in which affine motion is compensated for each sub-block based on optical-flow.

The combined inter-/intra-picture prediction (CIIP) method is a method for generating a final prediction block by performing weighted averaging of a prediction block generated by an intra-picture prediction method and a prediction block generated by an inter-picture prediction method when generating a prediction block for the current block.

The intra block copy (IBC) method is a method for finding a part, which is most similar to a current block, in an already reconstructed region within a current picture and using the reference block as a prediction block for the current block. In this case, information related to a block vector, which is the distance between the current block and the reference block, may be included in a bitstream. The decoder can parse the information related to the block vector contained in the bitstream to calculate or set the block vector for the current block.

The bi-prediction with CU-level weights (BCW) method is a method in which with respect to two motion-compensated prediction blocks from different reference pictures, weighted averaging of the two prediction blocks is performed by adaptively applying weights on a block-by-block basis without generating the prediction blocks using an average.

According to an intra template matching prediction (TMP) method, a video signal processing device configures a reference template using pixel values of a neighboring block adjacent to a current block, detects a part that is the most similar to the configured reference template from an already reconstructed area in a current picture, and uses the corresponding reference block (the part detected from the already reconstructed area) as a prediction block for the current block.

The multi-hypothesis prediction (MHP) method is a method for performing weighted prediction through various prediction signals by transmitting additional motion information in addition to unidirectional and bidirectional motion information during inter-picture prediction.

A cross-component linear model (CCLM) is a method for configuring a linear model by using a high correlation between a luma signal and a chroma signal at the same location as the corresponding luma signal, and then predicting a chroma signal through the corresponding linear model. After a template is configured using a block completed to be reconstructed from among neighboring blocks adjacent to a current block, and then a parameter for the linear model is derived through the template. Next, a current luma block selectively reconstructed according to the size of the chroma block according to a video format is down-sampled. Lastly, a chroma component block of the current block is predicted using the down-sampled luma component block (sample) and the corresponding linear model. In this case, the method using two or more linear models is called a multi-model linear mode (MMLM).

A convolutional cross-component model (CCCM) is a method for configuring a non-linear model by using a high correlation between a luma signal and a chroma signal at the same location as the corresponding luma signal, and then predicting a chroma signal through the corresponding non-linear model.

A gradient linear model (GLM) is a method for configuring a model by additionally reflecting the gradient of a luma sample in a linear model such as the CCLM, and then predicting a chroma signal through the corresponding model.

In independent scalar quantization, reconstructed coefficient $t'_k$ for input coefficient $t_k$ is only dependent on quantization index $q_k$. That is, a quantization index for any reconstructed coefficient has a value different from those of quantization indices for other reconstructed coefficients. In this case, $t'_k$ may be a value obtained by adding a quantization error to $t_k$, and may vary or remain the same according to a quantization parameter. Here, $t'_k$ may be also referred to as a reconstructed transform coefficient or a de-quantized transform coefficient, and the quantization index may be also referred to as a quantized transform coefficient.

In uniform reconstruction quantization (URQ), reconstructed coefficients have the characteristic of being arrangement at equal intervals. The distance between two adjacent reconstructed values may be called a quantization step size. The reconstructed values may include 0, and the entire set of available reconstructed values may be uniquely defined based on the quantization step size. The quantization step size may vary depending on quantization parameters.

In the existing methods, quantization reduces the set of acceptable reconstructed transform coefficients, and elements of the set may be finite. Thus, there are limitation in minimizing the average error between an original video and a reconstructed video. Vector quantization may be used as a method for minimizing the average error.

A simple form of vector quantization used in video encoding is sign data hiding. This is a method in which the encoder does not encode a sign for one non-zero coefficient and the decoder determines the sign for the coefficient based on whether the sum of absolute values of all the coefficients is even or odd. To this end, in the encoder, at least one coefficient may be incremented or decremented by "1", and the at least one coefficient may be selected and have a value adjusted so as to be optimal from the perspective of rate-distortion cost. In one example, a coefficient with a value close to the boundary between the quantization intervals may be selected.

Another vector quantization method is trellis-coded quantization, and, in video encoding, is used as an optimal path-searching technique to obtain optimized quantization values in dependent quantization. On a block-by-block basis, quantization candidates for all coefficients in a block are placed in a trellis graph, and the optimal trellis path between optimized quantization candidates is found by considering rate-distortion cost. Specifically, the dependent quantization applied to video encoding may be designed such that a set of acceptable reconstructed transform coefficients with respect to transform coefficients depends on the value of a transform coefficient that precedes a current transform coefficient in the reconstruction order. At this time, by selectively using multiple quantizers according to the transform coefficients, the average error between the original video and the reconstructed video is minimized, thereby increasing the encoding efficiency.

Among intra prediction encoding techniques, the matrix intra prediction (MIP) method is a matrix-based intra prediction method, and obtains a prediction signal by using a predefined matrix and offset values through pixels on the left and top of a neighboring block, unlike a prediction method having directionality from pixels of neighboring blocks adjacent to a current bloc.

To derive an intra-prediction mode for a current block, on the basis of a template which is a random reconstructed region adjacent to the current block, an intra-prediction mode for a template derived through neighboring pixels of the template may be used to reconstruct the current block. First, the decoder may generate a prediction template for the template by using neighboring pixels (references) adjacent to the template, and may use an intra-prediction mode, which has generated the most similar prediction template to an already reconstructed template, to reconstruct the current block. This method may be referred to as template intra mode derivation (TIMD).

In general, the encoder may determine a prediction mode for generating a prediction block and generate a bitstream including information about the determined prediction mode. The decoder may parse a received bitstream to set an intra-prediction mode. In this case, the bit rate of information about the prediction mode may be approximately 10% of the total bitstream size. To reduce the bit rate of information about the prediction mode, the encoder may not include information about an intra-prediction mode in the bitstream. Accordingly, the decoder may use the characteristics of neighboring blocks to derive (determine) an intra-prediction mode for reconstruction of a current block, and may use the derived intra-prediction mode to reconstruct the current block. In this case, to derive the intra-prediction mode, the decoder may apply a Sobel filter horizontally and vertically to each neighboring pixel adjacent to the current block to infer directional information, and then map the directional information to the intra-prediction mode. The method by which the decoder derives the intra-prediction mode using neighboring blocks may be described as decoder side intra mode derivation (DIMD).

When the current block is a luma block, the video signal processing device may derive an intra prediction mode via DIMD and TIMD methods. When the current block is a chroma block, an already reconstructed luma block corresponding to the chroma block exists, and thus the video signal processing device may apply the DIMD and TIMD methods using the reconstructed luma block so as to derive an intra prediction mode, and may use the derived intra prediction mode as an intra prediction mode of the chroma block. That is, when the current block is a luma block, the video signal processing device may derive directional information, and when the current block is a chroma block, the video signal processing device may not derive directional information, and may apply directional information obtained from the luma block to the chroma block. This mode may be referred to as a "DIMO chroma" mode or a "TIMD chroma" mode.

A prediction method using correlation between different signals, such as a CCLM, MMLM, CCM, GLM, or the like may be referred to as a cross-component prediction (CCP). In other words, a method of predicting a signal (Cb, Cr as chroma signal) from another signal (e.g., luma signal) may be referred to as cross-component prediction (CCP).

A CCP merge method may be a method of predicting a chroma block of a current block by using a CCP model (CCLM, MMLM, CCCM, or the like) used in a neighboring block.

A reconstruction-reordered IBC (RRIBC) encoding mode (interchangeably used with RRIBC) may be used in an IBC block. The RRIBC may be configured with a vertical flip and a horizontal flip. A block to which the RRIBC is applied may be flipped based on an RRIBC type. Before an encoder detects a part that is the most similar to the current block in a reference picture, an original block to be currently encoded may be flipped. That is, the encoder may detect a part that is the most similar to the current block from the reference picture by using the flipped original block. Therefore, a predicted block may be a block that is not flipped, and an error block (residual block) may also be processed as a block that is not flipped. A decoder may flip a finally reconstructed block based on an RRIBC type of the current block.

An encoding mode (prediction mode) described in the disclosure may be mentioned without a term, a mode, or may be stated using a term, a method instead of a mode. For example, a CCLM mode may be specified as a CCLM method or CCLM.

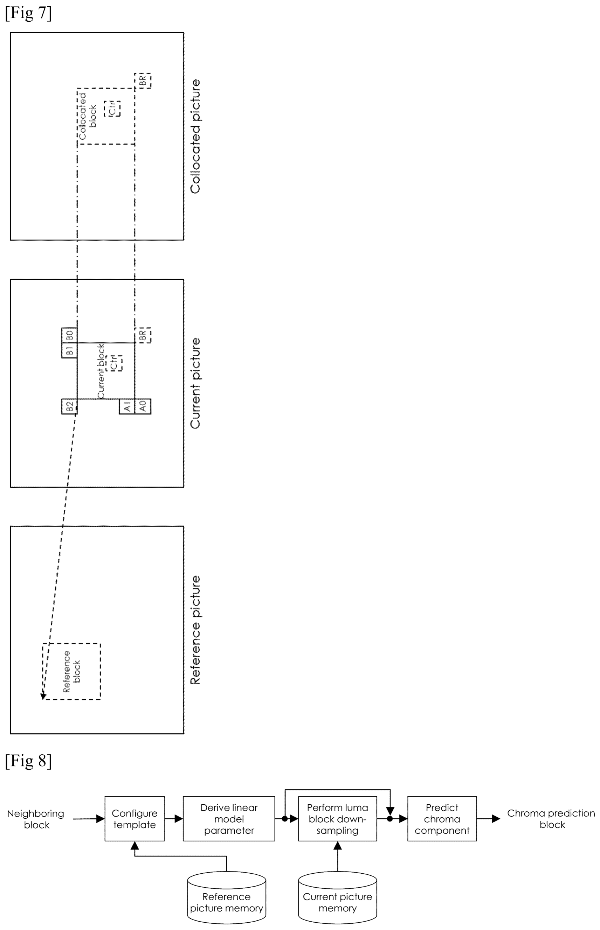

FIG. 7 illustrates the position of neighboring blocks used to construct a motion candidate list in inter prediction.

The neighboring blocks may be spatially located blocks or temporally located blocks. A neighboring block that is spatially adjacent to a current block may be at least one among a left (A1) block, a left below (A0) block, an above (B1) block, an above right (B0) block, or an above left (B2) block. A neighboring block that is temporally adjacent to the current block may be a block in a collocated picture, which includes the position of a top left pixel of a bottom right (BR) block of the current block. When a neighboring block temporally adjacent to the current block is encoded using an intra mode, or when the neighboring block temporally adjacent to the current block is positioned not to be used, a block, which includes a horizontal and vertical center (Ctr) pixel position in the current block, in the collocated picture corresponding to the current picture may be used as a temporal neighboring block. Motion candidate information derived from the collocated picture may be referred to as a temporal motion vector predictor (TMVP). Only one TMVP may be derived from one block. One block may be partitioned into multiple sub-blocks, and a TMVP candidate may be derived for each sub-block. A method for deriving TMVPs on a sub-block basis may be referred to as sub-block temporal motion vector predictor (sbTMVP).

Whether methods described in the present specification are to be applied may be determined on the basis of at least one of pieces of information relating to slice type information (e.g., whether a slice is an I slice, a P slice, or a B slice), whether the current block is a tile, whether the current block is a subpicture, the size of a current block, the depth of a coding unit, whether a current block is a luma block or a chroma block, whether a frame is a reference frame or a non-reference frame, and a temporal layer corresponding a reference sequence and a layer. Pieces of information used to determine whether methods described in the present specification are to be applied may be pieces of information promised between a decoder and an encoder in advance. In addition, such pieces of information may be determined according to a profile and a level. Such pieces of information may be expressed by a variable value, and a bitstream may include information on a variable value. That is, a decoder may parse information on a variable value included in a bitstream to determine whether the above methods are applied. For example, whether the above methods are to be applied may be determined on the basis of the width length or the height length of a coding unit. If the width length or the height length is equal to or greater than 32 (e.g., 32, 64, or 128), the above methods may be applied. If the width length or the height length is smaller than 32 (e.g., 2, 4, 8, or 16), the above methods may be applied. If the width length or the height length is equal to 4 or 8, the above methods may be applied.

A residual signal may be a signal regarding the difference between an original signal and a predicted signal generated through inter prediction or intra prediction. Energy regarding the residual signal may be distributed across the entire area of the pixel domain. Therefore, there may be a problem in that, if the decoder encodes the pixel value itself of the residual signal, the compression efficiency will deteriorate. This necessitates a process of concentrating the energy of the residual signal in the pixel domain in a low-frequency area of the frequency domain by using transform coding.

The high efficiency video coding (HEVC) standard mostly uses efficient discrete cosine transform type-II (DCT-II) in signals are evenly distributed in the pixel domain (if adjacent pixel values are similar), and limitedly uses discrete sine transform type-VII (DST-DII) with regard to intra-predicted 4x4 blocks only, thereby transforming the residual signal of the pixel domain to a frequency area. The DST-DII transform may be appropriate for a residual signal generated through inter prediction (a case in which energy is evenly distributed in the pixel domain). However, a residual signal generated through intra prediction may tend to have energy increasing in proportion to the distance from reference samples, considering the characteristics of the intra prediction by which predictions are made by using reconstructed reference samples around the current encoding unit. Therefore, no high encoding efficiency can be accomplished solely by using the DST-DII transform.

FIG. 8 illustrates a method for performing a CCLM according to an embodiment of the present disclosure.

Referring to FIG. 8, a template may be configured using a block for which reconstruction is completed among neighboring blocks adjacent to a current block. A video signal processing apparatus (e.g., a decoder or an encoder) may derive a parameter for a linear model by using the template. A luma component block (sample) selectively reconstructed according to the size of the chroma block according to a video format may be down-sampled. The video signal processing apparatus may predict a chroma component block (sample) of the current block by using the down-sampled luma component block (sample) and the linear model. In this case, two or more linear models may be used, and the method using two or more linear models is called a multi-model linear mode (MMLM).

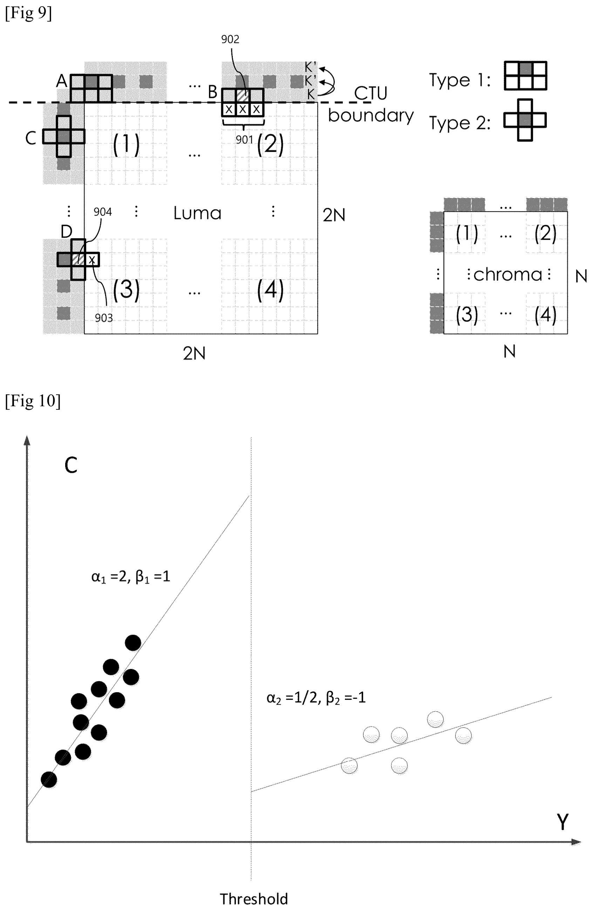

FIG. 9 illustrates a template used to derive a linear model according to an embodiment of the present disclosure.

A video signal processing apparatus may derive a parameter for a linear model by using only some of neighboring samples adjacent to a current block. The location of a part represented in a dark gray in FIG. 9 may be the location of a sample used to derive a parameter for the linear model. In a case of the format of 4:2:0, the size of a chroma component block is 1/4 of that of a luma component block. Accordingly, a luma component sample down-sampled for 1:1 matching between the luma component sample and the chroma component sample may be used to derive the parameter for the linear model. Two types of filters may be used to derive the down-sampled luma component sample. An encoder may acquire a bitstream including filter-type information relating to a type of filter to be used. In addition, the type of filter (type 1 or type 2) may be determined according to units (for example, SPS level, PPS level, picture header (PH) level, slice level, tile level, CU level, sub-block level, etc.) of filter, in which the filter is used. A decoder may parse filter-type information included in the bitstream to determine/configure the type of filter for adaptively deriving the luma component sample. Type 1 of FIG. 9 is a method for using six samples to derive a luma component sample at the center of upper samples. The video signal processing apparatus may generate the down-sampled luma component sample by applying type 1 at location A of FIG. 9. Type 2 of FIG. 9 is a method of using five samples to derive a luma component sample at the center of the five samples. The video signal processing apparatus may generate the down-sampled luma component sample by applying type 2 to location C. The template used to derive the parameter for the linear model may be configured with the down-sampled luma component sample. Hereinafter, a method for configuring the template is described.

In addition, the video signal processing apparatus may configure a template with the down-sampled luma component sample with reference to a sample in the current luma component block. Referring to location B of FIG. 9, when type 1 is used to generate the down-sampled luma component sample, three upper samples may be samples of neighboring blocks adjacent to the current block, and three lower samples 901 may be samples of reconstructed luma component blocks within the current block. In this case, the location of a finally generated luma component sample may be a hatched location 902 of B in FIG. 9. The same is also applied when type 2 is used at location of FIG. 9 to generate the down-sampled luma component sample. That is, location X sample 903 of D in FIG. 9 may be a sample of the reconstructed luma component block within the current block, and the remaining four samples may be samples of neighboring samples adjacent to the current block. In this case, the location of a finally generated luma component sample may be a hatched location 904 of D in FIG. 9.

In addition, the video signal processing apparatus may configure a template with the down-sampled luma component sample with reference to only samples of neighboring blocks remaining after excluding the sample within the current luma component block. Referring to location B in FIG. 9, when type 1 is used to generate the down-sampled luma component sample, the video signal processing apparatus may acquire the down-sampled luma component sample by using three upper samples only (i.e., except for the reconstructed luma component sample 901 within the current block), and configure the template. In this case, the location of a finally generated luma component sample may be a hatched location 902 of B in FIG. 9. The same is also applied when type 2 is used at location D in FIG. 9 to generate the down-sampled luma component sample. That is, the video signal processing apparatus may acquire the down-sampled luma component sample by using four samples (neighboring samples adjacent to the current block) remaining after excluding the sample (location X sample 903 of D in FIG. 9) within the current luma component block, and configure the template. In this case, the location of the finally generated luma component sample may be a hatched location 904 of D in FIG. 9.

In addition, referring to FIG. 9, the video signal processing apparatus may generate the down-sampled luma sample by using three consecutive lines including one line adjacent to the current block. In this case, when the upper boundary of the current block is a CTU boundary, the video signal processing apparatus may configure a template by using only one line that is the most adjacent to the current block to save memory on a line buffer. To enable types 1 and 2 of filter to be applied, samples of one adjacent line (first line) may be padded into the second line and the third line. Alternatively, the padding into the second line and the third line may be performed using a value obtained by applying a predetermined weight to the sample of the first line.

Samples existing in the location where the efficient is high among the samples adjacent to the current block may be included in the template. Specifically, the template may include samples having high efficiency among the left neighboring samples and the upper neighboring samples of the current block. In this case, the encoder may acquire a bitstream including information on samples to be included. In addition, the decoder may parse information on samples to be included to configure a template. A method for performing signaling by including, in the bitstream, such information on samples to be included has a problem of increasing a bit rate. Hereinafter, a method for implicitly determining samples to be included in the template is described.

The locations of samples included in the template may be determined on the basis of an intra prediction directivity mode of the current block. That is, when the intra prediction directivity mode corresponds to a direction close to upper samples of the current block, or a predetermined first mode, only the upper samples may be included in the template. When the intra prediction directivity mode corresponds to a direction close to left samples of the current block, or a predetermined second mode, only the left samples may be included in the template. In this case, the first mode may be an intra prediction directivity mode corresponding to an index larger than 50. The second mode may be an intra prediction directivity mode corresponding to an index smaller than 18. In addition, when the intra prediction directivity mode is an intra prediction directivity mode corresponding to an index equal to or greater than index 18 and equal to or smaller than index 50, the template may include both the upper samples of the current block and the left samples of the current block.

To configure an accurate template, a sample reconstructed with a higher image quality may be required. Accordingly, the template may be configured by comparing a quantization parameter value used when reconstructing left adjacent neighboring blocks of the current block and a quantization parameter value used when reconstructing upper adjacent neighboring blocks of the current block. For example, a template including samples of neighboring blocks using a smaller quantization parameter value between a quantization parameter value used when reconstructing left adjacent neighboring blocks of the current block and a quantization parameter value used when reconstructing upper adjacent neighboring blocks of the current block may be configured. On the contrary, a template including samples of neighboring blocks using a larger quantization parameter value between a quantization parameter value used when reconstructing left adjacent neighboring blocks of the current block and a quantization parameter value used when reconstructing upper adjacent neighboring blocks of the current block may be configured. When the quantization parameter value used when reconstructing the left adjacent neighboring blocks of the current block is identical to the quantization parameter value used when reconstructing upper adjacent neighboring blocks of the current block, a template including samples of the left adjacent neighboring blocks of the current block and samples of the upper adjacent neighboring blocks of the current block may be configured. In addition, when a difference between the quantization parameter value used when reconstructing the left adjacent neighboring blocks of the current block and the quantization parameter value used when reconstructing the upper adjacent neighboring blocks of the current block is within a pre-configured value, a template including samples of the left adjacent neighboring blocks of the current block and samples of the upper adjacent neighboring blocks of the current block may be configured.

In addition, the samples included in the template may be determined by comparing the size of the current block (for example, a product (i.e., the number of samples) of the horizontal length and the vertical length of the current block)) with a specific value. When the size of the current block is smaller than the specific value, the left neighboring samples of the current block and the upper neighboring samples of the current block may be included in the template. On the contrary, when the size of the current block is equal to or larger than the specific value, the left neighboring samples of the current block and the upper neighboring samples of the current block may be included in the template. The specific value is a value determined on the basis of a sum of sizes of the horizontal length or the vertical length of the current block, and may be an integer equal to or greater than 1.

In addition, samples included in the template may be determined according to a ratio of the horizontal length to the vertical length of the current block. For example, when the horizontal length of the current block is longer than the vertical length, left (or upper) neighboring samples of the current block may be included in the template. On the contrary, when the horizontal length of the current block is shorter than the vertical length, upper (or left) neighboring samples of the current block may be included in the template. When the horizontal length of the current block is identical to the vertical length, left neighboring samples and upper neighboring samples of the current block may be included in the template.

In addition, the template may be determined on the basis of whether the CCLM and the MMLM are applied to the left and upper neighboring blocks of the current block. Samples of the block to which the CCLM and the MMLM are applied may be included in the template. For example, when the CCLM and the MMLM are not applied to the left neighboring blocks of the current block and the CCLM and the MMLM are applied to the upper neighboring blocks of the current block, the upper neighboring samples of the current block may be included in the template.

In addition, samples included in the template may be determined on the basis of the number of times that reference sample padding is performed. For example, when the number of samples for which the number of times that reference sample padding is performed among the left neighboring samples of the current block is equal to or greater than a specific number, the left neighboring samples of the current block may not be included in the template. That is, the upper neighboring samples of the current block may be included in the template. Similarly, when the number of samples for which reference sample padding is performed among samples of the upper neighboring blocks of the current block is equal to or greater than a specific number, the upper neighboring samples of the current block may not be included in the template. That is, the left neighboring samples of the current block may be included in the template. In this case, the specific number may be an integer equal to or greater than 1. In a case where neither the upper neighboring samples nor the left neighboring samples of the current block are included in the template, neither the CCLM or the MMLM may be applied to the current block when configuration is made so that neither the left template nor the upper template can be referenced. In addition, when configuration is made so that neither the left template nor the upper template can be referenced, the decoder may configure no CCLM and the MMLM to be used for the current block, without parsing information related to the CCLM and the MMLM into the current block.

When the number of samples included in the template configured by applying the above-described method, or the like is smaller than a predetermined number, or when the size of the current block is equal to or less than a specific size, a linear model for prediction of a chroma component block of the current block may be a linear model to which a pre-defined basic parameter is applied. This is because the linear model is difficult to be derived when the number of samples is small. In this case, the predetermined number and the specific size may correspond to an integer equal to or greater than 1. Alternatively, when the number of samples is smaller than the predetermined number or when the size of the current block is equal to or less than the specific size, the CCLM and the MMLM may not be applied to the current block. In addition, when the number of samples is smaller than the predetermined number or when the size of the current block is equal to or less than the specific size, the decoder may configure no CCLM and the MMLM to be used for the current block, without parsing information related to the CCLM and the MMLM into the current block.

The neighboring samples of the current block, which are included in the template, may be samples before deblocking filtering is applied. Alternatively, when luma mapping with chroma scaling (LMCS) is applied to the current block, the neighboring samples of the current block may be samples before inverse-mapping or samples for which inverse-mapping is performed.

The video signal processing apparatus may derive a parameter for a liner model by using the template. One or more linear models may be used for each block, and information on the number of linear models to be used for each block may be included in a bitstream. The decoder may parse information on the number of linear modes to be used for each block, so as to use the same to derive linear models for the current block. A method for deriving the linear model may include a least-mean-square (LMS) method, a min/max method, etc. Hereinafter, a method for deriving a linear model is described.

First, a min/max method is described. The video signal processing apparatus first determines values (X0A and X1A) for two small samples and values (X0B and X1B) for two large samples among four chroma samples at pre-promised locations within the template. In addition, the video signal processing apparatus may derive an average (Xa or Ya) of small values and an average (Xb or Yb) of large values by using luma sample values (Y0A, Y1A, Y0B, and Y1B) corresponding to the four samples, respectively, at the pre-promised locations within the template. In this case, Equation 1 may be used to derive the average (Xa or Ya) of the small values and the average (Xb or Yb) of the large values. Referring to Equation 1, Xa may be an average of values (X0A and X1A) for two small samples among four samples at pre-promised locations within the template. Ya may be an average of Y0A and Y1A corresponding to luma sample values corresponding to values (X0A and X1A) for two small samples, respectively, among four samples at the pre-promised locations within the template. Xb may be an average of values (X0B and X1B) for two large samples among four samples at the pre-promised locations within the template. Yb may be an average of Y0B and Y1B corresponding to luma sample values corresponding to two large samples (X0B and X1B), respectively, among four samples at the pre-promised locations within the template. The video signal processing apparatus may calculate linear model parameters $\alpha$ and $\beta$ by using Equation 2. The video signal processing apparatus may predict a chroma block by calculating each sample value predc of a chroma block by using linear model parameters $\alpha$ and $\beta$ and (down-sampled) luma sample value (recL'). Each sample value of the chroma block may be calculated as in Equation 3. (i, j) in Equation 3 may denote coordinates when coordinates of the upper left samples of the current block are assumed as (0, 0). That is, predc(i, j) may denote a sample value of the chroma block at location (i, j).

[Equation 1]

$$X_a = (x^0{}_A + x^1{}_A + 1) >> 1; \quad X_b = (x^0{}_B + x^1{}_B + 1) >> 1$$
$$Y_a = (y^0{}_A + y^1{}_A + 1) >> 1; \quad Y_b = (y^0{}_B + y^1{}_B + 1) >> 1$$

[Equation 2]

$$\alpha = \frac{Y_a - Y_b}{X_a - X_b} \qquad \beta = Y_b - \alpha \cdot X_b$$

[Equation 3]

$$pred_c(i,j) = \alpha \cdot rec'_L(i,j) + \beta$$

Next, an LMS method is described. The video signal processing apparatus may calculate linear model parameters $\alpha$ and $\beta$ as in Equations 4 and 5 according to the LMS method. RecC(i) and Rec'L(i) in Equations 4 and 5 denote values of the chroma sample and the down-sampled luma sample, respectively, in the template, and i denotes the number of samples in the template. For example, the sample in the template may be a sample at the location shown in gray in FIG. 9. The video signal processing apparatus may predict the chroma block by calculating each sample value predc of the chroma block by applying $\alpha$ and $\beta$ acquired through Equations 4 and 5 to Equation 3. $\alpha$ may be expressed in a fraction.

[Equation 4]

$$\alpha = \frac{I \times \sum_{i=0}^{I} Rec_C(i) \times Rec_L'(i) - \sum_{i=0}^{I} Rec_C(i) \times \sum_{i=0}^{I} Rec_L'(i)}{I \times \sum_{i=0}^{I} Rec_L'(i) \times Rec_L'(i) - \left(\sum_{i=0}^{I} Rec_L'(i)\right)^2} = \frac{A_1}{A_2}$$

[Equation 5]

$$\beta = \frac{\sum_{i=0}^{I} Rec_C(i) - \alpha \cdot \sum_{i=0}^{I} Rec_L{'}(i)}{I}$$

To enhance encoding efficiency of the linear model (CCLM or MMLM), the video signal processing apparatus may use two or more linear models as well as one linear model. That is, the video signal processing apparatus may use the models by mixing the existing CCLM mode in which only one linear model is used and the MMLM mode in which two or more linear models are used. In this case, information related to whether the CCLM mode is used or the MMLM mode is used may be included in a bitstream, and whether the CCLM mode is used or the MMLM mode is used may be determined in units of CUs.

FIG. 10 illustrates a method for deriving two linear models according to an embodiment of the present disclosure.

When multiple linear models are used, calculation complexity of a video signal processing apparatus may increase, and thus a case where two linear models are used is described below.

Referring to FIG. 10, a video signal processing apparatus may select a sample for deriving two linear models by using one template. In this case, the sample can be selected on the basis of a threshold. The threshold may be an average value of reconstructed luma component samples in a template, or a value acquired using the average value. Two linear models using the threshold may be as in Equation 6. [x, y] in Equation 6 may mean coordinates when coordinates of the left upper sample of the current block are (0, 0). That is, Predc[x, y] may mean a sample value of a chroma block at the location of (x, y). Rec'L(i) may mean a down-sampled luma sample in the template.

[Equation 5]

$$\begin{cases} Pred_C[x, y] = \alpha_1 \times Rec{'}_L[x, y] + \beta_1 & if\ Rec{'}_L[x, y] \le Threshold \\ Pred_C[x, y] = \alpha_2 \times Rec{'}_L[x, y] + \beta_2 & if\ Rec{'}_L[x, y] > Threshold \end{cases}$$

Hereinafter, a method for deriving parameters $\alpha 1$, $\alpha 2$, $\beta 1$, and $\beta 2$ for two linear models is described.

The video signal processing apparatus may acquire (calculate) an average value of luma component samples within the template and an average value of chroma component samples within the template. In this case, the average value of luma component samples and the average value of chroma component samples may be an average value scaled samples within a confirmed range on the basis of the number of samples of each template. This is to more accurately distinguish two linear models. The average value of luma component samples within the template may be calculated using the down-sampled luma component sample or luma component samples before down-sampling. In addition, a sample to be used among the down-sampled luma component sample and the luma component samples before down-sampling may vary according to an SPS level, a PPS level, a picture header (PH) lever, a slice level, a tile level, a CU level, or a sub-block level. A decoder may parse information indicating a sample to be used among the luma component samples before down-sampling and the down-sampled luma component sample included in a bitstream, and adaptively determine/-configure a sample to be used among the down-sampled luma component sample and the luma component samples before down-sampling. The parameter for the linear model may be configured as a basic value. For example, $\alpha 1$ and $\alpha 2$ may be configured as 0, and $\beta 1$ and $\beta 2$ may be configured as a half of a maximum value in the range of a current video format. When the maximum value in the range of the video format is 8 bits, $\beta 1$ and $\beta 2$ may be configured as 128. In addition, a shift value for reconstructing a scaled value to the original may be configured as "0". When the number of samples in the template is smaller than a predetermined number, two linear models configured using the basic parameters. When the predetermined number is an integer equal to or greater than 1, and may be, for example, 4. Chroma samples at the same location as each of the luma samples may be divided into two groups with reference to a scaled average value for the luma component samples in the template. In this case, the number of samples in each group may be a multiple of 2. If not a multiple of 2, the video signal processing apparatus may perform padding using neighboring samples so that the number of samples in each group becomes a multiple of 2. When the number of samples in each group is smaller than a predetermined number, padding may not be performed. The video signal processing apparatus may calculate a parameter for a linear model for each group by using Equations 4 and 5. When the number of samples in each group is smaller than a predetermined number, a difference value obtained by subtracting the average value of luma component samples in the template from the average value of chroma component samples in the template may be parameter $\beta$ for the linear model. In addition, when the number of samples in each group is smaller than a predetermined number, only one linear model may be derived and used. The predetermined number is an integer equal to or greater than 1, and may be, for example, 4.

When the MMLM is applied, the video signal processing apparatus may use a method below to derive a more accurate parameter for a linear model.

A threshold value for deriving a linear model may be obtained (calculated) based on an average value of reconstructed luma component samples in the current block, instead of an average value of luma component samples in a template of a neighboring block adjacent to the current block. Alternatively, the threshold value for deriving a linear model may be obtained (calculated) based on an average value of the average value of reconstructed luma component samples in the current block and the average value of the luma component samples in the template. Depending a color format, the average value of the reconstructed component samples in the current block may be an average value of samples of a downsampled luma component block. Alternatively, the video signal processing device may use an average value calculated using at least one from among a pixel value of a luma template of a neighboring block adjacent to the current block and a pixel value of a reconstructed luma block in the current block, in order to determine a threshold value for deriving a linear model. Any one of an average value of the current luma block and an average value of the luma template may be used as a threshold value to distinguish between two linear models. Depending on the color format, the average value of the luma block of the neighboring block may be an average value of downsampled luma components. In addition, depending on the color format, the average value of the luma block of the current block may be an average value of downsampled luma blocks. In addition, depending on the color format, the average value of the luma template and the luma block may be an average value of the luma template and the luma block before downsampling. Alternatively, a weight for calculating an average value of the luma template and the reconstructed luma block in the current block may be changed based on the size of the current block. That is, the video signal processing device may calculate an average value by multiplying a pixel value of the luma template by a first weight and multiplying a pixel value of the reconstructed luma block in the current block by a second weight when the size of the current block is less than or equal to a predetermined size. The video signal processing device may use the calculated average value as a threshold value for distinguishing two models in the MMLM method. In this instance, the predetermined size may be determined based on a width size and a height size of the current block. For example, the predetermined size may be a sum of the width size and the height size of the current block, and specifically, may be 12. In addition, the first weight and the second weight may be integer numbers, and the first weight and the second weight may be different values from each other. For example, the first weight may be greater or less than the second weight, and specifically, the first weight may be 1 and the second weight may be 4. In addition, based on a weight, an average value calculated may be changed. For example, when the second weight is 4, an average value may be calculated, considering the size of the current block four times larger than the size of the current block. In the case of calculating an average value, this is a method of increasing the proportion of the current block when the size of the current block is small. Alternatively, the threshold value for deriving a linear model may be obtained (calculated) based on an average value of chroma component samples in the template, instead of the average value of luma component samples in the template. In this instance, two linear models may be derived respectively for two chroma components (Cb component, Cr component). To derive a linear model for each chroma component, an average value of samples of each chroma component in the template may be used. A threshold value for applying two linear models for the reconstructed luma component sample in the current block may be classified as two threshold values using an average value of the chroma component samples in the template. An encoder may obtain a bitstream including information associated with a threshold value. A decoder may parse the information associated with a threshold value so as to obtain a threshold value for deriving two linear models. In this instance, the information associated with a threshold value may directly indicate a threshold value. However, when the threshold value is indicated directly, there is a problem in that the number of bits increases, and thus the information associated with a threshold value may be an index in a previously configured table. That is, a table for threshold values respectively mapped to one or more indices is configured in advance and the information associated with a threshold value may indicate any one of the one or more indices. The decoder may use a threshold value corresponding to an index indicated by the information associated with a threshold value. The threshold values included in the table may be predefined values or threshold values used in neighboring blocks. The threshold values included in the table may be a predetermined number (e.g., more than 1) of threshold values, and may be configured in a first in, first out (FIFO) manner. That is, the table may be configured in a manner that includes a threshold value used for a neighboring block of the current block in the table. The information associated with a threshold value may be signaled based on a block unit, and a threshold value may be applied based on each block unit. In this instance, information associated with each block unit may be included in a bitstream and signaled. The decoder may the information associated with each block unit and may configure a threshold value based on each block unit.

Hereinafter, a method for determining the number (one or two) of linear models used for prediction of a chroma component block is described in detail.

i) When a reference line index for configuring samples of a current luma component block is equal to or greater than 1, a decoder may predict a chroma component block by using one linear model. This is because there is high possibility that the current block is a linearly changing block. ii) When the reference line index used for configuring samples of the current luma component block is 0 (when samples are configured on a line adjacent to the current block), the decoder may predict the chroma component block by using one or two linear models. That is, the decoder may determine, on the basis of the reference line index, whether to parse a syntax element related to a CCLM and an MMLM (for example, information on a threshold, information related to whether a CCLM mode is used or an MMLM mode is used, information on the number of linear models to be used for each block, etc.). The decoder may not parse the syntax element related to the CCLM and the MMLM when the reference line index is equal to or greater than 1. The decoder may infer that the CCLM using one linear model for prediction of the chroma component block is used when the reference line index is equal to or greater than 1. The syntax element related to the CCLM and the MMLM (for example, information on a threshold, information related to whether a CCLM mode is used or an MMLM mode is used, information on the number of linear models to be used for each block, etc.) may not be included in a bitstream. The encoder may acquire a bitstream including the syntax element related to the CCLM and the MMLM (for example, information on a threshold, information related to whether a CCLM mode is used or an MMLM mode is used, information on the number of linear models to be used for each block, etc.) when the reference line index is 0. The decoder may parse the syntax element related to the CCLM and the MMLM when the reference line index is 0. iii) The number of linear models for predicting the chroma component block may be determined on the basis of the size of the current block. For example, when the size of the horizontal length or the vertical length of the current block is smaller than a predetermined value (for example, an integer equal to or greater than 1), the decoder may predict the chroma component block by using one linear model. iv) When the size of the current block is equal to or greater than a predetermined value, the decoder may divide the current block into multiple sub-blocks, and predict the chroma component block by applying the linear model to each of the multiple sub-blocks. In this case, a template for deriving the linear model of each sub-block may include reconstructed samples of the closest neighboring blocks with reference to the corresponding sub-block. For example, as shown in FIG. 9, the current block may be divided into four sub-blocks. In this case, the decoder may derive a linear model for the first sub-block by using both the left and upper templates. The decoder may derive a linear model for the second sub-block by using the upper template. The decoder may derive a linear model for the third sub-block by using the left template. The decoder may derive a linear model for the fourth sub-block by using the upper template used to derive the linear model for the second sub-block and the left template used to derive the linear model for the third sub-block. v) The number of linear models for predicting the chroma component block may be determined on the basis of one or more of an intra prediction mode of the current luma component block, a coefficient distribution of residual blocks of the current luma component block, a quantization parameter of the current block, and whether the CCLM or the MMLM of used for the neighboring blocks. For example, when there is one or more blocks to which the MMLM is applied among the neighboring blocks of the current block, the MMLM may be also applied to the current block. In addition, when the CCLM is applied to all the neighboring blocks of the current block, the CCLM may be applied to the current block. vi) The decoder may acquire one new linear model on the basis of two linear models for the current block, which are signaled so that the MMLM is applied. That is, the decoder may make reconfigure the current block so that the CCLM mode is applied, and may predict the chroma component block by using the one new linear model. The decoder may acquire two linear models for the current block, and may acquire one new linear model on the basis of the similarity between parameter values of the two linear models. In this case, the similarity between parameter values of the two linear models may be determined on the basis of one or more of the similarity between $\alpha1$ and $\alpha2$ and the similarity between $\beta1$ and $\beta2$. When a difference between an absolute value of the similarity between $\alpha1$ and $\alpha2$ and an absolute value of the similarity between $\beta1$ and $\beta2$ is smaller than a predetermined value (for example, an integer equal to or greater than 1), the parameter values for the two linear models may be determined to be similar to each other. There are two chroma components (i.e., Cb component and Cr component), the number of the linear models for each of the two chroma components may vary.

In general, the same intra prediction directivity mode may be applied to the two chroma components. The same number of linear models may be applied to the two chroma components. To increase the encoding efficiency, an intra prediction model may be signaled to each chroma component, and the number of linear models applied to each chroma component may vary. For example, a horizontal intra prediction mode may be applied to a Cb chroma component, and a prediction mode in which two linear model are used may be applied to a Cr chroma component. In addition, information on whether an LM mode (CCLM or MMLM) is applied to two chroma components is signaled, and information on a mode between the CCLM and the MMLM to be applied to each chroma component may be additionally signaled. In addition, information on whether the MMLM is applied to both chroma components is signaled, and the video signal processing apparatus may determine the similarity between two linear models derived for each chroma component, so as to implicitly determine whether the CCLM or the MMLM is applied to each of the chroma components. In this case, additional information on each of the chroma components is not signaled, and there is an effect of reducing a bit rate.

The video signal processing apparatus may use two intra prediction directivity modes may be used in generating a luma prediction block in a TIMD mode. The TIMD encoding mode may be useful for a block, the directivity characteristics of which do not accurately exist. That is, when the TIMD mode is applied to the current block, an intra prediction mode for the chroma component block of the current block may be implicitly configured as a CCLM or MMLM mode. In this case, information on whether the CCLM or the MMLM is applied to the chroma component block of the current block may be signaled. In this case, information on whether the CCLM or the MMLM is applied to each chroma component block may be included in a bitstream and signaled. When the TIMD mode is applied to the current block, the decoder may parse information on whether the CCLM or the MMLM is applied to determine a mode applied to each chroma component block. Alternatively, information on whether the CCLM or the MMLM is applied to each chroma component block may not be separately signaled. In this case, the decoder may implicitly configure the MMLM is to be applied to each chroma component block, and reconfigure the CCLM to be applied to each chroma component block by using the above-described method (method for acquiring one new linear model on the basis of the similarity between parameter values for two linear models). Such methods may be applied to not only a block coded using a TIMD mode but also a block coded using an MIP and DIMD modes.

When the TIMD and DIMD encoding modes are applied to the current block, the decoder may generate respective prediction blocks by using two intra prediction directivity modes, and then generate a final prediction luma block by weight-averaging the respective prediction blocks. The decoder may generate a reconstructed luma block by summating the final prediction luma block and a residual block. The decoder needs to perform the CCLM or the MMLM by using the reconstructed luma block to generate the chroma component block. Such a method has a problem that the processing speed is slow as there are many processing stages. Accordingly, to enhance the processing speed, the decoder may generate a chroma block by applying the CCLM or the MMLM to the final prediction luma block rather than the reconstructed luma block. The accuracy may be reduced in the method for generating the chroma block by applying the CCLM or the MMLM to the final prediction luma block, compared to the method for generating the chroma block by applying the CCLM or the MMLM to the reconstructed luma block. Accordingly, information on whether to apply the CCLM or the MMLM to the final prediction luma block and whether to apply the CCLM or the MMLM to the reconstructed luma block may be included in a bitstream and signaled. That is, the decoder may parse information on whether to apply the CCLM or the MMLM to the final prediction luma block and whether to apply the CCLM or the MMLM to the reconstructed luma block, the information being included in the bitstream, so as to determine a block to which the CCLM or the MMLM is to be applied.

The intra prediction directivity mode applied to the chroma component block may be a derived mode or direct mode (DM), an explicit mode (EM), and a linear model (LM). The DM may be a mode in which the intra prediction directivity mode of the luma component block is used as the intra prediction directivity mode of the chroma component block. The EM may be a mode in which the intra prediction directivity mode of the chroma component block is specified as one of a planar mode, a DC mode, a horizontal mode, and a vertical mode. In the EM, the intra prediction directivity mode of the chroma component block may be configured not be identical to the intra prediction directivity mode of the luma component block. The EM may be described as a non-direct mode. The LM is a mode of predicting the chroma component block by using the linear model and the reconstructed luma component block, and may have different characteristics from the existing angular mode and none-angular mode (planar mode and DC mode).

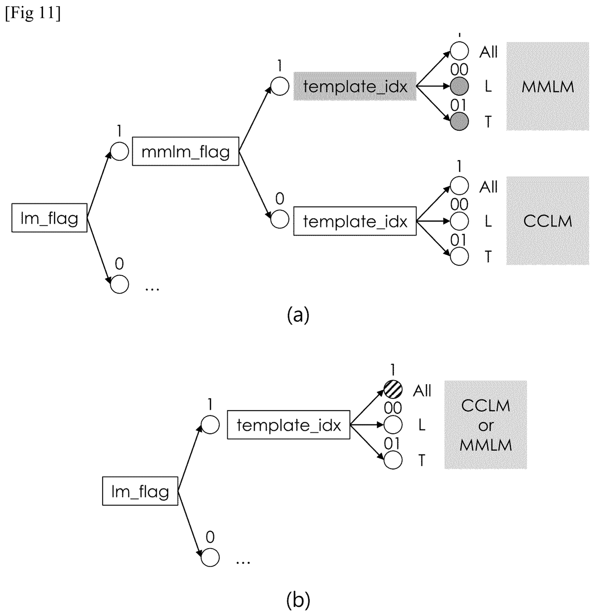

FIG. 11 illustrates a method of signaling an intra prediction directivity mode for a chroma component block according to an embodiment of the present disclosure.

Hereinafter, a method for signaling an intra prediction directivity mode for a chroma component block of a current block is described. First, whether an LM mode is applied to predict the chroma component block may be first signaled. In this case, when the LM mode is not applied to predict the chroma component block, information on whether a DM and/or an EM is applied may be signaled. When the LM is applied to predict the chroma component block, information related to whether the CCLM mode or the MMLM mode is applied to predict the chroma component block and information for deriving a linear mode may be signaled. In this case, information on a template may be information on whether the template includes left samples of the current block, includes upper samples, and includes all the left samples and the upper samples. Hereinafter, a method for signaling an intra prediction directivity mode for a chroma component block of the current block is described in more detail.

Referring to FIG. 11(a), the decoder may parse a syntax element (lm_flag) for indicating whether the LM is applied to predict the chroma component block, so as to determine whether the LM is applied to predict the chroma component block. When the value of lm_flag is 1, lm_flag may indicate the LM is applied, and when the value of lm_flag is 0, lm_flag may not indicate the LM is not applied. When lm_flag indicates that the LM is not applied to predict the chroma component block (for example, when the value of lm_flag is 0), the decoder may parse information on whether the EM and/or the DM is applied to predict the chroma component block. When lm_flag indicates that the LM mode is applied to predict the chroma component block (for example, when the value of lm_flag is 1), the decoder may parse a syntax element (mmlm_flag) indicating whether the MMLM mode is used to predict the chroma component block. When the value of mmlm_flag is 1, mmlm_flag may indicate that the MMLM mode is used, and when the value of mmlm_flag is 0, mmlm_flag may indicate that the CCLM mode is used. When mmlm_flag indicates that the MMLM mode is used to predict the chroma component block (for example, when the value of mmlm_flag is 1), the decoder may additionally parse a syntax element (template_idx) indicating a template to be used. For example, when the value of template_idx is 1, the left samples and the upper samples of the current block may be included in the template, and the video signal processing apparatus may derive a linear model by using the left samples and the upper samples of the current block. When the value of template_idx is 00, the left samples of the current block may be included in the template, and the video signal processing apparatus may derive a linear model by using only the left samples of the current block. When the value of template_idx is 01, the upper samples of the current block may be included in the template, and the video signal processing apparatus may derive a linear model by using only the upper samples of the current block. When the value of mmlm_flag is 0, mmlm_flag may indicate that the CCLM mode is used to predict the chroma component block. In this case, the video signal processing apparatus may parse template_idx to predict the chroma component block on the basis of samples indicated by template_idx.

In addition, in a case of the MMLM mode, two or more linear models are required, and thus many samples may be required. Accordingly, it may be effective to use both the left samples and the upper samples of the current block. Accordingly, the signaling method of FIG. 11(a) may be changed as follows. First, the decoder may parse lm_flag. When lm_flag indicates that the LM is not used to predict the chroma component block (for example, when the value of lm_flag is 0), the decoder may parse information on whether the EM and/or the DM is applied to predict the chroma component block. When lm_flag indicates the LM is applied to predict the chroma component block (for example, when the value of lm_flag is 1), the decoder may parse mmlm_flag. When mmlm_flag indicates that the MMLM mode is used to predict the chroma component block (for example, when the value of mmlm_flag is 1), template _idx may not be parsed, and the value of template _idx may be inferred as a value (for example, 1) indicating that the left samples and the upper samples of the current block are used to derive the linear model. This is because using the left samples and the upper samples is more efficient in the MMLM mode. When mmlm_flag indicates that the CCLM mode rather than the MMLM is applied (when the value of mmlm_flag is 0), the decoder may additionally parse template_idx. For example, when the value of template_idx is 1, the left samples and the upper samples of the current block may be included in the template, and the video signal processing apparatus may derive a linear model by using the left samples and the upper samples of the current block. When the value of template _idx is 00, the left samples of the current block may be included in the template, and the video signal processing apparatus may derive a linear model by using the left samples of the current block. When the value of template_idx is 01, the upper samples of the current block may be included in the template, the video signal processing apparatus may derive a linear model by using only the upper samples of the current block. When the value of mmlm_flag is 1, whether template_idx is parsed may be determined or the value of template_idx may be inferred as a predetermined value by using one or more of an intra prediction mode of a current luma component block, the size of a coding block, a feature of a residual block, a quantization parameter, whether the CCLM and/or the MMLM mode is used for neighboring blocks, and a reference line index. For example, when the size of the current block is smaller than a predetermined value (for example, an integer equal to or greater than 1), template _idx may not be parsed, and the value of template_idx may be inferred as a value (for example, 1) indicating that the left samples and the upper samples of the current block are used to derive a linear model.

In addition, referring to FIG. 11(b), the decoder may parse lm_flag. In this case, when lm_flag indicates that the LM is not applied (for example, when the value of lm_flag is 0), the decoder may parse information on whether the EM and/or the DM is applied. When lm_flag indicates that the LM is applied (for example, when the value of lm_flag is 1), the decoder may parse template_idx. For example, when the value of template _idx is 1, the left samples and the upper samples of the current block may be included in the template, and the video signal processing apparatus may derive a linear model by using the left samples and the upper samples of the current block. When the value of template _idx is 00, the left samples of the current block may be included in the template, and the video signal processing apparatus may derive a linear model by using only the left samples of the current block. When the value of template_idx is 01, the upper samples of the current block may be included in the template, and the video signal processing apparatus may derive a linear model by using only the upper samples of the current block. Unlike the method of FIG. 11(a), a syntax element for a mode to be used between the CCLM mode and the MMLM mode is not parsed, and the decoder may derive two linear models for the CCLM mode and the MMLM mode, and determine a mode (the CCLM mode or the MMLM mode) applied for prediction of the chroma block on the basis of the similarity between the two linear models.

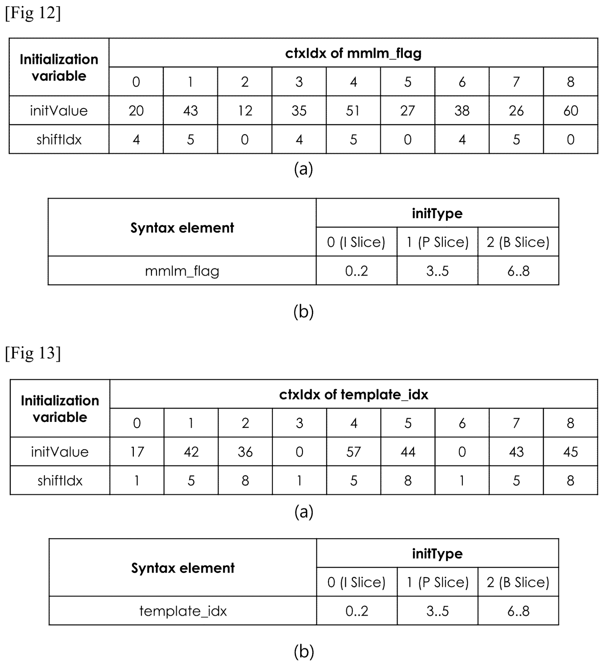

FIGS. 12 and 13 illustrate a context model according to an embodiment of the present disclosure.

mmlm_flag and template_idx may be entropy-coded using context adaptive binary arithmetic coding (CABAC). A context model for mmlm_flag and template_idx may be defined as a value (see FIGS. 12 and 13) obtained through an experiment.

initValue of FIG. 12(a) and initValue of FIG. 13(a) indicate context models for mmlm_flag and context models for template_idx, respectively. shiftIdx may be used during probability updating for mmlm_flag and template_idx. initValue may be determined according to the type of a current slice. That is, initValue may be determined according to whether the current slice is slice I, slice P, or slice B. FIGS. 12(b) and 13(b) indicate a context model which can be used according to each slice type. Referring to FIG. 12(b), an initialization type (initType) of mmlm_flag may be determined according to a current slice type, and initValue may be determined according to an initialization type. Referring to FIG. 13(b), an initialization type (initType) of template _idx may be determined according to a current slice type, and initValue may be determined according to an initialization type. For example, when the type of the current slice is slice I, the value of initType may be 0 to 2. When the current slice type is slice P, the value of initType may be 3 to 5. When the current slice type is slice B, the value of initType may be 6 to 8. The value of initType determined according to the slice type may be identical to a value of ctxIdx of mmlm_flag of FIG. 12(a), and may be identical to a value of ctxIdx of template_idx of FIG. 13(a). initValue may be determined as a value corresponding to FIGS. 12(a) and 13(a) according to the value of initType determined according to each type of the current slice.

iniType may be determined as a value for each slice type. For example, when the type of the current slice is slice I, the value of initType may be 0. When the type of the current slice is slice P, the value of iniType may be 3. When the type of the current slice may be slice B, the value of initType may be 6. initValue may be determined as a value corresponding to FIG. 12(a) according to the value of initType determined as a value according to each type of the current slice. For example, when the value of initType is 0, the value of ctxIdx of mmlm_flag may be 0, the value of initValue may be 20 according to FIG. 12(a), and the value of shiftIdx may be 4. When the value of initType is 0, the value of ctxIdx of template_idx may be 0, the value of initValue may be 17 according to FIG. 13(a), and the value of shiftIdx may be 1. When the value of initType is 3, the value of ctxIdx of mmlm_flag may be 3, the value of initValue may be 35 according to FIG. 12(a), and the value of shiftIdx may be 4. When the value of initType is 3, the value of ctxIdx of template_idx may be 3, the value of initValue may be 0 according to FIG. 13(a), and the value of shiftIdx may be 1. When the value of initType is 6, the value of ctxIdx of mmlm_flag may be 6, the value of initValue may be 38 according to FIG. 12(a), and the value of shiftIdx may be 4. When the value of initType is 6, the value of ctxIdx of template_idx may be 6, the value of initValue may be 0 according to FIG. 13(a), and the value of shiftIdx may be 1.

In addition, the use of initType according to a slice type may be selectively applied to each slice. For example, the use order of the value of initType may be changed according to the value of sh_cabac_init_flag defined in the slice header. When the value of sh_cabac_init_flag is 1 and the type of the current slice is slice P, the value of initType may be 6. When the value of sh_cabac_init_flag is 1 and the type of the current slice is slice B, the value of initType may be 3. When the value of sh_cabac_init_flag is 0 and the type of the current slice is slice P, the value of initType may be 3. When the value of sh_cabac_init_flag is 0 and the type of the current slice is slice B, the value of initType may be 6.

The video signal processing apparatus may select a symbol of mmlm_flag currently coded or parsed from among several context models on the basis of an intra prediction mode of a current luma component block, the size of the horizontal length or the vertical length of the coding block (or the ratio of the horizontal length to the vertical length, a difference between the horizontal length and the vertical length, or the like), a quantization parameter, whether the CCLM and/or the MMLM is used for neighboring blocks, a feature of a residual symbol (information on whether there is a residual signal of a luma component block and information on the location of the last transform coefficient), a movement information differential value, and a reference line index. Hereinafter, a method for selecting a symbol of mmlm_flag among several context models by a video signal processing apparatus is described.

The video signal processing apparatus may select a context index of a symbol of mmlm_flag on the basis of mmlm_flag information of neighboring blocks of the current block. The mmlm_flag information may mean a value of mmlm_flag. For example, the value of mmlm_flag may be 0 or 1, and when the value of mmlm_flag is 0, mmlm_flag may indicate that the MMLM is not used for the corresponding block, and when the value of mmlm_flag is 1, mmlm_flag may indicate that the MMLM is used for the corresponding block. For example, the context index of the mmlm_flag symbol may be determined through a sum of mmlm_flag information of the left neighboring blocks adjacent to the current block and mmlm_flag information of the upper neighboring blocks adjacent to the current block. That is, the context index may be a value of 0 to 2. In this case, when the neighboring blocks are at an unavailable locations, 0 may be added to the context index.

The video signal processing apparatus may select a context index of a symbol of mmlm_flag on the basis of the size of the current block. For example, when the size of the current block is greater than a first value, the context index may be 2, when the size of the current block is smaller than a second value, the context index may be 0, and when the size of the current block is equal to or greater than the second value and is equal to or smaller than the first value, the context index may be 1. In this case, the first value and the second value are pre-configured values, the first value may be 32 x 32, and the second value may be 16 x 16. In addition, the first value and the second value may be configured on the basis of a sum of the sizes of the horizontal length and the vertical length of the current block.

The video signal processing apparatus may select a context index of a symbol of mmlm_flag on the basis of a difference between sizes of the horizontal length and the vertical length of the current block. When the sizes of the horizontal length and the vertical length of the current block are identical to each other, the context index may be 0. When the size of the horizontal length of the current block is greater than the size of the vertical length, the context index may be 1. When the size of the horizontal length of the current block is smaller than the size of the vertical length, the context index may be 2.

The video signal processing apparatus may not perform binary arithmetic coding through a context model for mmlm_flag, and may perform bypass-type binary arithmetic coding using a fixed probability interval.

The video signal processing apparatus may perform binary arithmetic coding for mmlm_flag by using only one context model. In this case, there is only one context model each according to a slice type, thus the context model index may not be derived, and as all blocks of the slice may be used, the fixed context model may be used.

The video signal processing apparatus may select, from among several context models, a symbol of template_idx to be currently coded or parsed by using one or more of an intra prediction mode of a current luma component block, the size of the horizontal length or the vertical length of the coding block (or the ratio of the horizontal length to the vertical length, a difference between the horizontal length and the vertical length, or the like), a quantization parameter, whether the CCLM and/or the MMLM is used for neighboring blocks, a feature of a residual symbol (information on whether there is a residual signal of a luma component block and information on the location of the last transform coefficient), a movement information differential value, and a reference line index. Two bins may constitute template_idx, a context model technique may be applied to the first bin, and the bypass-type binary arithmetic coding may be performed or a fixed context model may be used for the second bin. Hereinafter, a method for selecting a symbol of template_idx from among several context models by the video signal processing apparatus is described.

The video signal processing apparatus may select a context index of a symbol of template_idx on the basis of the size of the current block. For example, when the size of the current block is greater than a first value, the context index may be 2, when the size of the current block is smaller than a second value, the context index may be 0, and when the size of the current block is equal to or greater than the second value and is equal to or smaller than the first value, the context index may be 1. In this case, the first value and the second value are pre-configured values, the first value may be 32 x 32, and the second value may be 16 x 16. In addition, the first value and the second value may be configured on the basis of a sum of the sizes of the horizontal length and the vertical length of the current block.

The video signal processing apparatus may select a context index of a symbol of template_idx on the basis of a difference between sizes of the horizontal length and the vertical length of the current block. When the sizes of the horizontal length and the vertical length of the current block are identical to each other, the context index may be 0. When the size of the horizontal length of the current block is greater than the size of the vertical length, the context index may be 1. When the size of the horizontal length of the current block is smaller than the size of the vertical length, the context index may be 2.

The video signal processing apparatus may not perform binary arithmetic coding through a context model for template_idx, and may perform bypass-type binary arithmetic coding using a fixed probability interval.

The video signal processing apparatus may perform binary arithmetic coding for template_idx by using only one context model. In this case, there is only one context model each according to a slice type, thus the context model index may not be derived, and as all blocks of the slice may be used, the fixed context model may be used.

In the LM, the reconstructed block and the linear model are used, and the LM may be applied to a block coded using an intra mode and a chroma block of the block coded using an inter mode. The inter mode is advantageous in that the processing speed is high since the dependency on neighboring blocks is low, whereas the LM is disadvantageous in that the processing speed is low since the dependency on neighboring blocks is high. Accordingly, when the LM is applied to the inter mode, the LM may not be applied to a coding mode having the low processing speed (for example, GPM, Affine, sbTMVP, BCW, PROF, BDOF, TM, MP-DMVR, OBMC, MHP, and LIC). The LM may be applied to a chroma component block coded using a coding mode (for example, Merge, MergeSkip, MMVD, AMVP, SMVD, and CIIP) having a relatively high coding processing speed for the luma component block. In this case, information on whether the LM is applied to the chroma component block may be signaled. That is, the decoder may parse information on whether the LM is applied to the chroma component block from a bitstream and determine whether the LM is applied to the chroma component block of a block coded using the inter mode.

A method for predicting a block may be largely divided into an intra prediction method using spatial correlation and an inter prediction method using temporal correlation. When the intra prediction method is applied to the current block, information related to intra prediction may be included in the bitstream, and information related to inter prediction may not be included in the bitstream. On the contrary, when the inter prediction method is applied to the current block, the information related to the inter prediction may be included in the bitstream, and the information related to the intra prediction may not be included in the bitstream. The coding information of the current block (information on whether the intra prediction method is applied or the intra prediction method is applied) may be predicted on the basis of coding information of the neighboring blocks. For example, when the intra prediction is applied to the current block, prediction for the current block may be performed on the basis of the intra prediction information of the neighboring blocks of the current block. However, in a case where all the neighboring blocks are blocks to which inter prediction is applied, there is a problem that the efficiency is reduced when the intra prediction is applied to the current block. To solve such a problem, the video signal processing apparatus may increase intra prediction efficiency of a next block to be processed, by including, in the bitstream, the intra prediction information of the neighboring blocks for which the inter prediction is performed. A method for deriving intra prediction information of the block for which inter prediction is performed may use the fact that there is high possibility that the current block has similar video characteristics to the reference block. That is, the intra prediction information of the reference block may be used as the intra prediction information of the current block.

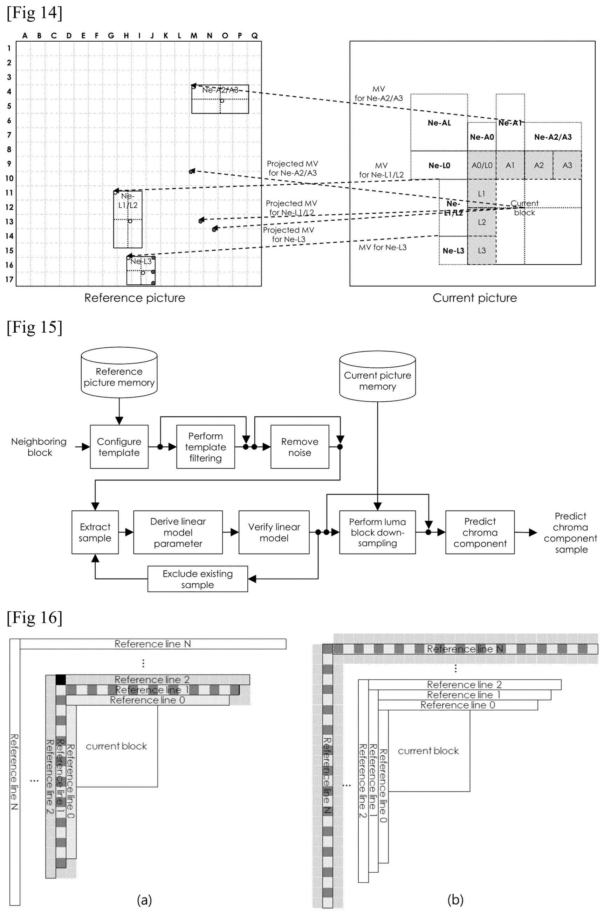

FIG. 14 illustrates a method for deriving an intra prediction mode of a current block by using neighboring blocks according to an embodiment of the present disclosure.

Referring to FIG. 14, neighboring blocks of a current block may have different sizes from each other. When the current block is coded using an intra prediction mode, a video signal processing apparatus may configure an MPM list by using the intra prediction mode of neighboring blocks of the current block, and then code the intra prediction mode for the current block by using the MPM list. When the neighboring blocks are blocks coded using inter prediction when the intra prediction mode of the neighboring blocks is derived, the video signal processing apparatus may derive the intra prediction mode of the current block from a reference picture by using movement information of the neighboring blocks. Specifically, the MPM list may include an intra prediction mode stored at the location obtained through movement by movement information of the neighboring blocks with reference to the location corresponding to the left upper pixel location of the neighboring blocks of the reference picture. For example, the intra prediction mode of neighboring block Ne-A2/A3 in FIG. 14 may be an intra prediction mode of M4 or O5 of the reference picture, and the MPM list may include a stored intra prediction mode of M4 or O5.

The intra prediction mode of the current block may be similar to the intra prediction mode of the neighboring block, and the accuracy of the intra prediction mode may further increase as the location used to derive the intra prediction mode of the neighboring block gets closer to the current block. Accordingly, the location used to derive the intra prediction mode of the neighboring block may be reconfigured as the location close to the current block. For example, the intra prediction mode of neighboring block Ne-L3 in FIG. 14 may be an intra prediction mode of J16 or J17 at the location closer to the current block than H16 or I17. In addition, the video signal processing apparatus may derive the intra prediction mode from the reference picture by projecting movement information of the neighboring block with reference to the location of the current block. For example, to derive the intra prediction mode for neighboring block Ne-A2/A3 in FIG. 14, the video signal processing apparatus may not use the intra prediction mode of M4 corresponding to the location obtained through movement by movement information of neighboring block Ne-A2/A3 with reference to the location corresponding to the left upper pixel location of neighboring block Ne-A2/A3 from the reference picture, and may derive the intra prediction mode of the location of the current block and use the same. That is, to derive the intra prediction mode for neighboring block Ne-A2/A3, the video signal processing apparatus may derive the intra prediction mode of M10 corresponding to the location obtained through movement by movement information of neighboring block Ne-A2/A3 with reference to the location corresponding to the central pixel location of the current block from the reference picture, and use the same as the intra prediction mode of neighboring block Ne-A2/A3. The derived intra prediction mode may be included in configuring the MPM list of the current block. In this case, the video signal processing apparatus may derive the intra prediction mode of the location obtained through movement by movement information of the neighboring block with reference to a predetermined location within the current block, rather than the location of the central pixel of the current block. For example, the predetermined location may be one of the left upper location, the upper central location, the right upper location, the left central location, the left lower location, the lower central location, the right lower location, and the right central location of the current block. In this case, the video signal processing apparatus may generate an intra prediction block of a corresponding sub-block by using at least one of several intra prediction modes derived using movement information of several neighboring blocks. The video signal processing apparatus may use, as an optimal intra prediction mode, one of a median value, an average value, a minimum value, and a maximum value of several intra prediction modes. The above-described method may be also applied when a chroma component block of the current block is coded using the LM. For example, the video signal processing apparatus may derive the intra prediction mode for the chroma component block of the current block from a reference picture by projecting movement information of the neighboring block with reference to the location of the current block. In this case, when the derived intra prediction mode is the LM, the video signal processing apparatus may acquire, from the reference picture, at least one of information on whether a mode among the CCLM, MMLM, the CCCM, and the GLM, applied to the neighboring block, information on samples used (left samples and upper samples), and filter coordinate information, and use the same in predicting the current chroma block. To this end, LM coding information for the corresponding chroma block needs to be all stored in the reference picture.

A CIIP mode is a method for weight-averaging each prediction block after performing both intra prediction and inter prediction for the current block. When the CIIP mode is applied to the current block, movement information of the current block is already included in a bitstream, and thus the video signal processing apparatus may use movement information of the current block when deriving the intra prediction mode from the reference picture. In this case, when the intra prediction mode of the chroma component block derived from the reference picture is one of the LM, CCLM, MMLM, CCCM, and GLM, the chroma component block of the current block may be predicted as a coding mode of the chroma component block of the reference block. In this case, to increase the processing speed for the block coded using the CIIP mode, the video signal processing apparatus may perform intra prediction and inter prediction only for the luma component block, and then weight-average and generate the prediction block, and a prediction block of the chroma component block may be generated using the chroma coding mode of the corresponding reference block. That is, the video signal processing apparatus may increase the processing speed since inter prediction does not need to be performed for the chroma component block.

The above-described method for deriving a parameter for a linear model may be used using only samples of a promised location. Accordingly, the accuracy of the linear model may vary according to the accuracy of the samples at the promised location. In general, when a video is filmed by a camera, noise may be generated in a sample at a predetermined location, and when the sample at the location at which the noise is generated is used in driving the parameter of the linear model, there is a problem that the accuracy of the linear model is reduced. Hereinafter, a method for solving this problem is described.

FIG. 15 illustrates a method for acquiring a chroma prediction block according to an embodiment of the present disclosure.

Referring to FIG. 15, a video signal processing apparatus may configure a first template including neighboring samples of a current block. The video signal processing apparatus may selectively perform low-frequency filtering among the neighboring samples within the template to make the neighboring samples be similar to one another. That is, the video signal processing apparatus may configure a second template including similar neighboring samples. Alternatively, the video signal processing apparatus may perform high-frequency filtering for the neighboring samples within the template to clearly separate noise, and then may determine a sample corresponding to a predetermined threshold or greater as noise to remove the same from the template. In this case, the sample determined as noise and thus removed may be padded using one of neighboring pixels, or may be configured as a value obtained by weight-averaging the neighboring pixels. That is, the video signal processing apparatus may configure a third template by padding the sample determined as noise and thus removed by using one of neighboring pixels, or configuring a value obtained by weight-averaging the neighboring pixels. The filtering and noise removal may be selected performed for each level of an SPS, a PPS, a PH, a slice, a tile, a CU, and a sub-block. In this case, information on whether the filter and noise removal are performed may be included in a bitstream and signaled, and a decoder may parse the information on whether the filtering and noise removal are performed, so as to determine whether to perform the filtering and noise removal. The video signal processing apparatus may derive a parameter for a linear model and acquire a first linear model on the basis of samples within the second template or the third template. The video signal processing apparatus may perform verification of the first linear model by using the samples within the first template. The video signal processing apparatus may perform verification on the basis of whether when the samples within the first template are applied to the first linear model, the samples are within a predetermined error value (for example, an integer equal to or greater than 1) and a ratio of samples within the error value to all samples within the first template is equal to or greater than a predetermined ratio (for example, a value between 0 and 1). In this case, when the ratio of the samples within the error value to all samples within the first template is smaller than the predetermined ratio, a second linear model may be derived using other samples remaining after excluding the samples used to derive the first linear model. The video signal processing apparatus may repeatedly perform the linear model deriving process to derive an nth linear model. In this case, the linear model deriving process may be repeated until the samples within the first template are all used in the deriving process or the number of remaining samples which can be used for deriving the linear model is within a predetermined number (for example, an integer equal to or greater than 1). In addition, the video signal processing apparatus may acquire a down-sampled luma component block (sample) and predict a chroma component block (sample) by performing the method described in the present disclosure.

FIG. 16 illustrates a reference area used to generate a linear model according to an embodiment of the present disclosure.

As described with reference to FIG. 9, a video signal processing apparatus may use a filter of type 1 or type 2 to generate a down-sampled luma component sample. A dark gray sample in FIG. 16 is the location at which the down-sampled luma component sample is generated, and a light gray sample indicates neighboring samples used to generate a luma component sample at the dark gray location. In this case, the gray samples may be described as the reference area. A decoder may use one or more reference lines to predict a current block. In this case, an encoder may generate a bitstream including information on a line to be used among the one or more reference lines. In this case, such information on a line to be used may be an index of the reference line. The decoder may predict a current block by using a reference line corresponding to an index acquired by parsing the information on a line to be used. When the reference line used for prediction of the current block is a line adjacent to the current block, the decoder may use the reference area in FIG. 16(a) to derive a linear model for prediction a chroma component sample. In this case, the line adjacent to the current block may be a line spaced apart from the current block by n samples. In this case, n is an integer equal to or greater than 1, and may be 3. That is, referring to FIG. 16(a), samples on the reference lines (reference lines 0, 1, and 2) corresponding to indices 0, 1, and 2 may be a reference area (when n is 3). When the reference line used for prediction of the current block is a line not being adjacent to the current block, the decoder may use a reference area in FIG. 16(b) to derive a linear model for predicting the chroma component sample. In this case, the line not being adjacent to the current block may be a line after a line spaced apart from the current block by k samples. In this case, k is an integer equal to or greater than 1, and may be 3. That is, referring to FIG. 16(b), samples on a reference line after the reference line (reference line 2) corresponding to index 2 may be a reference area (when k is 3).

The video signal processing apparatus may derive (use) two linear models when predicting the chroma component sample through the MMLM method. In this case, the video signal processing apparatus may derive a first linear model by using the reference area of FIG. 16(a), and derive a second linear model by using the reference area of FIG. 16(b). When the above-described information on a line to be used does not indicate an index of a line adjacent to the current block (for example, indicates an index greater than 1), linear models may be derived from different reference areas.

A linear model derived when the sample used to derive a linear model used to predict a chroma component sample gets closer to the current block may well present characteristics of the current block. Accordingly, a more effective linear model may be derived when the samples adjacent to the current block are used. When the sample used to predict the luma component sample for the current block is a sample on a line not being adjacent to the current block, noise may not be included. Due to such noise, the decoder may not be able to derive an effective linear model. That is, the decoder may determine whether the CCLM, the MMLM, the GLM, the CCCM, or the like is used or activated according to a line of a reference sample used to predict the luma component sample for the current block. For example, the decoder may not use the CCLM, MMM, CLM, CCCM, or the like to predict a current block when the index of the line of the sample used to predict the luma component sample for the current block is greater than a predetermined value (for example, 3 corresponding to an integer equal to or greater than 1). That is, syntax related to the CCLM, MMLM, GLM, and CCCM may not be parsed, and the syntax related to the CCLM, MMLM, GLM, and CCCM may be inferred to indicate that the CCLM, MMLM, GLM, and CCCM are not used or not activated. The syntax may be inferred (implied) not to be parsed or not to used.

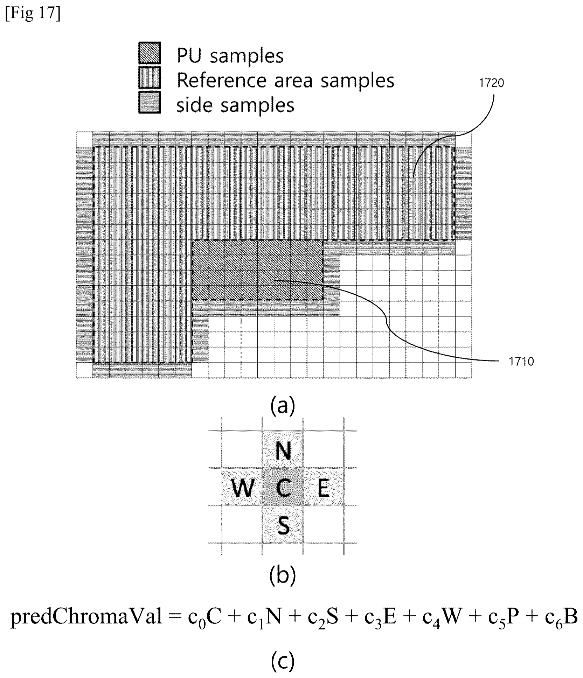

FIGS. 17A to 17C are diagrams illustrating examples of a reference area and a filter form used for deriving a CCCM parameter according to an embodiment of the disclosure.

A convolutional cross-component intra prediction model (CCCM) is a method of predicting a chroma signal using a non-linear model configured using high correlation between a luma signal and a chroma signal in the same location as that of the luma signal. FIG. 17A illustrates a location relationship between side samples (horizontal line) needed for applying a cross-shape filter and reference samples (vertical line) 1720 for applying the CCCM to a current prediction block (oblique line) 1710. The current prediction block (MxN) may be configured using top 6 lines of reference samples (2Mx6), left 6 lines of reference signals (6x2N), and top-left 6X6 reference samples in the relationship in which ratio of the number of chroma samples to the number of luma samples is 1:1. Even when the video signal processing device applies a cross-shape sample (FIG. 17B) filter to a chroma sample prediction relational expression (FIG. 17C) for the CCCM, deviation from a reference sample area may occur. In this instance, additionally needed samples may be side samples. The chroma sample prediction relational expression of FIG. 17C may be applied to each chroma component (i.e., Cb, Cr). A sample at the location of center (C) of FIG. 17B may be a luma sample corresponding to Cb and Cr chroma samples, and north (N), east (E), south (S), and west (W) may be luma samples adjacent to the luma sample of the location of C. Depending on the location of sample C, one side sample may be additionally needed for each area other than the reference sample. When a sample value existing in the location of a side sample is not available, the sample value in the unavailable location may be padded with a sample C value. The value of P in FIG. 17C may be a nonlinear term. The value of P may be calculated as $P = ( C*C + midVal ) >> bitDepth$, and in the case of 10-bit content, $P = ( C*C + 512 ) >> 10$. The value of B in FIG. 17C may be a bias value, and may be an integer offset value. The value of B may be a median value of bit Depth (bit depth). In the case of 10-bit content, the value of B may be 512.

7 coefficients $(c_1, c_2, ..., c_6)$ in FIG. 17C may be obtained using luma and chroma samples in the reference sample area. In this instance, the 7 coefficients may be obtained using a process of minimizing a mean square error (MSE) value of a cross-correlation vector for a luma input value and a chroma output value and an autocorrelation matrix for the luma input value. The autocorrelation matrix may be obtained via LDL decomposition or Cholesky decomposition. In addition, the 7 coefficients may be obtained using backward substitution (back-substitution). The value of B in FIG. 17C may be defined as an average value for each chroma component, or may be defined as a difference (or the absolute value of a difference) between an average value of luma samples of all reference samples and the average value for each chroma component.

As the value of P in FIG. 17C, a value described below may be used instead of the above-described value. i) The value of P may be $P = ( Cg*Cg + midVal ) >> bitDepth$. In this instance, Cg may be a gradient value at the location C of FIG. 17B. midVal may be a median value of a bit depth. In the case of 10-bit content, midVal may be 512. ii) The value of P may be an average value of gradient values of reference samples. iii) The value of P may be an average value of gradient values of the locations C, N, W, E, and S of FIG. 17B. iv) The value of P may be $P=(meanG*meanG+bitDepth>>1)>>bitdepth$. meanG may be an average value of gradient values of reference samples.

In addition, as C, N, S, E, W, and P of FIG. 17C, values described below may be used instead of the above-described values. Instead of the values of C, N, S, E, W, and P described above, the values of C', N', S', E', W', and P' may be used, respectively.

$C'= C-meanY$, $N'=N-meanY$, $S'=S-meanY$, $E'=E-meanY$, $W'=W-meanY$, $P'=P-meanNonlinY$

In this instance, meanY may be an average value of lumas in the reference sample area. meanNonlinY may be $meanNonlinY = (meanY * meanY) >> bitdepth$, or $meanNonlinY = (meanY * meanY + bitdepth>>1) >> bitdepth$.

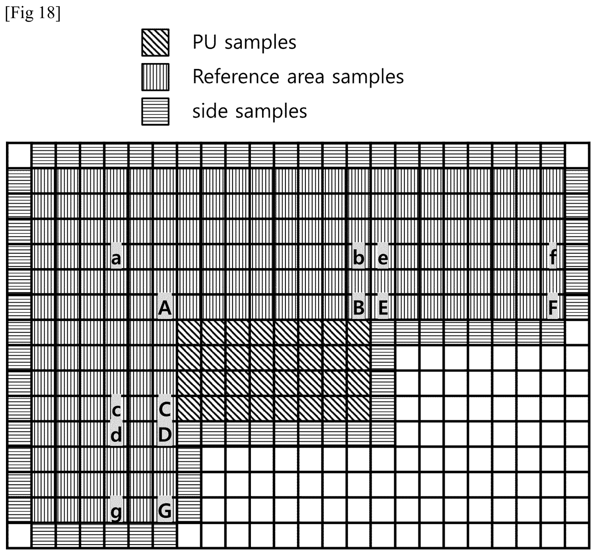

FIG. 18 is a diagram illustrating samples used for deriving a CCCM parameter according to an embodiment of the disclosure.

A video signal processing device may use only samples in a predetermined location in order to obtain meanY and meanChroma. The video signal processing device may calculate meanY and meanChroma by using at least one of the samples at locations A, B, C, D, E, F, G, a, b, c, d, e, f, and g of FIG. 18. In addition, samples to be used may be different based on a template form used in the CCCM. For example, the template used in the CCCM may include a top side template that uses only pixels on the top of a current block and a left-side template that uses only pixels on the left of the current block, in addition to the template of FIG. 17A. In the case in which the top side template that uses only the top side pixels of the current block exists, when applying the CCCM to the current block, the video signal processing device may calculate meanY and meanChroma by using at least one of the samples in locations B, E, F, b, e, and f of the top side template.

FIG. 17C may be expressed as shown in Equations 7 and 8 using C', N', S' ,W', and P'.

[Equation 7]

$$predChromaVal = c0C' + c1N' + c2S' + c3E' + c4W' + c5P' + c6B' + meanChroma$$

[Equation 8]

$$predChromaVal = c0C' + c1N' + c2S' + c3E' + c4W' + c5P' + meanChroma$$

B' of Equation 7 may be a difference (or a difference in absolute values) between an average value of luma samples in the reference sample and an average value for each chroma component. meanChroma in each of Equations 7 and 8 may be an average value for each chroma sample (Cb, Cr) in the reference sample area.

The coefficients of luma samples used in Equation 8 may use a combination of 5 luma location samples, and the number of coefficients needed may be changed based on the number of lumas used. In this instance, the luma locations and the number of coefficients may be configured in advance.

The luma sample values or the modified luma sample values (i.e., C, N, S, E, W, C', N', S', E', and W') in Equation 7 of FIG. 17C may be replaced with gradient values.

In the CCCM, the autocorrelation matrix may be calculated using reconfigured values of luma and chroma samples. In this instance, the luma and chroma samples are in the entire range (in the range of 0 to 1023 in the case of 10-bit content), and thus an autocorrelation matrix value may be relatively high. Therefore, to obtain coefficients, a calculation process in a high bit depth may be required, which is a drawback. Therefore, a method of differencing meanY and meanNonlinY may be a method for solving the problem. However, a method of differencing average values may need to calculate average values, and an additional pipeline step is needed, and thus complexity of implementation may be increased, which is a drawback. To remedy the drawback, the specification proposes a method of subtracting a predefined fixed value from luma and chroma samples for each model, decreasing the size of a value used for model generation, and decreasing the accuracy needed for fixed-point arithmetic. Accordingly, 16-bit fractional precision may be used, instead of 22-bit precision used for the original implementation of the CCCM.

Sample values (i.e., luma and chroma in a reference area, luma of current PU) used for model generation and final prediction in the relational expression of FIG. 17C may be decreased by a fixed value as shown below.

$$C' = C - offsetLuma$$

$$N' = N - offsetLuma$$

$$S' = S - offsetLuma$$

$$E' = E - offsetLuma$$

$$W' = W - offsetLuma$$

$$P' = nonLinear(C')$$

$$B = midValue = 1 << (bitDepth - 1)$$

A chroma value is predicted using Equation 9 given below. In this instance, offsetChroma may be offsetCr in the case of a Cr component, and may be offsetCb in the case of a Cb component. A pixel value at location A of FIG. 18 may be used as an offset (offsetLuma, offsetCb, and offsetCr) for simplification.

[Equation 9]

$$predChromaVal = c0C' + c1N' + c2S' + c3E' + c4W' + c5P' + c6B + offsetChroma$$

When the pixel value of location A of FIG. 18, which may be used as an offsetLuma value, is 0, a differencing process does not exist, and thus calculation in a high bit depth is needed again, which is a drawback. In the disclosure, a method for overcoming the problem will be described.

When the pixel value at location A in FIG. 18, which may be used as an offsetLuma value, is less than a predefined first value or greater than a predefined second value, the video signal processing device may use values (offset value) predetermined as offsetLuma, offsetCr, and offsetCb. In this instance, the predetermined first and second values may be integers greater than or equal to 1. In this instance, the predetermined first and second values may be determined based on a bit depth. For example, when the bit depth is 10 bits, the predetermined first value and second value may be 0, 128, 256, 512, 768, 1023, or the like. Alternatively, the predetermined values may be integers and may be determined based on a bit depth. For example, when the bit depth is 10 bits, the predetermined values may be -256, - 128, 0, 128, 256, or the like.

When the pixel value of location A of FIG. 18 is less than the predetermined first value or greater than the predetermined second value, the video signal processing device may sequentially search for the samples in locations B, C, D, E, F, G, a, b, c, d, e, f, and g of FIG. 18, may check whether the sample in the corresponding location is within a valid range, and if it is, may use a sample value in the corresponding location as the offsetLuma, offsetCr, or offsetCb value. In this instance, the valid range may be a predefined range. For example, when the value of the sample is greater than a predefined integer, the video signal processing device may determine that the sample is valid. The predefined integer may be determined based on a bit depth, and for example, may be 128, 256, or the like when the bit depth is 10 bits.

An encoder may sequentially search for samples in locations A, B, C, D, E, F, G, a, b, c, d, e, f, and g of FIG. 18, may check whether the sample in the corresponding location is in a valid range, may apply the CCCM to the current block using all sample values in the valid range, and may perform signaling by including information associated with the most optimal sample location in a bitstream. A decoder may parse the information associated with the most optimal sample location, and may configure the offsetLuma, offsetCr, or offsetCb value to be used for performing the CCCM for the current block based on a sample in the determined optimal sample location.

When the pixel value of location A of FIG. 18 is less than the predefined first value or greater than the predefined second value, the encoder may not use the CCCM for encoding a current chroma block, and may not include information related to the CCCM in a bitstream. When the pixel value of location A of FIG. 18 is less than the predefined first value or greater than the predefined second value, the decoder may not parse the information related to the CCCM. That is, the decoder may infer (imply) the value of syntax related to the CCCM to be 0, or may perform configuration not to use the syntax related to the CCCM.

When all of the pixel values of the locations A, B, C, D, E, F, G, a, b, c, d, e, f, and g of FIG. 18 are less than the predefined first value or greater than the predefined second value, the encoder may not use the CCCM for encoding the current chroma block, and may not include information related to the CCCM in a bitstream. When all of the pixel values of the locations A, B, C, D, E, F, G, a, b, c, d, e, f, and g of FIG. 18 are less than the predefined first value or greater than the predefined second value, the decoder may not parse the information related to the CCCM. That is, the decoder may infer (imply) the value of syntax related to the CCCM to be 0, or may perform configuration not to use the syntax related to the CCCM.

The above-described method of checking whether the samples in the locations A, B, C, D, E, F, G, a, b, c, d, e, f, and g of FIG. 18 are in the valid range may have different sample locations for which search is to be performed, based on a template form used in the CCCM. For example, in the case in which the template used in the CCCM includes a top-side template that only uses pixels on the top side of the current block and a left-side template that only uses pixels on the left of the current block, in addition to the template of FIG. 17A, when the top-side template is used for applying the CCCM to the current block, the video signal processing device may sequentially search for the samples in the locations B, E, F, b, e, and f in the top-side template, may check whether the sample in the corresponding location is in the valid range, and if it is, may use the sample value in the corresponding location as the offsetLuma, offsetCr, or offsetCb value.

When checking whether the samples in the locations A, B, C, D, E, F, G, a, b, c, d, e, f, and g of FIG. 18 are in the valid range, the video signal processing device may configure the valid range by using at least one of a minimum value, median value, maximum value, and average value of neighboring samples adjacent to the current block.

When the pixel value of the location A of FIG. 18 is less than the predefined first value or greater than the predefined second value, the encoder may not use at least one of the CCLM, MMLM, GLM, and CCCM used for encoding the current chroma block. The encoder may not include, in a bitstream, information related to at least one of the CCLM, MMLM, GLM, and CCCM. When the pixel value of location A of FIG. 18 is less than the predefined first value or greater than the predefined second value, the decoder may not parse the information related to at least one of the CCLM, MMLM, GLM, and CCCM, and may infer (imply) the information (e.g., syntax element) related to the CCLM, MMLM, GLM, and CCCM to be 0. The decoder may perform configuration not to use the information related to the CCLM, MMLM, GLM, and CCCM.

In the case of applying the MMLM, the video signal processing device may configure, as a first threshold value, an average value of luma samples of a neighboring block of the current block, may derive two linear models via the neighboring block using the first threshold value, and may derive a corresponding chroma sample with respect to each luma sample of the current block by using one linear model based on the first threshold value. When the MMLM is applied, the chroma sample of the current block may be derived by using one linear model for the corresponding luma sample. When a difference between the luma sample of the current block and the first threshold value is small, using two linear models may be more effective than using one linear model.

The video signal processing device may compare a luma sample of the current block and a predetermined number of luma samples adjacent to the luma sample of the current block with the first threshold value, and may predict a chroma sample corresponding to the luma sample of the current block by using at least one from among the number of luma samples of the current block belonging to a first linear model and a second linear model, a difference between the luma sample of the current block and the first threshold value, the first linear model, the second linear model, a weight for the first linear model, and a weight for the second linear model. The first linear model and the second linear model may be linear models derived using the first threshold value. The first threshold value may be an integer greater than or equal to 1, and may be an average value of reconstructed luma samples adjacent to the current block. When the luma sample of the current block is smaller than the first threshold value, the video signal processing device may determine that the luma sample of the current block belongs to the first linear model, and when the luma sample of the current block is greater than or equal to the first threshold value, the video signal processing device may determine that the luma sample of the current block belongs to the second linear model.

In addition, a count number belonging to a linear model described in the disclosure may mean the number of luma samples in the linear model, as described above.

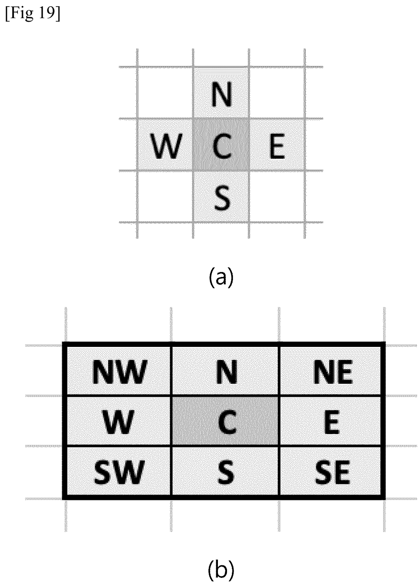

FIGS. 19A and 19B are diagrams illustrating luma samples adjacent to a luma sample of a current block according to an embodiment of the disclosure.

FIG. 19A illustrates 4 luma samples adjacent to the current block, and FIG. 19B illustrates 8 luma samples adjacent to the current block.

A video signal processing device may compare a luma sample of the current block and a predetermined number of luma samples (FIGS. 19A, 19B) adjacent to the luma sample of the current block with a first threshold value, and may calculate count numbers belonging to a first linear model and a second linear model. When the count number of the first linear model is greater than or equal to a predefined first value, a chroma sample corresponding to the luma sample of the current block may be predicted using only the first linear model. When the count number of the second linear model is greater than or equal to the predefined first value, the chroma sample corresponding to the luma sample of the current block may be predicted using only the second linear model. The predefined first value may be 6. When the count number of the first linear model is greater than the count number of the second linear model, the video signal processing device may configure a first weight for the first linear model and may configure a second weight for the second linear model. The video signal processing device may calculate a weighted average value by using the first weight and the second weight respectively for a first chroma sample derived using the first linear model and a second chroma sample derived using the second linear model, and may finally derive a chroma sample corresponding to the luma sample of the current block. When the count number of the first linear model is less than or equal to the count number of the second linear model, the video signal processing device may configure the first weight for the second linear model and may configure the second weight for the first linear model. The video signal processing device may calculate a weighted average value by using the second weight and the first weight respectively for the first chroma sample derived using the first linear model and the second chroma sample derived using the second linear model, and may finally derive a chroma sample corresponding to the luma sample of the current block. The first weight may be 13, and the second weight may be 3. In this instance, a weighted average between sample values A and B may be calculated according to (A * first weight + B * second weight) >> Shift. The value of Shift may be determined based on the first weight and the second weight. The value of Shift may be a value obtained by converting the sum of the first weight and the second weight into a binary number, and subtracting 1 from N that is the number of bits of the binary number. For example, when the first weight is 13 and the second weight is 3, the sum of the weights is 16. The sum of weights, which is 16, is converted into a binary number of 10000, and the number of bits of the binary number is 5, and thus, the value of Shift is 4. Accordingly, in the case of calculating the weighted average value of the sample values A and B, the weighted average value may be reconstructed again to a bit depth of the sample values.

Based on a difference between the luma sample of the current block with the first threshold value, a second threshold value, or a third threshold value, the video signal processing device may derive a chroma sample using only the first linear model, may derive a chroma sample using only the second liner model, or may derive a chroma sample via a weighted average value by using both the first linear model and the second linear model. The second threshold value and the third threshold value may be predetermined values which are integers greater than or equal to 1.

For example, when the difference between the luma sample of the current block and the first threshold value is greater than the second threshold value, the video signal processing device may compare the luma sample of the current block with the first threshold value. In this instance, when the luma sample of the current block is greater than the first threshold value, a chroma sample corresponding to the luma sample of the current block may be predicted using the second linear model. When the luma sample of the current block is less than or equal to the first threshold value, a chroma sample corresponding to the luma sample of the current block may be predicted using the first linear model.

When the difference between the luma sample of the current block and the first threshold value is less than or equal to the second threshold value, and the difference between the luma sample of the current block and the first threshold value is less than the third threshold value, the video signal processing device may configure the third weight for the first linear model and may configure a fourth weight for the second linear model. The video signal processing device may calculate a weighted average value by using the third weight and the fourth weight respectively for the first chroma sample derived using the first linear model and the second chroma sample derived using the second linear model, and may finally derive a chroma sample corresponding to the luma sample of the current block. The third weight may be 1 and the fourth weight may be 1.

When the difference between the luma sample of the current block and the first threshold value is greater than or equal to the third threshold value, the video signal processing device may compare the luma sample of the current block with the first threshold value. When the luma sample of the current block is less than or equal to the first threshold value, the video signal processing device may configure the first weight for the first linear model, and may configure the second weight for the second linear model. The video signal processing device may calculate a weighted average value by using the first weight and the second weight respectively for the first chroma sample derived using the first linear model and the second chroma sample derived using the second linear model, and may finally derive a chroma sample corresponding to the luma sample of the current block. When the luma sample of the current block is greater than the first threshold value, the video signal processing device may configure the first weight for the second linear model, and may configure the second weight for the first linear model. The video signal processing device may calculate a weighted average value by using the second weight and the first weight respectively for the first chroma sample derived using the first linear model and the second chroma sample derived using the second linear model, and may finally derive a chroma sample corresponding to the luma sample of the current block. The first weight may be 13 and the second weight may be 3.

The video signal processing device may derive a chroma sample corresponding to the luma sample of the current block by using at least one from among a linear model derived based on a neighboring block of the current block and two linear models derived based on an average value of the neighboring block of the current block.

The video signal processing device may calculate count numbers belonging to a first linear model and a second linear model by comparing the luma sample of the current block and luma samples (e.g., samples of FIG. 19B) adjacent to the luma sample of the current block with a first threshold value. When the count number of the first linear model is greater than or equal to a predefined first value, a chroma sample corresponding to the luma sample of the current block may be predicted using only the first linear model. When the count number of the second linear model is greater than or equal to the predefined first value, a chroma sample corresponding to the luma sample of the current block may be predicted using only the second linear model. The predefined first value may be 6. When the count number of the first linear model is greater than the count number of the second linear model, the video signal processing device may configure the first weight for the first linear model and may configure a second weight for a third linear model. The video signal processing device may calculate a weighted average value by using the first weight for a first chroma sample derived using the first linear model and using the second weight for a second chroma sample derived using the third linear model, and may finally derive a chroma sample corresponding to the luma sample of the current block. When the count number of the first linear model is less than or equal to the count number of the second linear model, the video signal processing device may configure the first weight for the second linear model and may configure the second weight for the third linear model. The video signal processing device may calculate a weighted average value by using the first weight and the second weight respectively for the first chroma sample derived using the second linear model and the second chroma sample derived using the third linear model, and may finally derive a chroma sample corresponding to the luma sample of the current block. The first weight may be 13 and the second weight may be 3.

Based on a difference between the luma sample of the current block with the first threshold value, a second threshold value, or a third threshold value, the video signal processing device may determine whether to derive a chroma sample using only the first linear model, whether to derive a chroma sample using only the second liner model, or whether to derive a chroma sample via a weighted average value by using at least one of the first linear model, the second linear model, and the second linear model.

When the difference between the luma sample of the current block and the first threshold value is greater than the second threshold value, the video signal processing device may compare the luma sample of the current block with the first threshold value. When the luma sample of the current block is greater than the first threshold value, a chroma sample corresponding to the luma sample of the current block may be predicted using the second linear model. When the luma sample of the current block is less than or equal to the first threshold value, a chroma sample corresponding to the luma sample of the current block may be predicted using the first linear model. When the difference between the luma sample of the current block and the first threshold value is less than or equal to the second threshold value, and the difference between the luma sample of the current block and the first threshold value is less than the third threshold value, the video signal processing device may configure the third weight for the first linear model, may configure a fourth weight for the second linear model, and may configure a fifth weight for the third linear model. The video signal processing device may calculate a weighted average value by using the third weight and the fourth weight respectively for a first chroma sample derived using the first linear model, a second chroma sample derived using the second linear model, and a third chroma sample derived using the third linear model, and may finally derive a chroma sample corresponding to the luma sample of the current block. The third weight may be 1, the fourth weight may be 1, and the fifth weight may be 1.

When the difference between the luma sample of the current block and the first threshold value is greater than or equal to the third threshold value, the video signal processing device may compare the luma sample of the current block with the first threshold value. When the luma sample of the current block is less than or equal to the first threshold value, the video signal processing device may configure the first weight for the first linear model and configure the second weight for the third linear model, may derive a first chroma sample using the first linear model and a second chroma sample using the third linear model, may calculate a weighted average value using the first weight for the first chroma sample and the second weight for the second chroma sample, and may finally derive a chroma sample corresponding to the luma sample of the current block. When the luma sample of the current block is greater than the first threshold value, the video signal processing device may configure the first weight for the second linear model, and may configure the second weight for the third linear model. The video signal processing device may calculate a weighted average value by using the first weight and the second weight respectively for a first chroma sample derived using the second linear model and a second chroma samples derived using the third linear model, and may finally derive a chroma sample corresponding to the luma sample of the current block. The first weight may be 13 and the second weight may be 3.

Chroma fusion (CF) may be a method of deriving it using a weighted average of a current luma block (rec'L) and a chroma block (pred'C) predicted via a general intra prediction mode, without using a linear model (LM) mode, as shown in Equation 10. In this instance, a weight parameter (a0, a1, a2) may be derived using the CCCM scheme. A median value (midValue) may be calculated to be "1 << (bitDepth - 1)." In addition, an encoder may obtain a bitstream including information associated with whether to use one CCCM model or two CCCM models, and may perform signaling. When a current chroma block is encoded in a CF mode, a decoder may parse information associated with the number of CCCM models to be used, and may use the same for predicting the current chroma block.

[Equation 10]

$$pred(i,j) = \alpha_0 \cdot rec'_L(i,j) + \alpha_1 \cdot pred'_C(i,j) + \alpha_2 \cdot midValue$$

A gradient and location based convolutional cross-component model (GL-CCCM) is an additional CCCM mode that uses gradient and location information. The existing CCCM mode may be a mode for deriving a chroma sample for a current block by using a luma sample in a corresponding location of a location of the chroma sample to be predicted and 4 samples (e.g., samples of FIG. 19A) adjacent to the luma sample, and coefficient information. In this instance, as illustrated in FIG. 19B, the GL-CCCM mode may be a mode that derives a chroma sample for the current block by applying vertical and horizontal differences (Gx, Gy in Equation 11) between the luma sample in the corresponding location of the location of the chroma sample to be predicted and 8 samples adjacent to the luma sample, and using a location value (e.g., X, Y in Equation 11) of the current luma sample and coefficient information thereof. In this instance, as the location value of the current luma sample, a value recalculated using a top-left location of a reference template used for deriving the CCCM mode, a top-left location of the current block, a relative location of a current pixel when the top-left location of the current block is (0,0), a predefined offset value, and a predefined shift value may be used. In this instance, the location value of the current luma sample may be calculated using (relative location value of current pixel + difference between top-left location of current block and top-left location of reference template used for deriving CCCM model + predefined offset value) << predefined shift value) when the top-left location of the current block is (0,0).

In this instance, the predefined offset value may be an integer, and may be 8. In this instance, the predefined shift value may be an integer, and may be 3. In addition, Gx and Gy may be calculated via Equation 12 using the samples of FIG. 19B.

[Equation 11]

$$predChromaVal = c_0C + \underline{c_1G_y + c_2G_x + c_3Y + c_4X} + c_5P + c_6B$$

[Equation 12]

$$G_y = (2N + NW + NE) - (2S + SW + SE)$$

$$G_x = (2W + NW + SW) - (2E + NE + SE)$$

The coefficient information (or weight parameter information) may be derived using a predetermined area of an already reconstructed neighboring block adjacent to the current block. In addition, the encoder may perform signaling of a bitstream including information associated with whether the GL-CCCM is used for the current block. The decoder may parse the information associated with whether the GL-CCCM is used for the current block, and may determine whether to apply the GL-CCCM to the current block so as to predict a chroma block.

As the luma samples used for calculating the vertical and horizontal differences of the luma sample in the GL-CCCM, neighboring luma samples a predetermined distance (sample) away from the current sample in addition to luma samples adjacent to the current luma sample may be used. In this instance, the predetermined distance may be 1, 2, 3, 4, or the like.

In an LM mode that predicts a current chroma block using a reconstructed current luma block, the video signal processing device may apply a downsampling filter to the luma block so as to make the resolution of the luma block to be equal to the resolution of the chroma block. This is because there is a difference in resolution between the luma block and chroma block. The downsampling may reduce edge component information of the luma block. Therefore, a chroma block may be predicted using samples of the luma block before being downsampled.

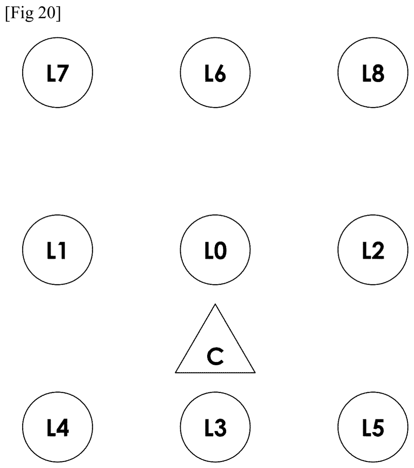

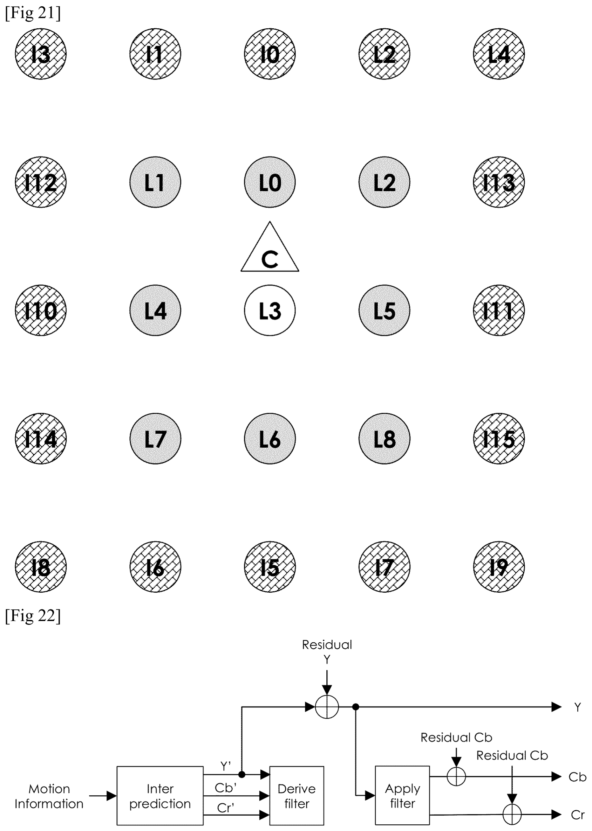

FIGS. 20 and 21 are diagrams illustrating luma samples before being downsampled, which are to be used for deriving a chroma sample in a CCCM-ND mode according to an embodiment of the disclosure.

The CCCM using non-downsampled luma samples (CCCM-ND) mode may be a method of predicting a chroma block by using samples of a luma block before being downsampled. FIG. 20 illustrates location C of a chroma sample to be predicted by the video signal in the CCCM-ND mode, and 6 luma sample locations corresponding to the chroma sample location. In this instance, the luma samples may be samples before being downsampled. The chroma sample may be calculated according to Equation 13. The chroma sample may be calculated using a linear model that uses 6 luma samples (samples at L0, L1, L2, L3, L4, and L5 of FIG. 20) and a non-linear model that uses 4 luma samples (samples at L0, L3, L2, L1 of FIG. 20). offsetLuma and offsetchroma in Equation 13 mean the same as the above-described difference values. B may be calculated to be "1 << (bitDepth - 1)." To derive coefficients (a0 ~ a10), an LDL decomposition scheme used in the CCCM may be used.

$$[\text{Equation 13}]$$

$$C = \sum_{i=0}^{5} \alpha_i \cdot (L_i - \text{offsetLuma}) + \sum_{i=6}^{9} \alpha_i \cdot \left( \left( (L_{i-6} - \text{offsetLuma})^2 + \beta \right) \gg bitDepth \right) + \alpha_{10} \cdot \beta + \text{offsetChroma}$$

An encoder may perform signaling of a bitstream including information associated with whether the CCCM-ND is used for a current block. A decoder may parse the corresponding information and configure whether the CCCM-ND is applied to the current block.

When the CCCM-ND is applied to the current block, the encoder may not include information associated with a GL-CCCM in the bitstream. When the CCCM-ND is applied to the current block, the decoder may not parse information related to a GL-CCCM, and may perform configuration such that the GL-CCCM is not applied to the current block.

When the GL-CCCM is applied to the current block, the video signal processing device may derive a model for the GL-CCCM by using a downsampled luma sample, and may predict a chroma sample for the current block using the downsampled luma sample of the current block. In this instance, as in the CCCM-ND, a luma sample before being downsampled may be also used for the GL-CCCM to derive a model or predict a chroma sample.

[Equation 14]

$$C = \sum_{i=0}^{5} \alpha_i \cdot (L_i - \text{offsetLuma}) + \sum_{i=6}^{9} \alpha_i \cdot \left( \left( (L_{i-6} - \text{offsetLuma})^2 + \beta \right) \gg bitDepth \right) + a_{10}G_y + a_{11}G_x + a_{12}Y + a_{13}X + \alpha_{14} \cdot \beta + \text{offsetChroma}$$

The chroma sample may be calculated (predicted) according to Equation 14. The video signal processing device may derive the chroma sample for the current block by applying a linear model that uses 6 luma samples (luma samples at L0, L1, L2, L3, L4, and L5 of FIG. 20) and a non-linear model that uses 4 luma samples (luma samples at L0, L3, L2, and L1 of FIG. 20), and vertical and horizontal differences (Gx, Gy in Equation 14) between a luma sample in a location corresponding to the location of the chroma sample to be predicted and samples adjacent to the luma sample (luma samples at L1 to L8 of FIG. 20), and by using a location value (X, Y in Equation 14) of the current luma sample and coefficient information. In this instance, the video signal processing device may calculate Gx and Gy using the samples of FIG. 20 via 15. offsetLuma and offsetchroma in Equation 15 mean the same as the above-described difference values. B may be calculated to be "1 << (bitDepth - 1)." To derive coefficients (a0 ~ a14), an LDL decomposition scheme used in the CCCM may be used.

[Equation 15]

$$G_y = (2L6 + L7 + L8) - (2L3 + L4 + L5)$$
$$G_x = (2L1 + L7 + L4) - (2L2 + L8 + L5)$$

To predict the chroma sample, the video signal processing device may use luma samples (e.g., L6, L7 and L8 located in the lower side of the current chroma sample) of FIG. 21, instead of the luma samples of FIG. 20.

For the CCCM-ND, the video signal processing device may use luma samples a predetermined (sample) distant away from the current chroma sample, in addition to a luma sample adjacent to the luma sample corresponding to the current chroma sample. For example, the video signal processing device may use samples located at L0 to L8 of FIG. 21 when the predetermined distance is 1, and may use at least one of luma samples located at L0 to L8 and I0 to I15 of FIG. 21 when the predetermined distance is 2.

When predicting the chroma clock using a luma block of the current block, the video signal processing device may selectively apply the GL-CCCM and the CCCM-ND. That is, when predicting the chroma block, the video signal processing device may select whether to use the GL-CCCM mode, or to use the CCCM-ND mode, or to use both the GL-CCCM mode and the CCCM-ND mode.

When the GL-CCCM mode is used to predict the chroma block using the luma block of the current block, the encoder may configure a value of information related to the CCCM-ND mode to 0 (i.e., CCCM-ND mode is not used) and may configure a value of information related to the GL-CCCM mode to 1 (i.e., GL-CCCM mode is used), and may perform signaling of a bitstream including the configuration. The decoder may parse the information related to the CCCM-ND mode and the information related to the GL-CCCM mode, and may determine the GL-CCCM mode to be a mode to be used for predicting the chroma block of the current block.

When the CCCM-ND mode is used to predict the chroma block using the luma block of the current block, the encoder may configure the value of the information related to the CCCM-ND mode to 1 (i.e., CCCM-ND mode is used) and may configure the value of the information related to the GL-CCCM mode to 0 (i.e., GL-CCCM mode is not used), and may perform signaling of a bitstream including the configuration. The decoder may parse the information related to the CCCM-ND mode and the information related to the GL-CCCM mode, and may determine the CCCM-ND mode to be a mode to be used for predicting the chroma block of the current block.

When both the GL-CCCM mode and the CCCM-ND mode are used to predict the chroma block using the luma block of the current block, the encoder may configure the value of the information related to the CCCM-ND mode and the value of the information related to the GL-CCCM mode respectively to 1 (i.e., CCCM-ND mode is used and GL-CCCM mode is used), and may perform signaling of a bitstream including the configuration. The decoder may parse the information related to the CCCM-ND mode and the information related to the GL-CCCM mode, and may configure a mode to be used for predicting the chroma block of the current block to the GL-CCCM mode and the CCCM-ND mode.

The CCCM mode is a method for the video signal processing device to predict a chroma sample of a current block by deriving linear and non-linear models using correlation between a chroma sample and a luma sample of a neighboring block adjacent to the current block, and using a reconstructed luma sample of the current block.

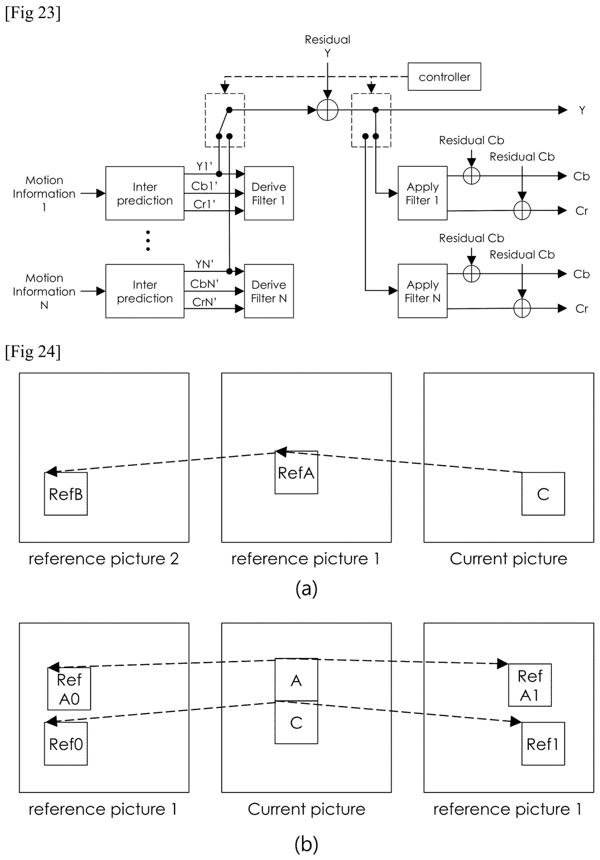

FIGS. 22 and 23 are block diagrams for applying a cross-component residual model (CCRM) according to an embodiment of the disclosure.

Referring to FIG. 22, when an inter encoding mode is applied to a current block, a video signal processing device may derive (derive filter) a CCP model (linear and non-linear models) between a luma prediction block (Y') derived using motion information of the current block and a first chroma prediction block (Cb', Cr') derived using the motion information of the current block, and may generate a reconstructed luma block of the current block using a luma error block of the current block. The video signal processing device may apply (apply filter) the derived CCP model to the reconstructed luma block of the current block so as to generate a second chroma prediction block of the current block. The video signal processing device may finally generate (obtain) a chroma block (Cb, Cr) of the current block by adding a chroma error block to the second chroma prediction block predicted using the CCP model.

Here, the CCP model may include a CCLM, MMLM, GLM, CCCM, MM-CCCM, GL-CCCM, CCCM-ND, and CCCM-MDF, and the CCLM and MMLM may be linear models and the GLM, CCCM, MM-CCCM, GL-CCCM, CCCM-ND, and CCCM-MDF may be non-linear models. That is, the CCP model may be one of the CCLM, MMLM, GLM, CCCM, MM-CCCM, GL-CCCM, CCCM-ND, and CCCM-MDF. In addition, referring to FIG. 22, when the inter encoding mode is applied to the current block, the video signal processing device may derive (derive filter) the CCP model between the luma prediction block (Y') of the current block and the first chroma prediction block (Cb', Cr') of the current block, and may generate the reconstructed luma block of the current block using the luma error block of the current block. The video signal processing device may apply (apply filter) the derived CCP model to the reconstructed luma block of the current block so as to generate the second chroma prediction block of the current block. The video signal processing device may generate a third chroma prediction block using a weighted average of the second chroma prediction block of the current block, predicted using the CCP model, and the first chroma prediction block. In this instance, the video signal processing device may apply a first weight to the first chroma prediction block and may apply a second weight to the second chroma prediction block. The first weight and the second weight may be previously defined integer values, and for example, the first weight may be 3 and the second weight may be 13. The video signal processing device may finally generate a chroma block (Cb, Cr) of the current block by adding a chroma error block to the third chroma prediction block. The encoder may generate a bitstream including information associated with the first weight and the second weight (or information indicating optimal weights for the first weight and the second weight) and may perform signaling the same. When the CCRM mode is applied to the current block, the decoder may parse the information associated with the weight (or information indicating optimal weights for the first weight and the second weight) to use the same for predicting the chroma block of the current block.

In addition, referring to FIG. 23, when the inter encoding mode is applied to the current block, the video signal processing device may derive one or more CCP models using motion information used for generating a prediction block for the current block, and may adaptively/selectively use the same for predicting a chroma block of the current block. The encoder may obtain a bitstream including information associated with a model that is used, and may perform signaling the same. The decoder may parse the information associated with the model used, and may use the same for predicting the chroma block of the current block. When the current block is in the inter encoding mode and bi-directional motion prediction is applied to the current block, the video signal processing device may derive a CCP model using the predicted luma block and chroma block of the current block, which are obtained by weighted averaging based on bi-directional motion information. Alternatively, when the current block is in the inter encoding mode and bi-directional motion prediction is applied to the current block, the video signal processing device may derive a CCP model using the predicted luma block and chroma block of the current block, which are generated based on L0 or L1 motion. When the bi-directional motion prediction is applied to the current block, the encoder may include motion information associated with which motion information between L0 and L1 is used for deriving the CCP model in a bitstream and may perform signaling the same. The decoder may select one of the derived CCP models using L0 or L1 determined by parsing the motion information, and may use the same for generating a chroma prediction block of the current block. The decoder may finally generate a chroma block (Cb, Cr) of the current block by adding a chroma error block to the generated chroma prediction block. In order to reduce the number of bits signaled, the encoder may not signal information associated with which motion information between L0 and L1 is used for deriving the CCP model, and may derive the CCP model by using quantization parameter information used in L0 and L1 reference blocks and a reference block configured with more excellent image quality. The decoder may derive the CCP model by using quantization parameter information used in the L0 and L1 reference blocks and using the reference block configured with more excellent image quality. In addition, the video signal processing device may derive the CCP model by using reference blocks (luma reference block and chroma reference block) obtained by weighted averaging using L0 and L1 motion information.

When the current block is in the inter encoding mode and bi-directional motion prediction is applied to the current block, the video signal processing device may derive a first CCP model using a first luma prediction block and a first chroma prediction block generated based on L0 motion information, may derive a second CCP model using a second luma prediction block and a second chroma prediction block generated based on L1 motion information, and may generate a reconstructed luma block of the current block using a luma error block of the current block. The video signal processing device may apply (apply filter) the first CCP model to the reconstructed luma block of the current block so as to generate a third chroma prediction block of the current block, and may apply the second CCP model to the reconstructed luma block of the current block so as to generate a fourth chroma prediction block of the current block. The video signal processing device may configure first, second, third, and fourth weights for the first, second, third, and fourth chroma prediction blocks, respectively, and may calculate a weighted average of them so as to generate a fifth chroma prediction block. In this instance, the first, second, third, and fourth weights are previously defined values, respectively, and may be integers. The video signal processing device may finally generate a chroma block (Cb, Cr) of the current block by adding a chroma error block to the fifth chroma prediction block.

The CCRM may be a method of predicting (reconstructing) the current block by deriving a CCP model using any one of the CCCM, GL-CCCM, CCCM-ND, and GLM. When the CCRM is applied to a reference block corresponding to the current block, the video signal processing device may not derive a CCP model for the CCRM, and may apply, to the current block, a CCP model of the CCRM used in the reference block. That is, the video signal processing device may generate a chroma prediction block of the current block by applying the CCP model of the CCRM used in the reference block to a reconstructed luma block of the current block.

When AMVP, merge, amvp-merge, intra TMP, IBC, and merge-TM encoding mode are applied to the current block, and an error signal exists in a luma block of the current block, the encoder may generate a bitstream including information associated with whether to apply the CCRM to the current block and may perform signaling the same, and the decoder may parse the corresponding information and may determine whether to apply the CCRM to the current block.

When at least one encoding mode among OBMC, MHP, LIC, DMVR, BDOF, PROF, BCW, Affine, GPM, CIIP, IBC-GPM, IBC-CIIP, and IBC-LIC is applied to the current block, the CCRM method may not be applied to the current block. When at least one encoding mode among the OBMC, MHP, LIC, DMVR, BDOF, PROF, BCW, Affine, GPM, CIIP, IBC-GPM, IBC-CIIP, and IBC-LIC is applied to the current block, the encoder may exclude information related to the CCRM for the current block from a bitstream and may not perform signaling, and the decoder may not parse the information related to the CCRM, and may perform configuration such that the CCRM is not applied to the current block.

The video signal processing device may configure a reconstructed luma block by adding an error signal for a luma block and a luma prediction block of the current block, and may configure a CCP model using correlation between the reconstructed luma block and the luma prediction block. In this instance, the CCP model may be one of the CCLM, MMLM, GLM, CCCM, MM-CCCM, GL-CCCM, CCCM-ND, and CCCM-MDF. The video signal processing device may apply the CCP model derived from the luma block to a chroma prediction block and may generate a first chroma prediction block to which the CCP model is applied. The video signal processing device may generate a final chroma block by adding the first chroma prediction block and an error signal for a chroma block.

The video signal processing device may configure a reconstructed Cb chroma block by adding a Cb chroma prediction block of the current block and an error signal for a Cb chroma block, and may configure a CCP model for the Cb chroma block using correlation between the reconstructed Cb chroma block and the Cb chroma prediction block. In this instance, the CCP model may be one of the CCLM, MMLM, GLM, CCCM, MM-CCCM, GL-CCCM, CCCM-ND, and CCCM-MDF. The video signal processing device may apply the CCP model derived from the Cb chroma block to a Cr chroma prediction block so as to generate a first Cr chroma prediction block to which the CCP model is applied. The video signal processing device may generate a final Cr chroma block by adding the first Cr chroma prediction block and an error signal for a Cr chroma block.

The CCRM method is a method used for the inter encoding mode, and may be effective for an object boundary part where an error signal frequently occurs. The object boundary part has separate visual characteristics based on a boundary, and thus a CCP model that uses two or more CCP models, such as the MMLM, MM-CCCM, and the like, may be used when the video signal processing device derives a CCP model using the CCRM method. When the CCRM is applied to the current block, the encoder may generate a bitstream including information associated with whether two CCP models are used, and may perform signaling. When the CCRM is applied to the current block, the decoder may parse the information associated with whether two CCP models are used and may determine whether to use two CCP models to a current chroma block. In this instance, when two CCP models are used, the decoder may use a CCP model such as the MMLM, MM-CCCM, MM-GLM, and the like, and may generate a current chroma prediction block.

In addition, when the CCRM method is applied to the current block, the encoder may generate a bitstream including information associated with a CCP model that is used, and may perform signaling. The CCP model may be one of the CCLM, MMLM, GLM, CCCM, MM-CCCM, GL-CCCM, CCCM-ND, and CCCM-MDF. When the CCRM method is applied to the current block, the decoder may parse the information associated with a CCP model that is used, and may generate a current chroma prediction block using the determined CCP model.

When the CCRM method is applied to the current block, the encoder may derive a CCP merge list, may generate a bitstream including index information associated with an optimal CCP model in the CCP merge list, and may perform signaling the same. When the CCRM method is applied to the current block, the decoder may parse the index information associated with a CCP model and may generate a current chroma prediction block using the CCP model indicated by the index information in the CCP merge list.

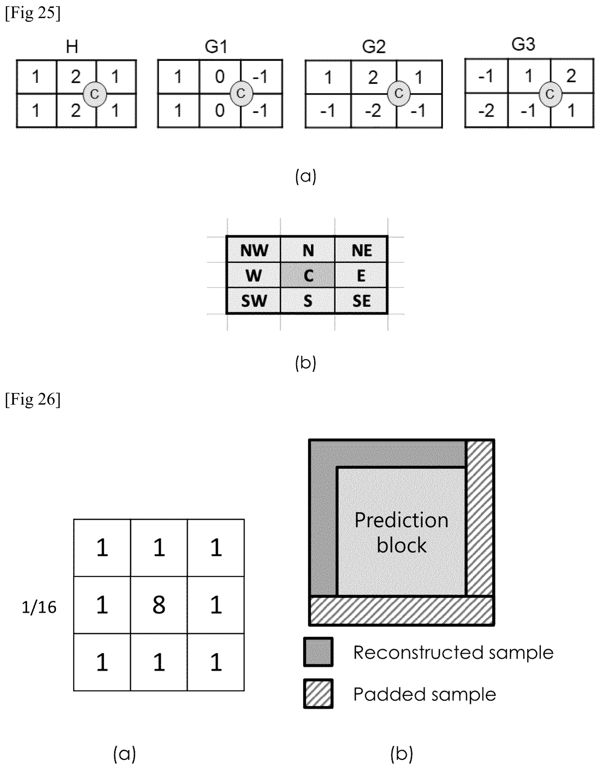

In addition, when the CCRM method is applied to the current block, in the encoder, information associated with whether to apply filtering to a chroma block predicted using the CCRM may be signaled and may be included in a bitstream. Here, the method of filtering the predicted chroma block may be performed according to a filtering method described with reference to FIG. 26. When the CCRM method is applied to the current block, the decoder may parse the information associated with whether to apply filtering to the predicted chroma block and may determine whether to apply filtering to the current chroma prediction block.

The CCRM method may be used for the case that uses correlation between a luma prediction block and a luma reconstruction block, as well as correlation between a luma prediction block and a chroma prediction block of the current block.

FIG. 24 illustrate a method of using correlation between a luma prediction block and a luma reconstruction block according to an embodiment of the disclosure.

When an inter encoding mode is applied to a current block, a video signal processing device may configure a first luma reference block (e.g., RefA of FIG. 24A) indicated by motion information of the current block as a first luma reconstruction block, and may derive a CCP model using the first luma reconstruction block and a second luma reference block (e.g., RefB of FIG. 24A) indicated by motion information of the first luma reconstruction block. The video signal processing device may generate a luma prediction block of the current block by applying the derived CCP model to the first luma reference block. The video signal processing device may calculate a weighted average value of the luma prediction block of the current block and the first luma reference block so as to generate a luma prediction block of the current block.

When an inter encoding mode is applied to the current block and bi-directional motion information is used, the video signal processing device may derive a CCP model using a first luma reference block indicated by L0 motion information of the current block and a second luma reference block indicated by L1 motion information of the current block. The video signal processing device may generate a first luma prediction block and a second luma prediction block of the current block by respectively applying the CCP model to the first luma reference block and the second luma reference block. The video signal processing device may generate a luma prediction block of the current block by weighted averaging of the first luma prediction block and second luma prediction block, and the first luma reference block and second luma reference block. The above-described method of generating a prediction block of a luma block may be applicable to chroma components. That is, the video signal processing device may derive and apply a CCP model for each chroma component.

When the inter encoding mode is applied to the current block and bi-directional motion information is used, the video signal processing device may derive a CCP model using a neighboring block (e.g., A of FIG. 24B) adjacent to the current block and luma prediction blocks (e.g., RefA0, RefA1 of FIG. 24B) for block A. The video signal processing device may generate a first luma prediction block and a second luma prediction block of the current block by applying the CCP model to luma prediction blocks (e.g., Ref0, Ref1 of FIG. 24B) of the current block. The video signal processing device may generate a luma prediction block of the current block, which is weighted based on a weighted average of the first luma prediction block, the second luma prediction block, and the luma prediction blocks of the current block. When the inter encoding mode is applied and bi-directional motion information is used, the video signal processing device may apply the above-mentioned method of generating a prediction block of a luma block with respect to chroma components. A CCP model may be derived and applied for each chroma component.

FIG. 25 illustrates locations of samples and downsampling filters applied to a luma block according to an embodiment of the disclosure.

To match resolution between a luma block and a chroma block in the CCCM method that predicts a chroma block based on a luma block, a video signal processing device may apply various downsampling filters to decrease the resolution of the luma block to the resolution of the chroma block. A CCCM mode that applies a downsampling filter may be referred to as the CCCM with multiple downsampling filters (CCCM-MDF).

FIG. 25A illustrates a plurality of downsampling filters applicable to a luma block. Filtering that uses filter H of FIG. 25A may be filtering performed by considering a value of a current luma sample location more important than a neighboring sample. Filtering that uses filters G1, G2, and G3 in FIG. 25A may be filtering methods designed based on a change between neighboring samples. Filtering that uses filter G1 may be filtering based on a change in the horizontal direction. Filtering that uses filter G2 may be filtering based on a change in the vertical direction. Filtering that uses filter G3 may be filtering based on a change in a diagonal direction. C in FIG. 25B indicates a location of a current chroma sample, and W, E, N, S, NW, NE, SW, and SE indicate locations of neighboring samples of C.

[Equation 16]

$$\text{Model 1: predChroma} = c0 * H(C) +$$
$$c1 * G1(C) + c2 * G2(C) + c3 * G3(C) +$$
$$c4 * P(H(C)) + c5 * P(G1(C)) + c6 * P(G2(C)) +$$
$$c7 * X + c8 * Y + c9 * B$$

$$\text{Model 2: predChroma} = c0 * H(C) + c1 * H(W) + c2 * H(E) +$$
$$c3 * G1(C) + c4 * G1(W) + c5 * G1(E) +$$
$$c6 * P(H(C)) + c7 * P(H()) + c8 * P(H(E)) +$$
$$c9 * X + c10 * B$$

$$\text{Model 3: predChroma} = c0 * H(C) + c1 * H(NE) + c2 * H(SW) +$$
$$c3 * G3(C) + c4 * G3(NE) + c5 * G3(SW) +$$
$$c6 * P(H(C)) + c7 * P(H(NE)) + c8 * P(H(SW)) +$$
$$c9 * Y + c10 * B$$

Equation 16 is an equation that derives a chroma sample using at least one of downsampled luma samples obtained based on filtering that uses H, G1, G2, or G3 filter of FIG. 25.

In Equation 16, P is a non-linear model and may be a value obtained by squaring a sample value of a corresponding location. In Equation 16, B is 1/2 of a maximum value of a current sample and may be a median value of a bit depth. In the case of 10-bit content, the value of B may be 512.

Model 1 of Equation 16 may be an equation that derives a chroma sample using a downsampled luma block obtained using four filters (using H, G1, G2, and G3 filters of FIG. 25). Model 2 of Equation 16 may be an equation that derives a chroma sample using a downsampled luma block obtained using H and G1 filters of FIG. 25. Model 3 of Equation 16 may be an equation that derives a chroma sample using a downsampled luma block obtained using H and G3 filters of FIG. 25.

An encoder may select an optimal model among 3 chroma prediction blocks derived using Equation 16, and may include information associated with a model to be used for predicting a current chroma block in a bitstream, and may perform signaling the same. In this instance, the information associated with a mode to be used may be applied to each of chroma signal Cb and chroma signal Cr based on a block unit. A decoder may predict each chroma block using a model determined by parsing the information associated with a model to be used for each chroma signal (Cb, Cr).

Alternatively, the encoder may select an optimal model among 3 chroma prediction blocks derived using Equation 16, and may perform signaling information associated with a model to be used for predicting current chroma blocks for chroma signals (Cb, Cr) jointly, and may include the same in a bitstream based on a block unit. The decoder may parse the information associated with a model to be used for generating a current chroma prediction block, and may equally apply the model to a current Cb chroma clock and a current Cr chroma block so as to generate chroma prediction blocks.

When 2 CCCM models are used for the current block, the video signal processing device may derive two models based on an average value of a downsampled luma block generated via filtering that uses filter H of FIG. 25A.

FIG. 26 illustrates a location of filtering and a coefficient of filtering applied to a prediction block according to an embodiment of the disclosure.

A decoder may perform filtering using a chroma prediction block generated by applying a CCP model and a reconstructed neighboring chroma sample of a current block, and may generate a filtered chroma prediction block. In this instance, a video signal processing device may perform filtering of the current chroma prediction block using a filtering coefficient of FIG. 26A.

Alternatively, to apply filtering to all sample locations of the current chroma prediction block, the video signal processing device, as illustrated in FIG. 26B, may configure neighboring samples of the current chroma prediction block by using a reconstructed sample adjacent to the current chroma block, and padding an unreconstructed part with a boundary sample of the current chroma prediction block.

An encoder may obtain a bitstream including information associated with whether filtering is performed, and may perform signaling the same. The decoder may parse the information associated with whether filtering is performed, and may determine whether to apply filtering to the current chroma block. Filtering may be applied for each block. That is, filtering may be applied for each of a current luma block, Cb chroma block, and Cr chroma block. In this instance, the same filtering may be applied to the current Cb chroma block and Cr chroma block.

When the current block is in a GLM encoding mode or a mode that additionally transmits an offset in a CCLM, filtering may not be applied to the current block. That is, when the current block is in the GLM encoding mode or in the mode that additionally transmits an offset in the CCLM, the encoder may exclude information associated with whether filtering is performed with respect to the current chroma block from a bitstream. When the current block is in the GLM encoding mode and in the mode that additionally transmits an offset in the CCLM, the decoder may not parse the information whether filtering is performed with respect to the current chroma block, and may determine that filtering is not applied to the current chroma block.

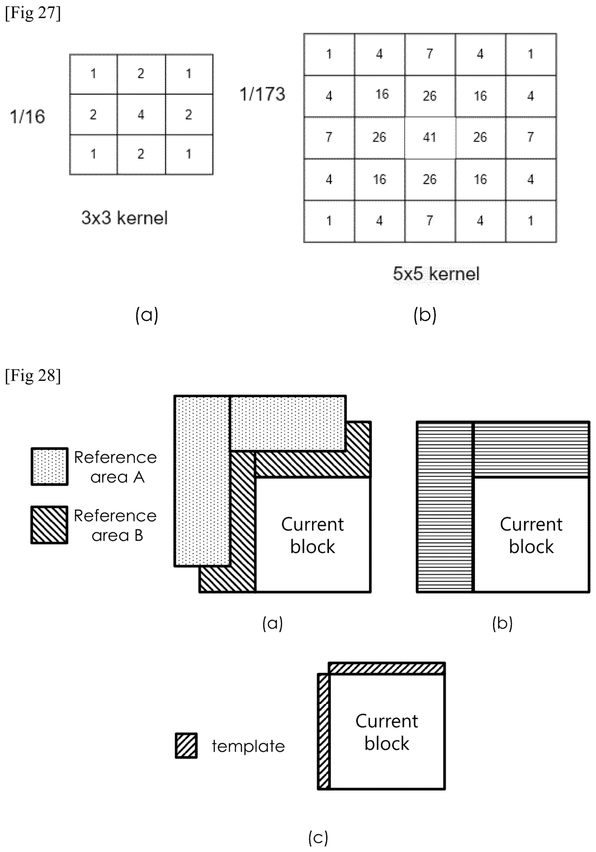

FIG. 27 illustrates filtering applied to a prediction block according to an embodiment of the disclosure.

A video signal processing device may generate a chroma prediction block filtered using filtering of FIG. 27A or FIG. 27B. In addition, the video signal processing device may perform several types of filtering with respect to the current chroma prediction block, and may calculate a weighted average of filtered chroma prediction blocks so as to generate a final filtered chroma prediction block.

An encoder may obtain a bitstream including information associated with filtering that is applied to the current chroma block and may perform signaling the same, and a decoder may parse the corresponding information to determine the filtering, and may apply the determined filtering to the current chroma block so as to generate a filtered chroma prediction block.

FIGS. 28A and 28B are diagrams illustrating a method of determining a CCP mode based on a template cost according to an embodiment of the disclosure.

The efficiency of CCP encoding may be changed depending on a reference area used for deriving a CCCM model. For example, chroma prediction blocks obtained using CCCM models respectively derived using reference area A and reference area B of FIG. 28A may be different from each other. An encoder may generate a bitstream including location information associated with an optimal reference area for deriving a CCCM model to be used for predicting the current chroma block, and may perform signaling the same. A decoder may parse the location information to determine a reference area, and may derive a CCCM model to be used for predicting the current chroma block using the determined reference area. In this instance, the method of deriving the CCCM model may also be used for deriving a model of a CCCM-LT, CCCM-L, or CCCM-T mode. The CCCM-LT mode is a mode for deriving a CCCM model by using both a left-side reference area and a top-side reference area of the current block, the CCCM-L is a mode for deriving a CCCM model by using the left-side reference area of the current block, and the CCCM-T may be a mode for deriving a CCCM model by using the top-side reference area of the current block.

In order to reduce the number of bits signaled, the optimal reference area may be derived based on a template. A video signal processing device may configure a reference template as shown in FIG. 28C by using a reconstructed neighboring sample adjacent to the current chroma block. A size of a top-side reference template of the current block is configured with a width of the current block and a height of M, and a size of a left-side reference template of the current block is configured with a height of the current block and a width of N. In this instance, M and N may be integers greater than or equal to 1, and may be the same as, or different from, each other, and for example, may be 1. In this instance, the size of the reference template may be determined based on any one of the width and height of the current block or the number of samples of the current block. The video signal processing device may generate a prediction sample for a reference template location by using a CCCM model derived using various reference areas. The video signal processing device may calculate costs of a reconstructed sample of the reference template and a prediction sample generated using a CCCM model derived from each reference area, and may determine a reference area having the minimum cost to be a final reference area. Alternatively, the encoder may configure a reference area list using each reference area information, may reorder the reference area list based on the calculated costs, may generate a bitstream including index information associated with a reference area to be used, and may perform signaling the same. The decoder may parse the index information, and may derive a CCCM model to be used for predicting the current chroma block by using the reference area indicated by the index information in the reordered reference area list. The method of determining a reference area based on a template may be used for deriving an optimal template form from among three template forms (CCCM-LT, CCCM-L, CCCM-T templates).

A multi-model CCCM (MM-CCCM) is a method of predicting a chroma block by deriving two CCCM models based on an average value of luma samples calculated from a reference area. In this instance, the average value may be different based on an area that is used, and an MM-CCCM model may be changed based on the average value. The encoder may calculate an average value in order to derive an optimal MM-CCCM model by using at least one from among reference area A of FIG. 28A, referenced area B, a current reconstructed luma block area, a reference area indicated by a block vector (BV) of the current block, and a reference area indicated by a motion vector (MV) of the current block. The encoder may generate a bitstream including information (average value calculation area information) associated with an area that is used for calculating the average value, and may perform signaling the same. When the current chroma block is predicted using the MM-CCCM mode, the decoder may parse the average value calculation area information, and may use the determined area so as to derive an MM-CCCM for predicting the current chroma block.

In order to reduce the number of bits signaled, an optimal average value calculation area may be derived based on a template. The video signal processing device may configure a reference template as shown in FIG. 28C by using a reconstructed neighboring sample adjacent to the current chroma block. The video signal processing device may obtain an average value calculated using the reference area A or reference area B of FIG. 28A, the current reconstructed luma block area of FIG. 28B, the reference area indicated by the BV of the current block, and reference area indicated by the MV of the current block. The video signal processing device may generate a prediction sample for a reference template location by using an MM-CCCM model derived using the obtained average value. The video signal processing device may calculate costs of a reconstructed sample of the reference template and a prediction sample generated using each MM-CCCM model, and may determine an average value calculation area that is used for deriving an MM-CCCM model with the minimum cost to be a final average value calculation area. The encoder may configure an average value calculation area list by using information on areas used for average value calculation, and may reorder the average value calculation area list based on the calculated costs. The encoder may generate a bitstream including an index associated with the used average value calculation area, and may perform signaling. The decoder may parse the index information, and may derive an MM-CCCM model to be used for predicting the current chroma block by using the average value calculation area indicated by the index information in the reordered average value calculation area list. This may also be applied to the CCCM-LT, CCCM-L, and CCCM-T modes.

The video signal processing device may generate a final chroma prediction block by calculating a weighted average of a block predicted using an intra prediction directional mode and a block predicted using a CCP model, and it may be referred to as a chroma fusion mode. In this instance, to a block predicted using an LM mode, a more effective model between a CCLM or a CCCM may be applied. The encoder may generate a bitstream including CCP model information used for predicting the current chroma block, and may perform signaling. When the current chroma block is encoded in the chroma fusion mode, the decoder may generate a chroma prediction block based on a model determined by parsing the model information.

In order to reduce the number of bits signaled, an optimal CCP model may be derived based on a template. The video signal processing device may configure a reference template as shown in FIG. 28C by using a reconstructed neighboring sample adjacent to the current chroma block. The video signal processing device may generate a prediction sample for a reference template location by using a CCP model. The video signal processing device may calculate costs of a reconstructed sample of the reference template and a prediction sample generated using a CCP model, and may determine a CCP model with the minimum cost. The video signal processing device may predict the current chroma block based on the determined CCP model. This may also be applied to the CCCM-LT, CCCM-L, and CCCM-T modes.

Based on the method of determining a CCP mode based on a template, which has been described with reference to FIG. 28, may be a local-boosting CCP (LB-CCP) model.

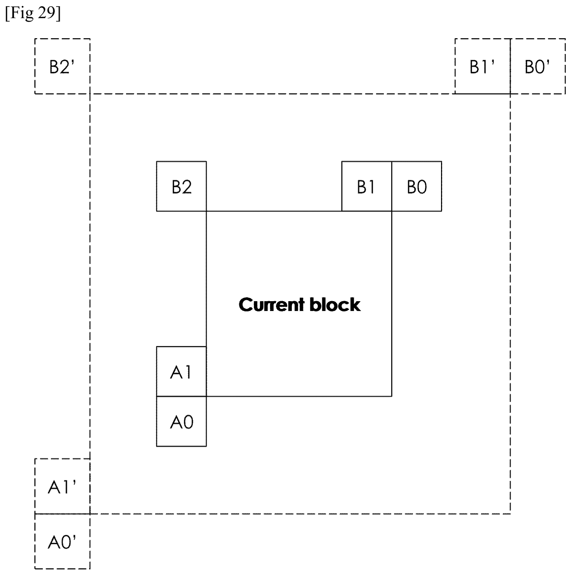

FIG. 29 is a diagram illustrating neighboring blocks used for deriving a CCCM for a current chroma block according to an embodiment of the disclosure.

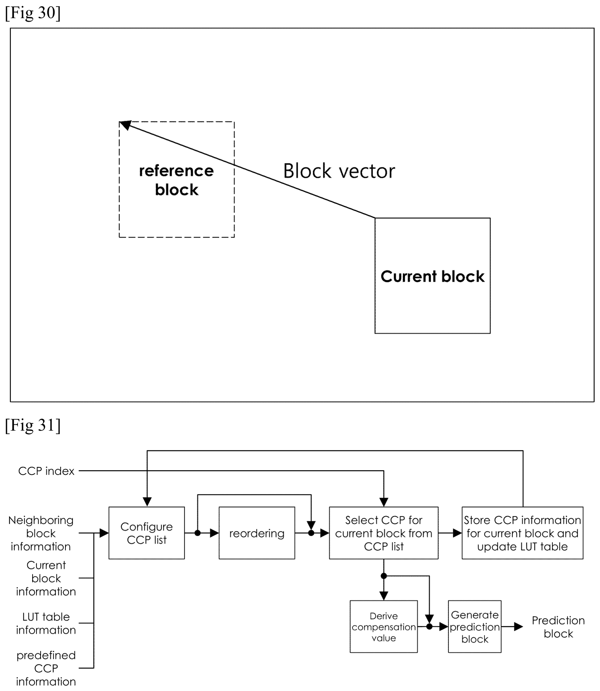

FIG. 30 is a diagram illustrating a reference area indicated by a block vector of a current luma block according to an embodiment of the disclosure.

A CCCM to be used for predicting a current chroma block may be derived from a neighboring block of a current block, which may be referred to as a CCP merge mode. FIG. 29 illustrates neighboring blocks A0, A1, B0, B1, and B2 adjacent to the current block, and neighboring blocks A0', A1', B0', B1', and B2' not adjacent to the current block. A video signal processing device may use a CCCM model used in the neighboring block of FIG. 29 in order to predict the current chroma block. Alternatively, when the current block is encoded in an intra TMP or IBC mode, the video signal processing device may generate a prediction block for the current chroma block by using a CCCM model used in a reference area indicated by a BV of a current luma block and a current reconstructed luma block, as illustrated in FIG. 30.

The types of CCP models may include a CCLM, MMLM, GLM, MM-GLM, CCCM, MM-CCCM, GL-CCCM, MM-GL-CCCM, CCCM-ND, MM-CCCM-ND, CCCM-MDF, MM-CCCM-MDF, chroma fusion, BVG-CCCM, CCP merge, and the like. The MMLM may be configured with two CCLMs. When types of CCP models are different, they may be considered as different CCP models. When types of CCP models are the same but the CCP models have different parameters, they may be considered as different CCP models. When the number of CCP models configured are different (e.g., first CCP model is configured with one CCLM, and second CCP model is configured with two CCLMs), they are considered as different CCP models.

FIG. 31 is a block diagram illustrating a method of predicting a current block using a CCP merge mode according to an embodiment of the disclosure.

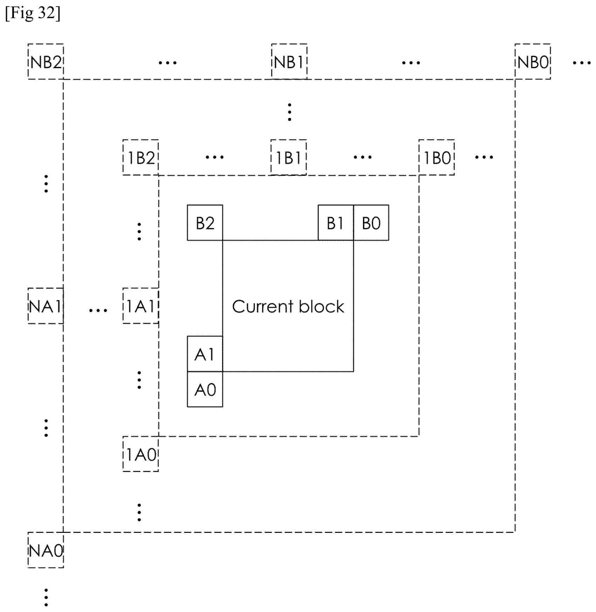

FIG. 32 is a diagram illustrating neighboring blocks of a current block according to an embodiment of the disclosure.

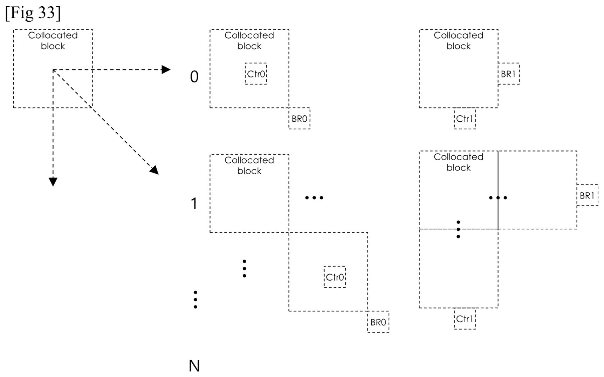

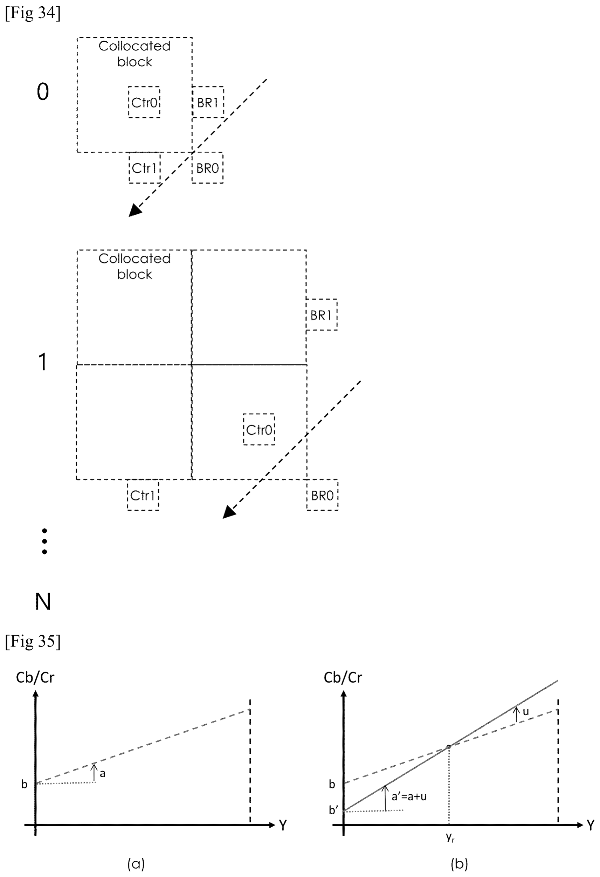

FIGS. 33 and 34 are diagrams illustrating co-located blocks and neighboring blocks according to an embodiment of the disclosure.

First, a video signal processing device may configure a CCP merge list for a current block. In this instance, the CCP merge list may include a predetermined maximum number of candidates. For example, the predetermined maximum number may be 12. A CCP model used in at least one neighboring block among a neighboring block (neighboring blocks A0, A1, B0, B1, and B2 of FIG. 32) spatially adjacent to the current block, a neighboring block (neighboring blocks 1A0, 1A1, 1B0, 1B1, 1B2, ..., NA0, NA1, NB0, NB1, and NB2 of FIG. 32) spatially not adjacent to but distant from the current block, a temporal neighboring block corresponding to the current block in another reference picture with a POC different from that of a current picture, may be included in a CCP model candidate of the CCP merge list. Based on at least one from among a width of the current block, a height of the current block, a ratio of the width to the height of the current block, quantization parameters of the current block and a neighboring block, an encoding mode of the current block, information associated with whether the current block is encoded in the intra TMP or IBC mode, a block vector of the current block, and predetermined locations, a location of the neighboring block that is spatially not adjacent but distant away may be determined. For example, the vertical location of the neighboring blocks 1B0, 1B1, and 1B2 of FIG. 32 may be determined to be a location obtained by subtracting the height of the current block from the top-side boundary of the current block. The horizontal location of the neighboring blocks 1A0, 1A1, and 1B2 of FIG. 32 may be determined to be a location obtained by subtracting the width of the current block from the left-side boundary of the current block. The neighboring block 1A1 may exist in a predefined location between the neighboring blocks 1A0 and 1B2, and the neighboring block 1B1 may exist in a predefined location between the neighboring blocks 1B2 and 1B0. In addition, the vertical location of the neighboring blocks NB0, NB1, and NB2 of FIG. 32 may be determined to be a location obtained by subtracting a predefined distance from the top-side boundary of the current block. The horizontal location of the neighboring blocks NA0, NA1, and NB2 of FIG. 32 may be determined to be a location obtained by subtracting a predefined distance from the left-side boundary of the current block. The neighboring block NA1 may exist in a predefined location between the neighboring blocks NA0 and NB2, and the neighboring block NB1 may exist in a predefined location between the neighboring blocks NB2 and NB0. The predefined distance may be an integer greater than or equal to 1. In addition, CCP models derived from neighboring blocks that are not spatially adjacent and are distant away may be added to the CCP merge list as CCP model candidates. In this instance, the order of addition may be determined based on at least one from among a quantization parameter of the current block and a distance between the current block and the neighboring block. For example, addition may be performed in the order from a neighboring block that is distant away from the current block to a neighboring block close to the current block, or may be performed in the order from a neighboring block close to the current block to a neighboring block distant away from the current block. The neighboring block may be a reference block for deriving a CCP model for the current block.

When the CCP merge list is not filled, the video signal processing device may add, to the CCP merge list, a CCP model used in a temporal neighboring block (a neighboring block corresponding to the current block from another reference picture with a POC different from that of the current picture, a neighboring block of a co-located block of the current block) as a CCP model candidate. In the case of deriving a CCP model candidate of a temporal neighboring block, the video signal processing device may derive CCP model candidates from various locations predetermined according to the width and height sizes of the current block. In addition, the video signal processing device may derive as many CCP model candidates of temporal neighboring blocks as a predetermined number. The predetermined number may be 4. For example, referring to FIG. 33, the video signal processing device may derive CCP model candidates from the locations of BR0, Ctr0, BR1, Ctr1 based on the width size and height size of the current block. When as many CCP model candidates as the predetermined number are not obtained, the video signal processing device may derive CCP model candidates from the locations of BR0, Ctr0, BR1, Ctr1 based on a size that is double the width and height of the current block. The process may be repeated up to a size N times the width size and height size of the current block until as many CCP model candidates as the predetermined number are obtained. In this instance, N may be 5.

In addition, referring to FIG. 34, a location for deriving a temporal neighboring block may be configured based on an anti-diagonal direction. The video signal processing device may derive CCP model candidates from the locations of BR0, Ctr0, BR1, Ctr1 based on the width size and height size of the current block. When as many CCP model candidates as the predetermined number are not obtained, the video signal processing device may derive CCP model candidates from the locations of BR0, BR1, Ctr0, and Ctr1 based on a size that is double the width and height of the current block. The predetermined number may be 4. The process may be repeated up to a size N times the width size and height size of the current block until as many CCP model candidates as the predetermined number are obtained. In this instance, N may be 5.

By using at least one from among encoding mode information of a temporal neighboring block, motion vector information, and block vector information, the video signal processing device may determine usability of a CCP model candidate for the temporal neighboring block or may determine whether to add a CCP model candidate for the temporal neighboring block to the CCP merge list. For example, when the temporal neighboring block is an RRIBC type, the video signal processing device may not use the CCP model candidate as a CCP model candidate and may not add the same to the CCP merge list.

When the CCP merge list is not filled, the video signal processing device may add a CCP model derived from a CCP model table stored in a separate memory to the CCP merge list as a CCP model candidate. In this instance, the video signal processing device may extract CCP model candidates in the order from a CCP model that is first added to the CCP model table to a CCP model added last, and may add the CCP model candidates to the CCP merge list. Alternatively, the video signal processing device may extract CCP model candidates in the order from a CCP model that is added last to the CCP model table to a CCP model added first, and may add the CCP model candidates to the CCP merge list. A CCP model candidate derived from the CCP model table stored in a separate memory may be referred to as a history based CCP (HCCP) candidate. The CCP model table may be configured with a previously used CCP model. In addition, by using at least one from among whether the block is encoded in a dual tree mode, whether the block is encoded in an ISP mode, whether the block is encoded in an intra mode, whether the block is encoded in a DIMD chroma, whether the block is encoded in a DM mode, whether a CCP model already exists in the CCP model table, and whether the block is encoded in a chroma fusion mode, the video signal processing device may determine whether to add the previously used CCP model to the CCP model table. When encoding or decoding of each slice begins or when encoding or decoding of a first CTU of each CTU row begins, the CCP model table may be reset. When the CCP model table is reset, the CCP model table may become empty. A first in first out (FIFO) scheme in which CCP models are out in the order of CCP models added to the CCP model table may be applied. In the case of adding a new CCP model to the CCP model table, the video signal processing device may check whether the new CCP model exists in the CCP model table, and when the new CCP model does not exist in the CCP model table, the device may add the new CCP model to the CCP model table. In addition, in the case of adding a new CCP model to the CCP model table, when the CCP model table is filled, the video signal processing device may delete a CCP model that is added first, and may add the new CCP model to the CCP model table.

When the CCP merge list is not filled, the video signal processing device may generate a combined CCP model candidate or separated CCP model candidates by using CCP models (e.g., CCLM, MMLM, GLM, CCCM, MM-CCCM, GL-CCCM, CCCM-ND, or CCCM-MDF) in the CCP merge list, and may add the candidates to the CCP merge list. In this instance, the combined CCP model candidate may be a CCP model candidate obtained using two CCP model candidates in the CCP merge list. A combined CCP model based on the CCLM may be CCLM + GLM, CCLM + CCCM, CCLM + GL-CCCM, CCLM + CCCM-ND, CCLM + CCCM-MDF, or the like. In addition, a combined CCP model based on the GLM may be GLM + CCCM, GLM + GL-CCCM, GLM + CCCM-ND, GLM + CCCM-MDF, or the like. In addition, a combined CCP model based on the CCCM may be CCCM + GL-CCCM, CCCM + CCCM-ND, CCCM + CCCM-MDF, or the like. In addition, a combined CCP model based on the GL-CCCM may be GL-CCCM + CCCM-ND, GL-CCCM + CCCM-MDF, or the like. In addition, a combined CCP model based on the CCCM-ND may be CCCM-ND + CCCM-MDF, or the like. For example, in order to predict the current chroma block using the CCCM-ND + CCCM-MDF candidate, the video signal processing device may separate the current luma block into two areas based on a predefined threshold value, may predict the current chroma sample using the CCCM-ND mode in one area, may predict the current chroma sample using the CCCM-MDF mode in the other area, and may generate a final chroma block. The predefined threshold may be an average value of neighboring luma samples adjacent to the current luma block or an average value of the current luma block. The separated CCP models candidate may be two CCP model candidates separated from one CCP model in the CCP merge list. Alternatively, the separated CCP model candidates may be two CCP model candidates that are newly generated based on each of the two CCP model candidates separated from one CCP model candidate in the CCP merge list. For example, when one CCP model candidate in the CCP merge list is a CCP model obtained by combining two CCP models such as the MMLM and MM-CCCM, the combined CCP model may be separated into two CCLMs or two CCCMs, and CCP model candidates newly generated based on the two separated CCP models may be separated CCP model candidates and may be added to the CCP merge list.

When the CCP merge list is not filled, the video signal processing device may identify whether the CCLM exists (or whether the MMLM exists) in the CCP merge list, and may add a new CCP model candidate to the CCP merge list based on whether the CCLM exists (whether the MMLM exists). For example, when the CCLM (or MMLM) exists in the CCP merge list, the video signal processing device may generate a new CCLM (or MMLM) again based on the CCLM (or MMLM) in the CCP merge list, and may add the same to the CCP merge list. In this instance, the video signal processing device may generate a new CCLM (or MMLM) again by using only one CCLM (or MMLM) in the CCP merge list, and may add the same to the CCP merge list. Alternatively, the video signal processing device may generate a new CCLM or a new MMLM again by using all CCLMs and MMLMs in the CCP merge list, and may add the same to the CCP merge list. Specifically, the video signal processing device may add, to the CCP merge list, two CCP model candidates obtained by separating an MMLM in the CCP merge list into two CCLMs. In addition, the video signal processing device may configure one MMLM with two CCLMs in the CCP merge list, and may add the MMLM to the CCP merge list. In addition, the video signal processing device may configure one CCLM using a weighted average of parameter values of two CCLMs in the CCP merge list, and may add the CCLM to the CCP merge list. Alternatively, the video signal processing device may separate an MMLM in the CCP merge list into two CCLMs, may use each CCLM to obtain two new CCLMs, and may add the same as CCP model candidates. In addition, the video signal processing device may obtain one MMLM via two new CCLMs obtained using each of two CCLMs in the CCP merge list, and may add the MMLM to the CCP merge list. For example, when a CCP model in the CCP merge list is a CCP model obtained by combining two CCP models such as an MMLM and MM-CCCM, the video signal processing device may separate the combined CCP model into two CCLMs or two CCCMs, may generate a new CCP model based on two separated CCLMs and two separated CCCMs, and may add the same to the CCP merge list.

The video signal processing device may generate a new CCP model based on a CCP model candidate in the CCP merge list. In this instance, a CCP model for generating the new CCP model may be a predetermined CCP model. Therefore, the video signal processing device may identify whether a CCP model candidate in the CCP merge list is the predetermined CCP model. In this instance, the predetermined CCP model may be a CCLM, an MMLM, or the like.

FIG. 35 illustrates CCLMs provided in graphs according to an embodiment of the disclosure.

The CCLM may be a CCP model that derives a chroma sample by multiplying a luma sample by a gradient value (a in FIG. 35A), and adding an offset value (b in FIG. 35A).

The video signal processing device may obtain a new CCP model by adding a predetermined value (u in FIG. 35B) to a gradient value of a CCLM or MMLM in the CCP merge list.

A gradient value (a') and an offset value (b') for the new CCP model may be calculated using Equation 17.

$$[\text{Equation 17}]$$

$$a' = a + u$$

$$b' = b - u * y_r$$

In the disclosure, u in Equation 17 may be expressed as a first value that is previously defined. In addition, u may be an integer value, and may be, for example, -6, -5, ..., 5, or 6. In Equation 17, $y_r$ is an average value, and may be an average value of a current luma block, an average value of a neighboring luma block, or half (e.g., 512 in the case of 10-bit content) the bit depth used for expressing a current luma sample.

The CCP model may include a Cb CCP model and a Cr CCP model. The video signal processing device may generate a new Cb CCP model by adding the predefined first value to a gradient value of the Cb CCP model. In addition, the video signal processing device may generate a new Cr CCP model by adding the predefined first value to a gradient value of the Cr CCP model. In addition, when the value of u is 0, the new CCP model is the same as the existing CCP model, and thus the video signal processing device may exclude the case in which the value of u is 0 when generating a new CCP model based on a CCLM or MMLM in the CCP merge list. That is, the case in which the value of u is 0 may not be added to the CCP merge list. Alternatively, when a' of the new CCP model is 0, the video signal processing device may not add the new CCP model to the CCP merge list.

The video signal processing device may apply, to any one of Cb and Cr chroma components, the new CCP model generated based on a CCLM or MMLM in the CCP merge list. For example, the new CCP model may include a Cb CCP model and a Cr CCP model. The video signal processing device may not modify the Cr CCP model, and may generate a new Cb CCP model by adding the predefined first value to a gradient value of the Cb CCP model. Alternatively, the video signal processing device may not modify the Cb CCP model, and may generate a new Cr CCP model by adding a predefined second value to a gradient value of the Cr CCP model. Here, the predefined first and second values may be the same as, or different from, each other, and the first value and the second value may be, for example, -6, -5, ..., 5, or 6.

When a CCLM or MMLM does not exist in the CCP merge list, the video signal processing device may add, to the CCP merge list, a CCP model candidate using a predefined CCLM or MMLM. A gradient value of the predefined CCLM may be an integer, and may be, for example, -6, -5, ..., 5, or 6. An offset value of the predefined CCLM may be half (e.g., 512 in the case of 10-bit content) the bit depth used for expressing the current luma sample.

When a new CCP model candidate is added to the CCP merge list, the video signal processing device may check whether the new CCP model candidate already exists in the CCP merge list. When the new CCP model candidate already exists in the CCP merge list, the new CCP model candidate may not be added to the CCP merge list. When the new CCP model candidate does not exist in the CCP merge list, the new CCP model candidate may be added to the CCP merge list. In this instance, by using at least one from among a CCP model type, top-left location information of a block used for deriving the CCP model, parameter information of the CCP model, luma offset value information of the CCP model, luma block average value information of the CCP model, information associated with whether the CCP model type of the new CCP model candidate already exists in the CCP merge list, and information associated with whether an MMLM exists in the CCP merge list, the video signal processing device may check whether the new CCP model candidate already exists in the CCP merge list. The video signal processing device may compare a parameter of the new CCP model candidate with a parameter of an CCP model that already exists in the CCP merge list, and may check the equality of the CCP model. For example, when the parameters are the same, the video signal processing device may determine that the CCP models are the same. For example, the method in which the video signal processing device checks whether the new CCP model candidate already exists in the CCP merge list may compare all parameters of the new CCP model and all parameters of all CCP candidates in the CCP merge list, so as to check the equality of CCP model candidate. Alternatively, the method in which the video signal processing device checks whether the new CCP model candidate already exists in the CCP merge list may compare a predetermined number of parameters among all parameters of the new CCP model and a predetermined number of parameters among all parameters of all CCP candidates in the CCP merge list, so as to check the equality of CCP model candidate. In this instance, the predetermined number may be an integer greater than or equal to 1. Alternatively, the method in which the video signal processing device checks whether the new CCP model candidate already exists in the CCP merge list may compare first 3 parameters of all parameters of the new CCP model with first 3 parameters of all parameters of all CCP candidates in the CCP merge list, so as to check the equality of CCP model candidate. Alternatively, the method in which the video signal processing device checks whether the new CCP model candidate already exists in the CCP merge list may check the equality of CCP model candidate based on whether top-left location information of a block used for deriving the new CCP model and top-left location information of a block used for deriving each CCP candidate in the CCP merge list are the same as or similar to each other. When an absolute value of a difference between the top-left location information of the block used for deriving the new CCP model and the top-left location information of the block used for deriving each CCP candidate in the CCP merge list is less than a predefined value, the video signal processing device may determine that they are similar to each other. The predefined value may be an integer greater than or equal to 1.

Top-left location information of a block used for deriving a predefined CCP model and a history based CCP (HCCP) among the CCP model candidates may not exist. That is, a new CCP model candidate configured with the HCCP and the predetermined CCP model may be incapable of using top-left location information of a block, when checking the equality to a CCP model candidate in the CCP merge list. Therefore, the video signal processing device may not check the equality of top-left location information of a block with respect to the HCCP and the predetermined CCP model. Specifically, when a prediction block of a chroma block is generated using the HCCP and the predetermined CCP model, the video signal processing device may store the top-left location information as (0,0) or (-1, 1) when storing a CCP model for the current chroma block. When checking whether the new CCP model candidate exists in the CCP merge list, the video signal processing device may not perform a process of checking based on top-left location information when the top-left-side candidate location value of a block for the new CCP model candidate is (0,0) or (-1, -1).

Alternatively, in an encoder and a decoder, when a prediction block of the chroma block is generated using the HCCP and the predefined CCP model, top-left location information of the current block may be stored as top-left location information of a block, in the case of storing a CCP model for the current chroma block.

In the case of adding a new CCP model to the CCP merge list, the video signal processing device may add, to the CCP merge list, one CCP model for each type of CCP model. That is, CCP model types of the CCP models in the CCP merge list may be different except for the HCCP model or predefined CCP model.

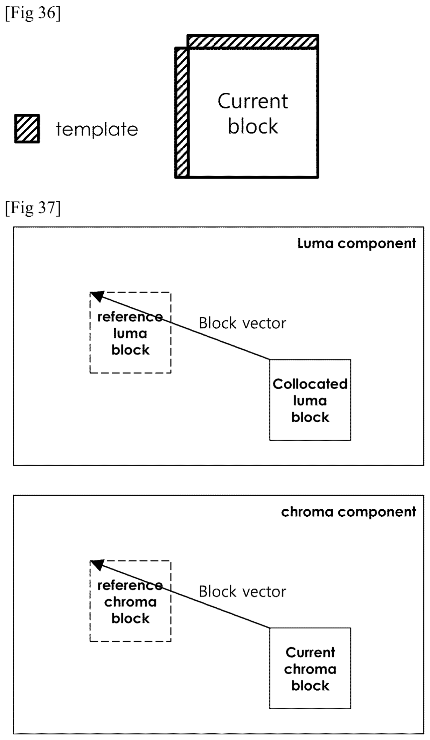

FIG. 36 is a diagram illustrating a reference template location used for reordering a CCP merge list according to an embodiment of the disclosure.

A video signal processing device may configure a CCP merge list, and may reorder the CCP merge list based on a template cost. Whether to perform a reordering process may be determined based on a width size and/or height size of a current block.

In addition, the template for reordering the CCP merge list may be determined based on the width size and/or height size of the current block. For example, when the width size of the current block is greater than the height size, a top-side template adjacent to a top side of the current block may be used for reordering the CCP merge list. When the width size and the height size of the current block are the same, a template of FIG. 36 (the top-side template adjacent to the top side of the current block and a left-side template adjacent to a left-side of the current block) may be used for reordering the CCP merge list.

The video signal processing device may configure a reference template using reconstructed neighboring samples adjacent to the current block, as shown in FIG. 36. The video signal processing device may predict a chroma sample of the reference template by using each CCP model in the CCP merge list and a luma sample of the reference template, so as to generate a chroma prediction sample. The video signal processing device may calculate an SAD (or MR-SAD) between the chroma prediction sample and the chroma sample of the reference template, and generate a cost. The video signal processing device may calculate a cost for each CCP model, and may reorder the CCP merge list in ascending order of costs.

An encoder may select an optimal CCP model for a current chroma block based on the reordered CCP merge list, and may generate a bitstream including index information indicating the optimal CCP model and perform signaling. A decoder may parse the index information and may generate a prediction block for the current chroma block by using a CCP model indicated by the index information in the reordered CCP merge list.

When the optimal CCP model selected from the reordered CCP merge list is used for predicting the current chroma block, the video signal processing device may derive a compensation value for a portion of the CCP models, and may apply the compensation value to a chroma block predicted using the CCP model. The portion of the CCP models may be one of a CCLM, MMLM, GLM, CCCM, MM-CCCM, GL-CCCM, CCCM-ND, and CCCM-MDF. For example, when the optimal CCP model selected in the reordered CCP merge list is a CCCM, the video signal processing device may configure a reference template using reconstructed neighboring samples adjacent to the current block. The video signal processing device may predict a chroma sample of the reference template by applying the CCCM to a luma sample of the reference template, so as to generate a chroma prediction sample. The video signal processing device may calculate an average value of the chroma prediction sample and the chroma sample of the reference template, and may use the average value as a compensation value. The compensation value may be at least one of a compensation value for a Cb chroma block and a compensation value for a Cr chroma block. In addition, when the optimal CCP model corresponds to two models such as an MMLM, an MM-CCCM, or the like, two compensation values for the Cb chroma block and two compensation values for the Cr chroma block may be used. When the optimal CCP model is a CCCM, the video signal processing device may predict the current chroma block by applying the CCCM to a current reconstructed luma block, and may adding a derived compensation value to the chroma prediction block, so as to generate a final chroma prediction block. By using at least one of the width size and height size of the current block, an encoding mode of the current luma block, and a CCP model type, the video signal processing device may determine whether a compensation value is derived. For example, when the width size and the height size of the current block is less than a predetermined number, a compensation value may not be derived. Alternatively, when the width size and the height size of the current block is greater than the predetermined number, a compensation value may not be derived. The predetermined number may be an integer greater than or equal to 1, and may be a value obtained by multiplying the width size and the height size of the current block. For example, the predetermined number may be 16.

A CCP model for the current block that is used for predicting the chroma block from the current block may be stored for encoding and decoding a subsequent block, and may be stored in a CCP model table so as to be used as a HCCP candidate. When a CCP model for predicting the chroma block of the current block via a CCP merge is derived, the video signal processing device may store the CCP model used for predicting the current chroma block. The video signal processing device may use the stored CCP model information for configuring a CCP merge list for a subsequent block.

When configuring a CCP merge list for the current chroma block, the video signal processing device may determine whether to add a predetermined CCP model to the CCP merge list by using at least one from among encoding mode information of the current luma block, motion vector information of the current luma block, block vector information of the current luma block, transform coefficient information of the current luma block, and quantization parameter information of the current luma block. For example, when the encoding mode of the current luma block is a GPM mode, the video signal processing device may not add a CCP candidate (e.g., CCLM, CCCM, or the like) that uses only one CCP model to the CCP merge list, but may add a CCP candidate (e.g., MMLM, MM-CCCM, or the like) that uses two CCP models to the CCP merge list, so as to configure the CCP merge list.

When storing a CCP model parameter for the current block in a memory, the video signal processing device may downscale and store a value of the CCP model parameter, in order to reduce the use of the memory. In the case of using the stored CCP model parameter, the video signal processing device may upscale the value of the CCP model parameter and use the same for predicting the chroma block. The downscaling and upscaling process may be processed as a quantization and dequantization method. Alternatively, the downscaling and upscaling process may be processed via a shift operation using a predefined integer value, and the predefined integer may be an integer greater than or equal to 1. For example, when the predefined integer is 4, the downscaling operation may be "P>> 4" and the upscaling operation may be "P<< 4." P may be one of the CCP model parameters. Shift operation A>>B refers to an operating of dividing A by B two times, and "A<<B" refers to an operation of multiplying A by B two times.

The CCP merge list may be configured jointly for two chroma signals. That is, one CCP model candidate in the CCP merge list may include a CCP model for the Cb chroma block and a CCP model for the Cr chroma block. The encoder may generate a bitstream including information associated with whether to apply the CCP merge method to the current chroma block and index information indicating an optimal CCP model for the current chroma block among the CCP models in the CCP merge list, and may perform signaling. The decoder may parse the information associated with whether to apply the CCP merge method to the current chroma block, may parse the index information when the CCP method is applied to the current chroma block, and may generate a Cb prediction block and a Cr prediction block for the current chroma block using a CCP model indicated by the index information in the CCP merge list.

In addition, the CCP merge list may be applied independently to each chroma signal. That is, a CCP merge list (Cb CCP merge list) for the Cb chroma block and a CCP merge list (Cr CCP merge list) for the Cr chroma block may be respectively and independently generated, and the Cb CCP merge list and the Cr CCP merge list may be different from each other. The encoder may configure a merge list for each chroma signal, and may generate a bitstream including information associated with whether the CCP merge method is applied to the current Cb chroma block, index information indicating an index of an optimal CCP model for the Cb chroma block, information associated with whether the CCP merge method is applied to the current Cr chroma block, and index information indicating an index of an optimal CCP model for the Cr chroma block, and perform signaling. The decoder may parse the information associated with whether the CCP merge method is applied to the current Cb chroma block, and may parse the index information indicating the index of the optimal CCP model for the Cb chroma block when the CCP merge method is applied to the current Cb chroma block, and may generate a Cb chroma prediction block based on a CCP model indicated by the index information. In addition, the decoder may parse the information associated with whether the CCP merge method is applied to the Cr chroma block, and may parse the index information indicating the index of the optimal CCP model for the Cr chroma block when the CCP merge method is applied to the current Cr chroma block, and may generate a Cr chroma prediction block based on a CCP model indicated by the index information.

The information associated with each CCP model in the CCP merge list may include at least one from among a CCP model type, a parameter coefficient for the CCP model, coordinate information of a block used for deriving the CCP model, an average value, a luma offset value, encoding mode information, and a quantization parameter.

The video signal processing device may configure a CCP merge list based on CCP model information used in a neighboring block of the current block. This is because of correlation between CCP models of the neighboring block and the current block. When the correlation between the current block and the neighboring block is low, the efficiency of encoding of the method of deriving a CCP model using a CCP merge list may be low. Therefore, information associated with a CCP model used may be signaled based on a block unit. In this instance, when there are many types of CCP models, the number of bits to be signaled may be increased. In order to overcome the problem, the encoder may configure an explicit CCP list, and may generate a bitstream including index information associated with the type of CCP model used for the current block in the explicit CCP list and perform signaling.

A CCP model in the CCP merge list is a CCP model used in a neighboring block and thus the CCP model may not be suitable for predicting the current chroma block. Therefore, the video signal processing device may derive a CCP model parameter again through the neighboring block adjacent to the current chroma block, so as to predict the current chroma block. That is, the video signal processing device may newly derive a parameter for a CCP model through the neighboring block (or sample) adjacent to the current block by using only a CCP model type of an optimal CCP model derived from the CCP merge list (or explicit CCP list). The video signal processing device may predict the current chroma block via the newly derived parameter of the CCP model. The encoder may generate a bitstream including selection information associated with whether to use the newly derived CCP model or the CCP model derived from the CCP merge list, and may perform signaling. The decoder may predict the current chroma block using a CCP model determined by parsing the selection information.

The video signal processing device may reorder the CCP merge list by using at least one from among CCP model information of a neighboring block adjacent to the current block, an encoding mode of a reconstructed luma block, an encoding mode of a reconstructed luma block, and the width size and heigh size of the current block. For example, when the type of CCP model of the neighboring block adjacent to the current block is a CCCM, the video signal processing device may change the order in the list so that a CCP model of the type of CCCM is ranked first in the CCP merge list. Alternatively, when the encoding mode of the reconstructed current luma block is a partitioned encoding mode such as a GPM, SGPM, or the like, the video signal processing device may change the order in the list so that a CCP model of the type of GLM or GL-CCCM is ranked first in the CCP merge list. Alternatively, when the encoding mode of the reconstructed current luma block is a partitioned encoding mode such as a GPM, SGPM, or the like, the video signal processing device may change the order of the list so that a CCP model of the type of MMLM, MM-CCCM, MM-GLM, MM-GL-CCCM, or MM-CCCM-ND that uses two CCP models is ranked first in the CCP merge list. Alternatively, the video signal processing device may change the order in the list so that a CCP model of a type that generally shows a good encoding efficiency among CCP model types is ranked high in the list.

Since there are many types of CCP models, a large number of bits may be expended for signaling information associated with a CCP model used for the current chroma block. In order to reduce the number of bits, the video signal processing device may configure an explicit CCP list, and may select a CCP model for the current chroma block in the explicit CCP list. Specifically, the encoder may configure an explicit CCP list, and may generate a bitstream including index information for an optimal CCP model and perform signaling. The decoder may parse the index information and may generate a prediction block for the current chroma block by using a CCP model indicated by the index information in the explicit CCP list. The video signal processing device may reorder the explicit CCP merge list by using at least one from among CCP model information of a neighboring block adjacent to the current block, an encoding mode of a reconstructed luma block, an encoding mode of a reconstructed luma block, and the width size and heigh size of the current block. For example, when the type of CCP model of the neighboring block adjacent to the current block is a CCCM, the video signal processing device may change the order in the list so that a CCP model of the type of CCCM is ranked first in the explicit CCP merge list. Alternatively, when the encoding mode of the reconstructed current luma block is a partitioned encoding mode such as a GPM, SGPM, or the like, the video signal processing device may change the order in the list so that a CCP model of the type of GLM or GL-CCCM is ranked first in the explicit CCP merge list.

The explicit CCP list may include a CCLM, MMLM, GLM, MM-GLM, CCCM, MM-CCCM, GL-CCCM, GL-MM-CCCM, CCCM-ND, MM-CCCM-ND, CCCM-MDF, MM-CCCM-MDF, chroma fusion, LB-CCP, BVG-CCCM, and CCP merge.

The encoder and the decoder may determine an optimal CCP model for the current chroma block via the method using a predetermined explicit CCP list.

49

Specifically, the explicit CCP list may be configured in the order of the CCLM, MMLM, GLM, MM-GLM, CCCM, MM-CCCM, GL-CCCM, GL-MM-CCCM, CCCM-ND, MM-CCCM-ND, CCCM-MDF, MM-CCCM-MDF, chroma fusion, LB-CCP, BVG-CCCM, MM-BVG-CCCM, and CCP merge. Alternatively, the explicit CCP list may be configured in the order of the CCP merge, CCLM, MMLM, GLM, MM-GLM, CCCM, MM-CCCM, GL-CCCM, GL-MM-CCCM, CCCM-ND, MM-CCCM-ND, CCCM-MDF, MM-CCCM-MDF, chroma fusion, LB-CCP, BVG-CCCM, and MM-BVG-CCCM. The explicit CCP list may be configured with a portion or all of the above-described explicit CCP models, and the order of models may be configured variously.

Characteristic of an image may be different for each block, and a change between samples may be slow, a complex pattern may exist in the block, or a radical edge component between samples may exist. Therefore, the video signal processing device may select a predetermined explicit CCP list differently based on the characteristic of the block. Specifically, when the radical edge component between samples in the block exists, the video signal processing device may use an explicit CCP list configured with CCP models with gradient characteristics. The explicit CCP list configured with CCP models with gradient characteristics may include a GLM, MM-GLM, GL-CCCM, GL-MM-CCCM, CCCM-MDF, and MM-CCCM-MDF. The characteristic of the block may be CCP model information of a neighboring block, an encoding mode of a reconstructed neighboring luma block, an encoding mode of a reconstructed current luma block, and width size and height size of the current block. The explicit CCP list may be reordered based on a template cost. The encoder may generate a bitstream including explicit CCP list type information associated with a characteristic of an explicit CCP list applied to the current block, and perform signaling. In addition, the encoder may generate a bitstream including index information for an optimal CCP model in the explicit CCP list and perform signaling. The decoder may parse the explicit CCP list type information, and may determine, based on the explicit CCP list type information, an explicit CCP list to be used for predicting the current chroma block among a plurality of explicit CCP lists. In addition, the decoder may parse the index information associated with an optimal CCP model, and may determine an optimal CCP model for predicting the current chroma block in the determined explicit CCP list.

By using at least one from among CCP model information of a neighboring block adjacent to the current block, an encoding mode of a reconstructed luma block, an encoding mode of the neighboring block, the width size and height size of the current block, a quantization parameter of the current block and the neighboring block, an encoding mode of the current block or the neighboring block, and information associated with whether the current block is encoded in an intra TMP mode or IBC mode, the video signal processing device may derive explicit CCP list type information. In this instance, the encoder may not signal the explicit CCP list type information associated with a characteristic of an explicit CCP list applied to the current block, and may use the derived type information. In addition, the encoder may generate a bitstream including index information for an optimal CCP model in an explicit CCP list configured according to the derived type information, and perform signaling. The decoder may parse the index information associated with an optimal CCP model, may configure an explicit CCP list using the derived type information, and may determine, by using the index information, an optimal CCP model for predicting the current chroma block from the explicit CCP list.

The video signal processing device may select a predetermined explicit CCP list to be different depending on whether one CCP model is used or two or more CCP models are used for configuring an explicit CCP list. Specifically, one CCP model is used, the video signal processing device may use an explicit CCP list configured using one CCP model. The explicit CCP list configured using one CCP model may be configured with a CCLM, GLM, CCCM, GL-CCCM, CCCM-ND, CCCM-MDF, BVG-CCCM, and CCP merge. The explicit CCP list configured using two or more CCP models may be configured with an MMLM, MM-GLM, MM-CCCM, GL-MM-CCCM, MM-CCCM-ND, MM-CCCM-MDF, chroma fusion, LB-CCP, MM-BVG-CCCM, and CCP merge. The configured explicit CCP list may be reordered based on a template cost. The encoder may generate a bitstream including explicit CCP list type information associated with the type of explicit CCP list applied to the current block, and perform signaling. In addition, the encoder may generate a bitstream including index information for an optimal CCP model in the explicit CCP list and perform signaling. The decoder may parse the explicit CCP list type information, and may determine, based on the explicit CCP list type information, an explicit CCP list to be used for predicting the current chroma block among a plurality of explicit CCP lists. In addition, the decoder may parse the index information associated with an optimal CCP model, and may determine an optimal CCP model for predicting the current chroma block in the determined explicit CCP list.

The video signal processing device may configure an explicit combined CCP list so that two or more CCP models become a single candidate when configuring the explicit CCP list. In the explicit combined CCP list, a candidate configured with one CCP model may be included. Specifically, the explicit combined CCP list may be configured with {(CCLM, CCCM), (GLM, CCCM), (GL-CCCM, MM-CCCM-ND), (CCCM-ND, MM-CCCM-MDF), (BVG-CCCM, 0), (CCP merge, 0). The configured explicit combined CCP list may be reordered based on a template cost. The encoder may generate a bitstream including index information associated with an optimal CCP model candidate in the explicit combined CCP list, and perform signaling. The decoder may parse the index information associated with an optimal CCP model candidate, and may determine an optimal CCP model candidate for predicting the current chroma block in the explicit combined CCP list. When the optimal CCP model candidate is (CCCM-ND, MM-CCCM-MDF), the video signal processing device may calculate a weighted average of a chroma block predicted using the CCCM-ND and a chroma block predicted using the MM-CCM-MDF, so as to generate a final chroma block. When the optimal CCP model candidate is (BVG-CCCM, 0), the video signal processing device may generate a chroma prediction block using only the BVG-CCCM.

The video signal processing device may determine whether to predict a chroma block by configuring an explicit CCP list using at least one from among CCP model information of a neighboring block adjacent to the current block, an encoding mode of a reconstructed luma block, an encoding mode of the neighboring block, a width size and height size of the current block, a quantization parameter of the current block or the neighboring block, an encoding mode of the current block or the neighboring block, and information associated with whether the current block is encoded in an intra TMP mode or IBC mode.

The type of CCP model allowed may be different depending on the width and height sizes of the current block. For example, when the width and height sizes of the current block is less than a predetermined number, a predefined CCP model among a CCLM, MMLM, GLM, CCCM, MM-CCCM, GL-CCCM, CCCM-ND, CCCM-MDF, and the like may not be allowed. The predefined number may be an integer greater than or equal to 1, and may be a value obtained by multiplying the width size and the height size. For example, the predetermined number may be 8, 16, or 32. For example, when the product of the width size and the height size of the current block is less than or equal to 16, the GL-CCCM and CCCM-MDF that require a large number of neighboring block samples for predicting the current chroma block may not be allowed. When the product of the width size and the height size of the current block is less than or equal to 16, the encoder may exclude information related to the GL-CCCM and CCCM-MDF from a bitstream, and may not perform signaling. When the product of the width size and the height size of the current block is less than or equal to 16, the decoder may not parse the information related to the GL-CCCM and CCCM-MDF, and may perform configuration such that the GL-CCCM and CCCM-MDF are not applied.

When the encoding mode of the reconstructed current luma block is a partitioned encoding mode such as a GPM, SGPM, or the like, the video signal processing device may perform configuration so that only a CCP model of the type of MMLM, MM-GLM, MM-CCCM, GL-MM-CCCM, MM-CCCM-ND, MM-CCCM-MDF, MM chroma fusion that use two CCP models are to be used for predicting the current chroma block. The encoder may generate a bitstream including information associated the number of CCP models (1 or 2), information associated with a template type (L, T, LT) of a CCP model, and information associated with a CCP model type (CCLM, GLM, CCCM, GL-CCCM, CCCM-ND, CCCM-MDF, and chroma fusion), and may perform signaling. The decoder may parse the information associated with the number of CCP models and the information associated with the template type of a CCP model, and then, may parse the CCP model type information. Alternatively, the decoder may parse the CP model type information and then, may parse the information associated with the number of CCP models and the information associated with the template type of a CCP model. When the encoding mode of the reconstructed current luma block is a partitioned encoding mode such as a GPM, SGPM, or the like, the encoder may perform configuration so that one CCP model is not usable, and may exclude information related to one CCP model from a bitstream and may not perform signaling. Specifically, when the encoding mode of the reconstructed current luma block is a partitioned encoding mode such as a GPM, SGPM, or the like, the encoder may exclude the information associated with the number of CCP models from a bitstream, but may only include information associated with the template type of a CCP model and the CCP model type in the bitstream and may perform signaling. When the encoding mode of the reconstructed current luma block is a partitioned encoding mode such as a GPM, SGPM, or the like, the decoder may not parse the information associated with the number of CCP models, may perform configuration such that the number of CCP models is 2, and may parse the information associated with the template type of a CCP model and the CCP model type so as to determine CCP model information for the current chroma block.

A CCCM method may be a method of deriving a model using correlation between a reconstructed luma block and a chroma block adjacent to the current block, and predicting a current chroma block using a current reconstructed luma block and the derived model. In this instance, depending on a quantization parameter, the image quality of a reconstructed area changes, and thus a derived CCCM model may be changed. In order to predict the current chroma block using an optimal CCCM model, the encoder may derive an original CCCM (O-CCCM) model for an original image using an original luma block and an original chroma block of the current block, and may predict the current chroma block by using the reconstructed luma block of the current block and the O-CCCM model. In this instance, the encoder may generate a bitstream including information associated with whether the current block is encoded using the O-CCCM mode and parameter information associated with the O-CCCM model, and may performs signaling. When the encoding mode of the current block is an O-CCM mode, the decoder may parse the parameter information associated with the O-CCCM model to configure the O-CCCM model, and may use the same for predicting the current chroma block. In this instance, the O-CCCM model may be an O-CCCM model whose parameter value range is reduced by applying quantization to at least one of the parameters of the O-CCCM model. This is to reduce the amount of parameter information for the O-CCCM model to be signaled.

Alternatively, the encoder may include a bitstream including only information associated with a difference value between the CCCM model derived from a neighboring block (e.g., FIG. 29) of the current block and the O-CCCM model, and may perform signaling. When the encoding mode of the current block is the O-CCCM mode, the decoder may parse the O-CCCM model parameter information difference value and configure an O-CCCM model using the parameter information difference value and the CCCM model derived from the neighboring block, and may use the same for predicting the current chroma block. This is to reduce the amount of parameter information for the O-CCCM model to be signaled.

FIG. 37 is a diagram illustrating a CCP method based on a block vector according to an embodiment of the disclosure.

When a current luma block is encoded in an intra TMP or IBC mode, a video signal processing device may derive a CCP model based on a correlation relationship between a luma block (e.g., reference luma block of FIG. 37) and a chroma block (e.g., reference chroma block of FIG. 37) of a reference block indicated by a block vector of a luma block. The video signal processing device may generate Cb and Cr prediction blocks that are chroma prediction blocks for a current block by using the derived CCP model and the current reconstructed luma block. This may be referred to as block vector guided cross component prediction (BVG-CCP). Here, the CCP model may include at least one from among a CCLM, MMLM, GLM, MM-GLM, CCCM, MM-CCCM, GL-CCCM, GL-MM-CCCM, CCCM-ND, MM-CCCM-ND, CCCM-MDF, MM-CCCM-MDF, and chroma fusion. For example, when the CCP model is the GL-CCCM model, it may be referred to as BVG GL-CCCM. In addition, various CCP models may be applied to the BVG-CCP. By using at least one from among width and height sizes of the current block, an encoding mode of the corresponding luma block, error signal information of the corresponding luma block, and the block vector of the corresponding luma block, the video signal processing device may determine whether a BVG CCP method is available. For example, when the sum (or product) of the width size and the height size of the current block is less than a predefined size, the BVG CCP method may not be used. In this instance, an encoder may not include information related to the BVG CCP in a bitstream. A decoder may not parse the information related to the BVG CCP, and may perform configuration such that a BVG CCP mode is not be applied. The predefined size may be an integer greater than or equal to 1, and may be 16.

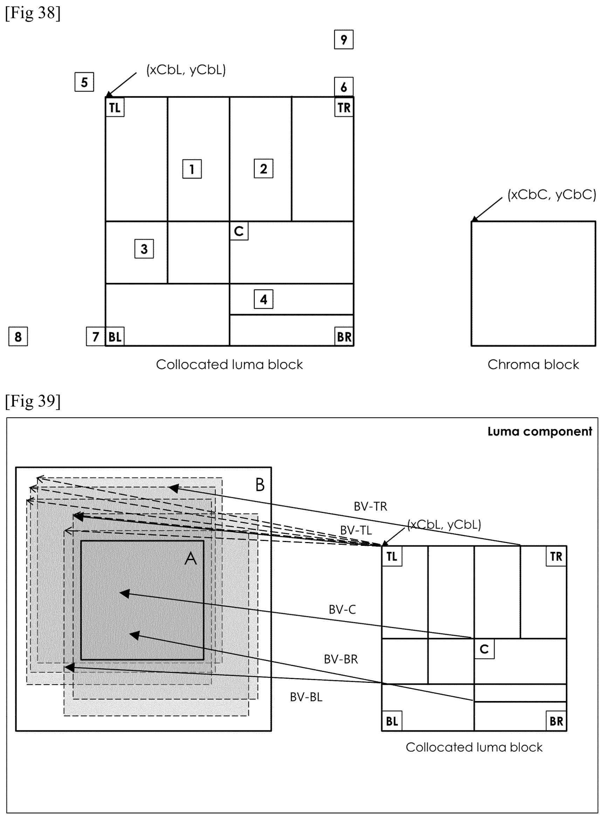

FIG. 38 is a diagram illustrating a luma block corresponding to a chroma block according to an embodiment of the disclosure.

A video signal processing device may perform BVG CCP according to the following order, and may generate a chroma prediction block for a current block. First, by using at least one from among information associated with whether the corresponding luma block is encoded in a dual tree mode, information associated with whether the corresponding luma block is encoded in a single tree mode, information associated with whether the corresponding luma block is encoded in a intra TMP mode, and information associated with whether the corresponding luma block is encoded in an IBC mode, the video signal processing device may check whether the BVG CCP is applicable to a current chroma block. In this instance, a location of the corresponding luma block may be a predetermined location. For example, the predetermined location may be C, TL, TR, BL, or BR of FIG. 38. Alternatively, the predefined location may be a predefined location (1, 2, 3, 4, or the like of FIG. 38) of the corresponding luma block and a predefined location (e.g., 5, 6, 7, 8, 9, or the like of FIG. 38) outside the corresponding luma block. Referring to FIG. 38, the coordinates of a top-left location of the luma block corresponding to the coordinates $(xCbC, yCbC)$ of a top-left location of the chroma block may be $(xCbL, yCbL)$.

Subsequently, when the BVG CCP model is applicable to the current chroma block, the video signal processing device may derive one or more block vectors from the current luma block corresponding to the current chroma block. In this instance, the video signal processing device may derive as many block vectors as a predefined number, and the predefined number may be an integer greater than or equal to 1. For example, the predefined number may be 5. The video signal processing device may configure a block vector list using the block vectors derived from the current luma block. In the case of adding a derived block vector to the block vector list, the video signal processing device may check whether the corresponding block vector already exists in the block vector list, and may add the same to the block vector list when the corresponding block vector does not exist in the list. If an RRIBC mode is applied to the derived block vector, information related to an RRIBC type may be stored together in the block vector list. That is, each candidate in the block vector list may be configured with a block vector and RRIBC type information. In the case of a 4:2:0 format, the chroma block has a 1/4 size of the luma block and thus, a block vector may be stored in the block vector list based on the resolution of the luma block or based on the resolution of the chroma block.

FIG. 39 is a diagram illustrating a method of deriving a reference block using a block vector derived from a corresponding luma block according to an embodiment of the disclosure.

A video signal processing device may obtain one or more reference blocks (luma block and chroma block) by using a block vector derived from a luma block corresponding to a current chroma block. In this instance, the video signal processing device may obtain the reference block by using a block vector, derived from a top-left location (TL of FIG. 39) of the corresponding luma block, as it is. The video signal processing device may generate a corrected block vector (block vector marked by the broken line in FIG. 39) by projecting, to the top-left location (TL of FIG. 39), a block vector derived from a location (e.g., C TR, BL, or BR of FIG. 39) other than the top-left location of the corresponding luma block, and may obtain a reference block using the corrected block vector. When a block vector stored in a block vector list is stored based on the resolution of the luma block, the video signal processing device may use the stored block vector as it is in the case of obtaining a luma reference block, and, in the case of obtaining a chroma reference block, may change the stored block vector to be appropriate for the resolution of the chroma reference block and may obtain the chroma reference block using the changed block vector. In this instance, the video signal processing device may change the block vector to be appropriate for the resolution of the chroma reference block by using an operation (i.e., X >> 2, Y >> 2) that shifts by 2 to the right using the horizontal component (X) and vertical component (Y) of the block vector. When the block vector stored in the block vector list is stored based on the resolution of the chroma block, the video signal processing device may use the stored block vector as it is in the case of obtaining the chroma reference block, and, in the case of obtaining the luma reference block, may change the stored block vector to be appropriate for the resolution of the luma reference block and may obtain the luma reference block using the changed block vector. In this instance, the video signal processing device may change the block vector to be appropriate for the resolution of the luma reference block by using an operation (i.e., X << 2, Y << 2) that shifts by 2 to the left using the horizontal component (X) and vertical component (Y) of the block vector.

Reference blocks (quadrangular shapes marked by the broken line in FIG. 39) derived using a plurality of block vectors may overlap each other. When a CCP model is generated using all reference blocks, the accuracy of the CCP model may be lowered due to the areas overlapping each other. Therefore, the video signal processing device may use only one of the samples in the overlapping area for a CCP model. Alternatively, the video signal processing device may generate a CCP model using only an overlapping area (FIG. 39A) of the reference block areas derived from the plurality of block vectors. Alternatively, the video signal processing device may generate a CCP model using a wide area (FIG. 39 B) that includes all of the reference block areas derived from the plurality of block vectors.

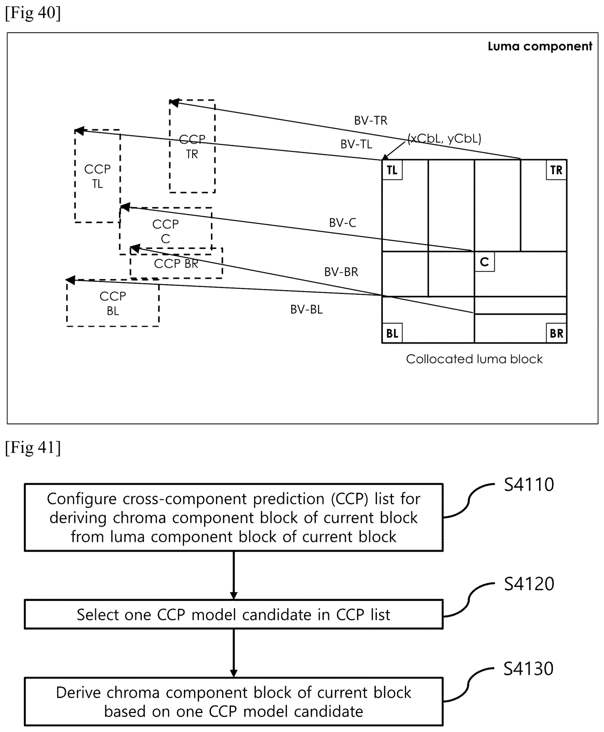

FIG. 40 is a diagram illustrating a method of deriving a CCP model from each of a plurality of block vectors according to an embodiment of the disclosure.

A reference block derived by projecting a block vector used in a predefined reference block to a top-left location may have accuracy not enough to derive a CCP model. Therefore, a video signal processing device may derive a reference block (CCP TL, CCP TR, CCP TC, CCP BL, CCP BR of FIG. 40) of each block vector by using at least one from among a block vector used in a corresponding luma block, a top-left location of the luma block where the corresponding block vector is used, and a width and a height of the luma block where the corresponding block vector is used, and may derive a CCP model for each reference block. The video signal processing device may generate a prediction block for a current chroma block by using the derived CCP model. Alternatively, the video signal processing device may configure a CCP model list using the derived CCP models. In addition, the video signal processing device may reorder the CCP mode list based on a template cost. The video signal processing device may generate a chroma prediction block using a CCP model with the lowest template cost. An encoder may generate a bitstream including index information for an optimal CCP model in the CCP model list and perform signaling. A decoder may generate a prediction block for the current chroma block using a CCP model determined by parsing the index information indicating an optimal CCP model.

The CCP model derived using the reference block may have a different characteristic from a current block, and thus there is a desire for a method of deriving a CCP model to best fit the characteristic of the current block. That is, the video signal processing device may select samples to be used for obtaining a CCP model from a reference block by using a range of current reconstructed luma block sample values. For example, the video signal processing device may search for the minimum value and the maximum value among the reconstructed current luma block sample values, may select samples of the reference block using the minimum value and the maximum value, and may use the same for generating a CCP model. In this instance, when a sample of the reference block is within the range of the minimum value -A to the maximum value +B, the sample may be used for generating a CCP model. In this instance, A and B may be integers greater than or equal to 1. Alternatively, the video signal processing device may select samples to be used for obtaining a CCP model from the reference block by using a range of a pixel value of a chroma block adjacent to the current block. In this instance, the method of selecting samples to be used for obtaining a CCP model from the reference block may be determined to be similar to the selection method based on a luma block sample value.

The method of selecting a reference sample to be used for generating a CCP model may be applied when generating a general CCP model. The general CCP models may include a CCLM, MMLM, GLM, MM-GLM, CCCM, MM-CCCM, GL-CCCM, GL-MM-CCCM, CCCM-ND, MM-CCCM-ND, CCCM-MDF, MM-CCCM-MDF, and chroma fusion. For example, the video signal processing device may search for the minimum value and the maximum value among the reconstructed current luma block sample values, may select a valid sample from neighboring reference samples using the minimum value and the maximum value, and may use the same for generating a CCP model. In this instance, when a neighboring reference sample is within the range of the minimum value -A to the maximum value +B, the sample may be used for generating a CCP model, and A and B may be integers greater than or equal to 1. Alternatively, the video signal processing device may select samples to be used for obtaining a CCP model from a neighboring reference block by using a range of a pixel value of a chroma block adjacent to the current block. In this instance, the method of selecting samples to be used for obtaining a CCP model from a neighboring reference sample may be determined to be similar to the selection method based on a luma block sample value.

The reference sample selection method may also be applied to a CCRM. When the CCRM is applied to the current block, the video signal processing device may search for a range of the minimum/maximum values using the current reconstructed luma samples, and may derive a parameter for a CCP model using only a sample corresponding to the range from the reference block.

In the case of deriving a CCP model from the reference block, the video signal processing device may derive a plurality of CCP models. That is, the video signal processing device may divide a reference luma block into two areas using an average value of the current reconstructed luma block or an average value of the reference luma block, may derive a CCP model for each area, and may finally derive 2 CCP models. The encoder may generate a bitstream including information associated with whether the current block uses one CCP model or 2 CCP models, and may perform signaling, and the decoder may parse the corresponding information and determine the number of CCP models used for predicting the current chroma block, and may derive a CCP model to generate a chroma prediction block. In this instance, when the chroma prediction block is generated using 2 CCP models, filtering (e.g., filtering described with reference to FIG. 26) may be performed with respect to the chroma prediction block. When the current block uses a BVG CCP mode and the chroma prediction block is generated using 2 CCP models, the encoder may signal a bitstream including information associated with whether to apply filtering. The decoder may parse the information associated with whether to apply filtering so as to determine whether to perform filtering with respect to the current chroma prediction block, and when it is determined to perform filtering, the decoder may generate a filtered chroma prediction block by applying filtering to the current chroma prediction block.

When the current chroma prediction block is predicted using the BVG CCP model, the video signal processing device may generate a final chroma prediction block by calculating a weighted average of a first reference chroma block obtained using a block vector derived from the corresponding luma block and a second chroma block predicted using the BVG CCP model. In this instance, a first weight may be applied to the first reference chroma block and a second weight may be applied to the second chroma block. The first weight and the second weight may be predefined values. A ratio of the first weight to the second weight may be 1:3.

When an intra TMP and IBC mode is applied to the current block, the resolution of a block vector may be used based on 1/4, 1/2, an integer unit, or a 4-pixel unit. When the current chroma prediction block is predicted using the BVG CCP model and the block vector resolution of the corresponding luma block is 1/4 or 1/2, the video signal processing device may change the resolution to an integer unit-based block vector, and may obtain a reference block using the changed block vector. Alternatively, when the current chroma prediction block is predicted using the BVG CCP model and the block vector resolution of the corresponding luma block is 1/4 or 1/2, the video signal processing device may obtain an interpolated reference block (luma reference block, chroma reference block) using the resolution of the corresponding block vector, may generate a CCP model using the reference block, and may generate a chroma prediction block using the CCP model.

When the current chroma prediction block is generated using the BVG CCP model, a general CCP model, or a CCP merge-based CCP model, continuity of pixel values between neighboring blocks may be decreased. Therefore, the video signal processing device may generate a final chroma prediction block by calculating a weighted average of a first chroma block predicted using a CCP model and a second chroma block generated via intra prediction. In this instance, a first weight may be applied to the first reference chroma block and a second weight may be applied to the second chroma block. The first weight and the second weight may be previously defined integer values, and for example, a ratio of the first weight to the second weight may be 3:1. In this instance, the video signal processing device may generate an intra prediction block using an intra prediction mode of the corresponding luma block, or using one of predefined intra prediction modes (Planar, DC, VER, HOR, diagonal, or the like), or using at least one of DIMD modes derived from reconstructed samples adjacent to the current block.

When an inter encoding mode is applied to the current block, the video signal processing device may generate a prediction block of the current chroma block by using a CCP model used for a reference block derived using motion information of the corresponding luma block. In this instance, a method used in the BVG CCP may be used for deriving a motion vector using the corresponding luma block and configuring a motion vector list. In addition, the method of selecting a reference sample to be used for generating a CCP model, the method of applying filtering (e.g., filtering of FIG. 26) to a chroma prediction block, the method of calculating a weighted average of a reference chroma block and a chroma prediction block derived from a CCP model, the method of calculating a weighted average of an intra predicted chroma block and a chroma prediction block derived from a CCP model, or the like used in the BVG CCP may be used.

FIG. 41 is a diagram illustrating a method of configuring a CCP list according to an embodiment of the disclosure.

Referring to FIG. 41, a method of configuring a CCP list by a video signal processing device described with reference to FIGS. 1 to 40 will be described.

The video signal processing device may configure a cross-component prediction (CCP) list for deriving a chroma component block of a current block from a luma component block of the current block in operation S4110.

The video signal processing device may select one CCP model candidate in the CCP list in operation S4120.

The video signal processing device may derive the chroma component block of the current block based on the one CCP model candidate in operation S4130.

The CCP list may include one or more CCP model candidates, and the one or more CCP model candidates may include a first CCP model candidate used by a reference block of the current block.

The one or more CCP model candidates may be obtained using at least one from among the type of CCP model derived from the first CCP model candidate, a parameter coefficient of the first CCP model, coordinate information of a neighboring block, an average value of samples included in the neighboring block, a luma offset value of the neighboring block, encoding mode information of the neighboring block, and a quantization parameter of the neighboring block.

The one or more CCP model candidates may be predefined CCP models.

The one or more CCP model candidates may be determined based on a predefined CCP model type, and the parameters for the one or more CCP model candidates may be derived using neighboring samples adjacent to the current block.

The reference block may be a block temporally distant from the current block.

A picture order count (POC) of a picture including the current block and a POC of a picture including the reference block may be different from each other.

The one or more CCP model candidates may include a CCP model generated by combining two or more CCP models.

The one or more CCP model candidates may be determined based on a product of the weight size of the current block and the width size of the current block.

When the product of the weight size of the current block and the width size of the current block is less than or equal to a first threshold value, the one or more CCP model candidates may not be a gradient and location based convolutional cross-component model (GL-CCCM) or a CCCM with multiple downsampling filters (CCCM-MDF).

The video signal processing device may reorder the CCP merge list based on a cost. The above methods(video signal processing methods) described in the present specification may be performed by a processor in a decoder or an encoder. Furthermore, the encoder may generate a bitstream that is decoded by a video signal processing method. Furthermore, the bitstream generated by the encoder may be stored in a computer-readable non-transitory storage medium (recording medium).

The present specification has been described primarily from the perspective of a decoder, but may function equally in an encoder. The term "parsing" in the present specification has been described in terms of the process of obtaining information from a bitstream, but in terms of the encoder, may be interpreted as configuring the information in a bitstream. Thus, the term "parsing" is not limited to operations of the decoder, but may also be interpreted as the act of configuring a bitstream in the encoder. Furthermore, the bitstream may be configured to be stored in a computer-readable recording medium.

The above-described embodiments of the present invention may be implemented through various means. For example, embodiments of the present invention may be implemented by hardware, firmware, software, or a combination thereof.

For implementation by hardware, the method according to embodiments of the present invention may be implemented by one or more of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, and the like.

In the case of implementation by firmware or software, the method according to embodiments of the present invention may be implemented in the form of a module, procedure, or function that performs the functions or operations described above. The software code may be stored in memory and driven by a processor. The memory may be located inside or outside the processor, and may exchange data with the processor by various means already known.

Some embodiments may also be implemented in the form of a recording medium including computer-executable instructions such as a program module that is executed by a computer. Computer-readable media may be any available media that may be accessed by a computer, and may include all volatile, nonvolatile, removable, and non-removable media. In addition, the computer-readable media may include both computer storage media and communication media. The computer storage media include all volatile, nonvolatile, removable, and non-removable media implemented in any method or technology for storing information such as computer-readable instructions, data structures, program modules, or other data. Typically, the communication media include computer-readable instructions, other data of modulated data signals such as data structures or program modules, or other transmission mechanisms, and include any information transfer media.

The above-mentioned description of the present invention is for illustrative purposes only, and it will be understood that those of ordinary skill in the art to which the present invention belongs may make changes to the present invention without altering the technical ideas or essential characteristics of the present invention and the invention may be easily modified in other specific forms. Therefore, the embodiments described above are illustrative and are not restricted in all aspects. For example, each component described as a single entity may be distributed and implemented, and likewise, components described as being distributed may also be implemented in an associated fashion.

The scope of the present invention is defined by the appended claims rather than the above detailed description, and all changes or modifications derived from the meaning and range of the appended claims and equivalents thereof are to be interpreted as being included within the scope of present invention.

Claims

1.  A video signal decoding device comprising a processor,

    wherein the processor configures a cross-component prediction (CCP) list for deriving a chroma component block of a current block from a luma component block of the current block,
    selects one CCP model candidate in the CCP list, and
    derives, based on the one CCP model candidate, a chroma component block of the current block.

2.  The video signal decoding device of claim 1, wherein the CCP list comprises one or more CCP model candidates, and wherein the one or more CCP model candidates comprise a first CCP model candidate used by a reference block of the current block.

3.  The video signal decoding device of claim 2, wherein the one or more CCP model candidates are obtained using at least one of a type of CCP model derived from the first CCP model candidate, a parameter coefficient for the first CCP model, coordinate information of a neighboring block, an average value of samples configured in the neighboring block, a luma offset value of the neighboring block, encoding mode information of the neighboring block, and a quantization parameter of the neighboring block.

4.  The video signal decoding device of claim 2, wherein the one or more CCP model candidates are predefined CCP models.

5.  The video signal decoding device of claim 4, wherein the one or more CCP model candidates are determined based on a predefined CCP model type, and
    wherein parameters for the one or more CCP model candidates are derived via neighboring samples adjacent to the current block.

6.  The video signal decoding device of claim 2, wherein the reference block is temporally spaced apart from the current block.

7.  The video signal decoding device of claim 2, wherein a picture order count (POC) of a picture including the current block and a POC of a picture including the reference block are different from each other.

8.  The video signal decoding device of claim 2, wherein the one or more CCP model candidates comprise a CCP model generated by combining two or more CCP models.

9.  The video signal decoding device of claim 1, wherein the CCP list comprises one or more CCP model candidates, and wherein the one or more CCP model candidates are determined based on a product of a width size of the current block and the width size of the current block.

10. The video signal decoding device of claim 9, wherein, if the product of the width size of the current block and the width size of the current block is less than or equal to a first threshold value, the one or more CCP model candidates are different from a gradient and location based convolutional cross-component model (GL-CCCM) or a CCCM with multiple downsampling filters (CCCM-MDF).

11. The video signal decoding device of claim 1, wherein the processor reorders the CCP merge list, based on a cost.

12. A video signal encoding device comprising a processor,

    wherein the processor obtains a bitstream decoded according to a decoding method, and
    wherein the decoding method comprises:

    configuring a cross-component prediction (CCP) list to derive a chroma component block of a current block from a luma component block of the current block;
    selecting one CCP model candidate from the CCP list; and
    deriving, based on the one CCP model candidate, a chroma component block of the current block.

13. The video signal encoding device of claim 12, wherein the CCP list comprises one or more CCP model candidates, and

wherein the one or more CCP model candidates comprise a first CCP model candidate used by a reference block of the current block.

14. The video signal encoding device of claim 13, wherein the one or more CCP model candidates are obtained using at least one from among a type of CCP model derived from the first CCP model candidate, a parameter coefficient for the first CCP model, coordinate information of a neighboring block, an average value of samples configured in the neighboring block, a luma offset value of the neighboring block, encoding mode information of the neighboring block, and a quantization parameter of the neighboring block.

15. The video signal encoding device of claim 13, wherein the one or more CCP model candidates are predefined CCP models.

16. The video signal encoding device of claim 15, wherein the one or more CCP model candidates are determined based on a predefined CCP model type, and
wherein parameters for the one or more CCP model candidates are derived via neighboring samples adjacent to the current block.

17. The video signal encoding device of claim 13, wherein the reference block is temporally spaced apart from the current block.

18. The video signal encoding device of claim 13, wherein a picture order count (POC) of a picture including the current block and a POC of a picture including the reference block are different from each other.

19. The video signal encoding device of claim 13, wherein the one or more CCP model candidates comprise a CCP model generated by combining two or more CCP models.

20. A computer-readable non-transitory storage medium storing a bitstream, wherein the bitstream is decoded according to a decoding method, and
wherein the decoding method comprises:

configuring a cross-component prediction (CCP) list for deriving a chroma component block of a current block from a luma component block of the current block;
selecting one CCP model candidate in the CCP list; and
deriving, based on the one CCP model candidate, a chroma component block of the current block.

[Fig 1]

<u>100</u>

[Fig 2]

<u>200</u>

[Fig 3]

[Fig 4]

split_cu_flag

(CTU/QT node/MTT node)

0

(CTU/QT leaf node/
MTT leaf node)

split_qt_flag

1

(CTU/QT node/MTT node)

mtt_split_cu_vertical_flag

0

(QT leaf node/
MTT node)

1

(QT node)

mtt_split_cu_binary_flag

0

0

(MTT node with SPLIT_TT_HOR)

1

(MTT node with SPLIT_BT_HOR)

1

mtt_split_cu_binary_flag

0

(MTT node with SPLIT_TT_VER)

1

(MTT node with SPLIT_BT_VER)

[Fig 5]

REFERENCE SAMPLE

SAMPLE OF CURRENT UNIT

[Fig 6]

[Fig 7]

Collocated block
Ctr
BR
Collocated picture

B1 B0
B2
Current block
Ctr
BR
A1
A0
Current picture

Reference block
Reference picture

[Fig 8]

Neighboring block → Configure template → Derive linear model parameter → Perform luma block down-sampling → Predict chroma component → Chroma prediction block

Reference picture memory

Current picture memory

[Fig 9]

[Fig 10]

[Fig 11]

(a)

(b)

[Fig 12]

| Initialization variable | ctxIdx of mmlm_flag | | | | | | | | |
|---|---|---|---|---|---|---|---|---|---|
| | 0 | 1 | 2 | 3 | 4 | 5 | 6 | 7 | 8 |
| initValue | 20 | 43 | 12 | 35 | 51 | 27 | 38 | 26 | 60 |
| shiftIdx | 4 | 5 | 0 | 4 | 5 | 0 | 4 | 5 | 0 |

(a)

| Syntax element | initType | | |
|---|---|---|---|
| | 0 (I Slice) | 1 (P Slice) | 2 (B Slice) |
| mmlm_flag | 0..2 | 3..5 | 6..8 |

(b)

[Fig 13]

| Initialization variable | ctxIdx of template_idx | | | | | | | | |
|---|---|---|---|---|---|---|---|---|---|
| | 0 | 1 | 2 | 3 | 4 | 5 | 6 | 7 | 8 |
| initValue | 17 | 42 | 36 | 0 | 57 | 44 | 0 | 43 | 45 |
| shiftIdx | 1 | 5 | 8 | 1 | 5 | 8 | 1 | 5 | 8 |

(a)

| Syntax element | initType | | |
|---|---|---|---|
| | 0 (I Slice) | 1 (P Slice) | 2 (B Slice) |
| template_idx | 0..2 | 3..5 | 6..8 |

(b)

[Fig 14]

Reference picture

Current picture

[Fig 15]

[Fig 16]

(a)

(b)

[Fig 17]

PU samples
Reference area samples
side samples

1720

1710

(a)

(b)

$$\text{predChromaVal} = c_0C + c_1N + c_2S + c_3E + c_4W + c_5P + c_6B$$

(c)

[Fig 18]

PU samples

Reference area samples

side samples

[Fig 19]

(a)

(b)

[Fig 20]

[Fig 21]

I3  I1  I0  L2  L4

I12  L1  L0  L2  I13

C

I10  L4  L3  L5  I11

I14  L7  L6  L8  I15

I8  I6  I5  I7  I9

[Fig 22]

Residual
Y

Motion Information → Inter prediction → Y', Cb', Cr' → Derive filter

Apply filter

Residual Cb

Residual Cb

Y

Cb

Cr

[Fig 23]

[Fig 24]

reference picture 2          reference picture 1          Current picture

(a)

reference picture 1          Current picture          reference picture 1

(b)

[Fig 25]

| H | G1 | G2 | G3 |
|---|----|----|----|

H: 1 2 1 / 1 2 1 (C)

G1: 1 0 -1 / 1 0 -1 (C)

G2: 1 2 1 / -1 -2 -1 (C)

G3: -1 1 2 / -2 -1 1 (C)

(a)

| NW | N | NE |
|----|---|----|
| W | C | E |
| SW | S | SE |

(b)

[Fig 26]

1/16

| 1 | 1 | 1 |
|---|---|---|
| 1 | 8 | 1 |
| 1 | 1 | 1 |

Prediction block

☐ Reconstructed sample

▨ Padded sample

(a)          (b)

[Fig 27]

1/16

| 1 | 2 | 1 |
| 2 | 4 | 2 |
| 1 | 2 | 1 |

3x3 kernel

1/173

| 1 | 4 | 7 | 4 | 1 |
| 4 | 16 | 26 | 16 | 4 |
| 7 | 26 | 41 | 26 | 7 |
| 4 | 16 | 26 | 16 | 4 |
| 1 | 4 | 7 | 4 | 1 |

5x5 kernel

(a)

(b)

[Fig 28]

Reference area A

Reference area B

Current block

(a)

Current block

(b)

template

Current block

(c)

[Fig 29]

[Fig 30]

[Fig 31]

[Fig 32]

[Fig 33]

Collocated block

0

Collocated block

Ctr0

BR0

Collocated block

BR1

Ctr1

1

Collocated block

• • •

Collocated block

Ctr0

BR0

• • •

BR1

Ctr1

N

[Fig 34]

[Fig 35]

(a)                          (b)

[Fig 36]

[Fig 37]

[Fig 38]

Collocated luma block

Chroma block

[Fig 39]

[Fig 40]

[Fig 41]

Configure cross-component prediction (CCP) list for deriving chroma component block of current block from luma component block of current block — S4110

Select one CCP model candidate in CCP list — S4120

Derive chroma component block of current block based on one CCP model candidate — S4130

# EP 4 708 861 A1

## INTERNATIONAL SEARCH REPORT

| | International application No. |
|---|---|
| | **PCT/KR2024/005806** |

**A. CLASSIFICATION OF SUBJECT MATTER**

**H04N 19/593**(2014.01)i; **H04N 19/186**(2014.01)i; **H04N 19/132**(2014.01)i; **H04N 19/176**(2014.01)i; **H04N 19/105**(2014.01)i; **H04N 19/157**(2014.01)i; **H04N 19/70**(2014.01)i; **H04N 19/117**(2014.01)i; **H04N 19/124**(2014.01)i; **H04N 19/159**(2014.01)i

According to International Patent Classification (IPC) or to both national classification and IPC

**B. FIELDS SEARCHED**

Minimum documentation searched (classification system followed by classification symbols)

H04N 19/593(2014.01); H04N 19/103(2014.01); H04N 19/105(2014.01); H04N 19/119(2014.01); H04N 19/132(2014.01); H04N 19/156(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 교차(cross), 요소(component), 모델(model), 후보(candidate), 목록(list)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2019-0067732 A (ELECTRONICS AND TELECOMMUNICATIONS RESEARCH INSTITUTE et al.) 17 June 2019 (2019-06-17)<br>See paragraphs [0007], [0169], [0453], [0616], [0702]-[0704], [0746] and [0788]; claim 20; and figure 4. | 1-20 |
| Y | TSENG, Hsin-Yi et al. EE2-related: Cross-component merge mode with temporal candidates. JVET-AD0048-v2, Joint Video Experts Team (JVET) of ITU-T SG 16 WP 3 and ISO/IEC JTC 1/SC 29, 30th Meeting. Antalya, TR. pp. 1-4, 22 April 2023.<br>See pages 1-3; and figures 1-3. | 1-20 |
| Y | OHM, Jens-Rainer. Meeting Report of the 29th Meeting of the Joint Video Experts Team (JVET), by teleconference, 11-20 January 2023. JVET-AC1000-v1, Joint Video Experts Team (JVET) of ITU-T SG 16 WP 3 and ISO/IEC JTC 1/SC 29, 29th Meeting, by teleconference. pp. 1-291, 17 February 2023.<br>See pages 161 and 181. | 10 |
| A | US 2022-0329816 A1 (BEIJING BYTEDANCE NETWORK TECHNOLOGY CO., LTD. et al.) 13 October 2022 (2022-10-13)<br>See claims 1-16. | 1-20 |

✓ Further documents are listed in the continuation of Box C.    ✓ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **09 August 2024** | **22 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2024/005806**

### C.    DOCUMENTS CONSIDERED TO BE RELEVANT

| Category* | Citation of document, with indication, where appropriate, of the relevant passages | Relevant to claim No. |
|---|---|---|
| A | KR 10-2022-0140654 A (CANON KABUSHIKI KAISHA) 18 October 2022 (2022-10-18)<br>See claims 1-8. | 1-20 |

Form PCT/ISA/210 (second sheet) (July 2022)

## INTERNATIONAL SEARCH REPORT
### Information on patent family members

International application No.

**PCT/KR2024/005806**

| Patent document cited in search report | | | Publication date (day/month/year) | Patent family member(s) | | | Publication date (day/month/year) |
|---|---|---|---|---|---|---|---|
| KR | 10-2019-0067732 | A | 17 June 2019 | CN | 111699682 | A | 22 September 2020 |
| | | | | KR | 10-2024-0066144 | A | 14 May 2024 |
| US | 2022-0329816 | A1 | 13 October 2022 | CN | 115211113 | A | 18 October 2022 |
| | | | | US | 11968368 | B2 | 23 April 2024 |
| | | | | WO | 2021-136508 | A1 | 08 July 2021 |
| KR | 10-2022-0140654 | A | 18 October 2022 | CN | 111758257 | A | 09 October 2020 |
| | | | | EP | 3756351 | A1 | 30 December 2020 |
| | | | | JP | 2021-517753 | A | 26 July 2021 |
| | | | | JP | 7344883 | B2 | 14 September 2023 |
| | | | | KR | 10-2022-0085851 | A | 22 June 2022 |
| | | | | KR | 10-2578387 | B1 | 15 September 2023 |
| | | | | US | 12010319 | B2 | 11 June 2024 |
| | | | | US | 2023-0370602 | A1 | 16 November 2023 |
| | | | | WO | 2019-162414 | A1 | 29 August 2019 |

Form PCT/ISA/210 (patent family annex) (July 2022)